(19)

**Europäisches Patentamt**
**European Patent Office**
**Office européen des brevets**

(11) **EP 4 546 113 A1**

(12) **EUROPEAN PATENT APPLICATION**

(43) Date of publication:
**30.04.2025  Bulletin 2025/18**

(21) Application number: **24197016.9**

(22) Date of filing: **28.08.2024**

(51) International Patent Classification (IPC):
**G06F 7/544** *(2006.01)*     **G06F 7/483** *(2006.01)*

(52) Cooperative Patent Classification (CPC):
**G06F 7/5443; G06F 7/483;** G06F 2207/4824

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.10.2023  KR 20230143978**
**08.02.2024  KR 20240019936**

(71) Applicants:
• **Samsung Electronics Co., Ltd.**
**Gyeonggi-do, 16677 (KR)**
• **Naver Corporation**
**Seongnam-si, Gyeonggi-do 13561 (KR)**

(72) Inventors:
• **JEON, Younho**
**Suwon-si (KR)**
• **JANG, Jae Hun**
**Suwon-si (KR)**

• **KIM, Suchang**
**Suwon-si (KR)**
• **PARK, Yeo-Reum**
**Suwon-si (KR)**
• **SON, Hong Rak**
**Suwon-si (KR)**
• **LIM, Jihoon**
**Suwon-si (KR)**
• **KWON, Se Jung**
**13529 Seongnam-si (KR)**
• **KIM, Byeoung Wook**
**13529 Seongnam-si (KR)**
• **PARK, Baeseong**
**13529 Seongnam-si (KR)**
• **LEE, Dongsoo**
**13529 Seongnam-si (KR)**

(74) Representative: **Marks & Clerk LLP**
**15 Fetter Lane**
**London EC4A 1BW (GB)**

(54) **MATRIX MULTIPLIER AND OPERATION METHOD OF MATRIX MULTIPLY DEVICE INCLUDING THE SAME**

(57)     A matrix multiplier includes an input vector scaler generating a first quantization scaled input vector based on a first input vector, a plurality of common scale coefficients, and first-to-Rth multiplication scale coefficients, a first data type converter generating a first fixed point quantization scaled input vector based on the first quantization scaled input vector, an element array comprising a first processing element generating a first fixed point output element based on the first fixed point quantization scaled input vector and first plurality of quantization sign bits, and a second processing element generating a second fixed point output element based on the first fixed point quantization scaled input vector and second plurality of quantization sign bits, and a second data type converter generating and outputting first and second output elements by converting data types of the first and second fixed point output elements.

FIG. 7

EP 4 546 113 A1

**Description**

BACKGROUND

Various example embodiments relate to a semiconductor device. More particularly, the present disclosure relates to a matrix multiplier performing matrix multiplication, and a matrix multiply device including the same.

As artificial intelligence technology has recently developed, a calculation amount of an artificial intelligence model is rapidly increasing. Accordingly, various technologies are being researched to shorten a running time of artificial intelligence models.

Generally, most of or a significant amount of the operation time of the artificial intelligence model is spent on matrix multiplication. For example, the artificial intelligence model may spend most of the running time calculating the output matrix by performing multiplication of an input matrix and a weight matrix. Accordingly, various algorithms, such as binary coding quantization (BCQ), are being researched to perform the multiplication of the input matrix and the weight matrix with fewer calculations.

SUMMARY

Various example embodiments attempt to provide a matrix multiplier configured to perform matrix multiplication at a faster speed and/or with fewer calculations, and/or a matrix multiply device including the same.

According to various example embodiments, a matrix multiplier may include an input vector scaler configured to generate a first quantization scaled input vector based on a first input vector, on a plurality of common scale coefficients, and on first-to-R-th multiplication scale coefficients, where R is an integer greater than or equal to 2, a first data type converter configured to generate a first fixed point quantization scaled input vector based on the first quantization scaled input vector, a processing element array comprising a first processing element configured to generate a first fixed point output element based on the first fixed point quantization scaled input vector and on a first plurality of quantization sign bits, and a second processing element configured to generate a second fixed point output element based on the first fixed point quantization scaled input vector and on a second plurality of quantization sign bits, and a second data type converter configured to generate first and second output elements by converting data types of the first and second fixed point output elements, respectively, and configured to output a first output vector including the first and second output elements.

Alternatively or additionally according to various example embodiments, an operation method of a matrix multiply device may include receiving first-to-Nth weights from an external device, where N is an integer greater than or equal to 2, generating first-to-Nth common scale coefficients, first-to-Rth multiplication scale coefficients, and first-to-(NxR)th quantization sign bits by performing uniform binary coding quantization for the first-to-Nth weights, where, R is an integer greater than or equal to 2, receiving first-to-Nth input elements from the external device, generating first-to-(NxR)th quantization scaled input elements by performing quantization scaling for the first-to-Nth input elements based on the first-to-Nth common scale coefficients and on the first-to-Rth multiplication scale coefficients, and outputting a first output element generated based on the first-to-(NxR)th quantization sign bits and the first-to-(NxR)th quantization scaled input elements.

Alternatively or additionally according to various example embodiments, a matrix multiplier may include an input vector scaler configured to generate a first multiplication scaled input vector based on a first input vector and first-to-Rth multiplication scale coefficients, where R is an integer greater than or equal to 2, a first data type converter configured to generate a first fixed point multiplication scaled input vector based on the first multiplication scaled input vector, a processing element array including a first processing element configured to generate a first fixed point partial product based on the first fixed point multiplication scaled input vector and on a first plurality of quantization sign bits, a second data type converter configured to generate a first partial product by converting data type of the first fixed point partial product, and a common scaler configured to generate a first output element based on a product of the first partial product with a first common scale coefficient, and configured to output a first output vector including the first output element.

At least some of the above and other feautres of the invention are set out in the claims.

BRIEF DESCRIPTION OF THE DRAWINGS

FIG. 1 is a block diagram illustrating a matrix multiply device according to some example embodiments.
FIG. 2 is a diagram illustrating an operation of a matrix multiply device implemented to directly multiply an input matrix and a weight matrix of FIG. 1.
FIGS. 3 and 4 are diagrams illustrating an operation of a uniform BCQ circuit of FIG. 1.
FIG. 5 is a diagram illustrating the operation of the uniform BCQ circuit of FIG. 1, which performs a binary coding quantization operation for each column of the weight matrix.

FIG. 6 is a diagram illustrating an operation of a matrix multiplier according to the embodiment of FIG. 5.

FIG. 7 is a block diagram illustrating a configuration of the matrix multiplier of FIG. 1 according to the embodiment of FIG. 4.

FIG. 8 is a block diagram illustrating a configuration of an input vector scaler of FIG. 7.

FIG. 9 is a diagram illustrating an operation of a multiplication scaling circuit of FIG. 8 in more detail.

FIG. 10 is a diagram illustrating in more detail a method of performing, by the multiplication scaling circuit of FIG. 8, a multiplication scaling operation.

FIG. 11 is a diagram illustrating a configuration of a first data type converter of FIG. 7.

FIG. 12 is a diagram illustrating an operation of an exponent extraction circuit of FIG. 11.

FIG. 13 is a diagram illustrating an operation of a data type conversion circuit of FIG. 11.

FIG. 14 is a block diagram illustrating in more detail a configuration of a processing element array of FIG. 7.

FIG. 15 is a block diagram illustrating in more detail some operations of the matrix multiplier of FIG. 7.

FIG. 16 is a block diagram illustrating in more detail an operation of a first processing element row of FIG. 15.

FIG. 17 is a diagram illustrating a configuration of one of the processing elements of FIG. 16 implemented according to an embodiment.

FIG. 18 is a diagram illustrating an operation of the second data type converter of FIG. 7.

FIG. 19 is a flowchart illustrating an operation of the matrix multiply device of FIG. 1.

FIG. 20 is a flowchart illustrating in more detail step S150 of FIG. 19.

FIG. 21 is a flowchart illustrating the operation of the matrix multiply device of FIG. 1.

FIG. 22 is a flowchart illustrating in more detail step S250 of FIG. 21.

FIG. 23 is a diagram illustrating the operation of the BCQ circuit of FIG. 1 according to some example embodiments.

FIG. 24 is a diagram illustrating an approximated weight matrix according to the embodiment of FIG. 23.

FIG. 25 is a diagram illustrating quantization sign bit matrices of FIG. 24.

FIG. 26 is a block diagram illustrating a configuration of the matrix multiplier of FIG. 1 implemented according to some example embodiments.

FIG. 27 is a block diagram illustrating a configuration of an input vector scaler of FIG. 26 according to an embodiment.

FIG. 28 is a diagram illustrating in more detail an operation of a common scaling circuit of FIG. 27.

FIG. 29 is a block diagram illustrating a configuration of the input vector scaler of FIG. 26 according to an embodiment.

FIG. 30 is a diagram illustrating in more detail the operation of the common scaling circuit of FIG. 29.

FIG. 31 is a diagram illustrating in more detail an operation of a multiplication scaling circuit of FIG. 29.

FIG. 32 is a block diagram illustrating a configuration of the input vector scaler of FIG. 26 according to an embodiment.

FIG. 33 is a diagram illustrating in more detail an operation of the multiplication scaling circuit of FIG. 32.

FIG. 34 is a diagram illustrating in more detail an operation of a quantization scaling circuit of FIG. 32.

FIG. 35 is a block diagram illustrating a configuration of the first data type converter of FIG. 26.

FIG. 36 is a block diagram illustrating in more detail a configuration of a processing element array of FIG. 26.

FIG. 37 is a block diagram illustrating in more detail an operation of the processing elements of FIG. 36.

FIG. 38 is a diagram illustrating a configuration of one of the processing elements of FIG. 36 implemented according to the embodiment.

FIG. 39 is a diagram illustrating an operation of the second data type converter of FIG. 26.

FIG. 40 is a flowchart illustrating the operation of the matrix multiply device of FIG. 1.

FIG. 41 is a flowchart illustrating in more detail step S350 of FIG. 40.

FIG. 42 is a flowchart illustrating the operation of the matrix multiply device of FIG. 1.

FIGS. 43 to 45 are flowcharts illustrating in more detail step S440 of FIG. 42 implemented according to the embodiment.

FIG. 46 is a flowchart illustrating in more detail step S450 of FIG. 42.

FIG. 47 is a diagram illustrating the operation of the BCQ circuit of FIG. 1 according to the embodiment.

FIG. 48 is a block diagram illustrating a configuration of the matrix multiplier of FIG. 1 implemented according to the embodiment.

FIG. 49 is a block diagram illustrating a configuration of the input vector scaler of FIG. 48 according to the embodiment.

FIG. 50 is a diagram illustrating in more detail an operation of the multiplication scaling circuit of FIG. 49.

FIG. 51 is a diagram illustrating in more detail an operation of the common scaling circuit of FIG. 49.

FIG. 52 is a block diagram illustrating a configuration of the input vector scaler of FIG. 48 according to the embodiment.

FIG. 53 is a diagram illustrating in more detail an operation of the common scaling circuit of FIG. 52.

FIG. 54 is a diagram illustrating in more detail an operation of the multiplication scaling circuit of FIG. 52 according to the embodiment.

FIG. 55 is a block diagram illustrating a configuration of the input vector scaler of FIG. 48 according to various example embodiments.

FIG. 56 is a diagram illustrating in more detail an operation of the multiplication scaling circuit of FIG. 55.
FIG. 57 is a diagram illustrating in more detail an operation of the quantization scaling circuit of FIG. 55.
FIG. 58 is a diagram illustrating in more detail an operation of the processing element array of FIG. 48.
FIG. 59 is a block diagram illustrating the processing element array of FIG. 26 implemented in a systolic array manner.
FIG. 60 is a diagram illustrating in more detail a configuration of the processing element of FIG. 59.
FIG. 61 is a diagram illustrating an operation of the matrix multiply device of FIG. 1 according to various example embodiments.
FIG. 62 is a diagram illustrating a full-input matrix of FIG. 61.
FIG. 63 is a diagram illustrating a full-weight matrix of FIG. 61.
FIG. 64 is a diagram illustrating a full-output matrix of FIG. 61.
FIG. 65 is a block diagram illustrating a neural processing system implemented according to an embodiment.
FIG. 66 is a block diagram illustrating an artificial intelligence model driven by the neural processing system of FIG. 65.

DETAILED DESCRIPTION OF EXAMPLE EMBODIMENTS

Hereinafter, some example embodiments will be described clearly and in detail to the extent that those skilled in the art can easily practice the present disclosure. Details such as detailed configurations and structures are provided merely to facilitate a general understanding of various example embodiments. Therefore, modifications of various example embodiments described herein may be made by those of ordinary skill in the art without departing from the scope of inventive concepts. Moreover, descriptions of certain functions and structures, such as well-known functions and structures, may be omitted for clarity and simplicity.

Components in the following drawings or detailed description may be connected with other components other than those shown in the drawings or described in the detailed description. The terms used in the text are terms defined in consideration of the functions of the present disclosure, and are not limited to specific functions. Definitions of terms may be determined based on the details described in the detailed description. Components described with reference to terms such as a driver or a block used in the detailed description may be implemented in the form of software, hardware, or a combination thereof. Illustratively, the software may be machine code, firmware, embedded code, and application software. For example, the hardware may include an electrical circuit, an electronic circuit, a processor, a computer, IC cores, a pressure sensor, an inertial sensor, a micro electromechanical system (MEMS), passive devices, or combinations thereof.

Hereinafter, for a more concise explanation, a matrix is referred to with brackets "[", "]", a set is referred to through with curly braces "{", "}", and vectors may be referred to with an over-arrow. However, the scope of inventive concepts is not limited to this notation method.

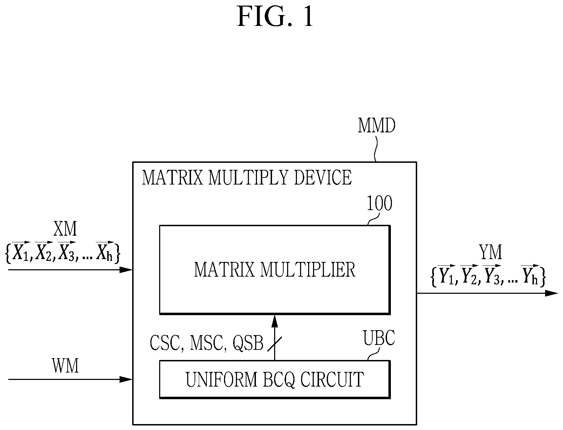

FIG. 1 is a block diagram illustrating a matrix multiply device according to some example embodiments. Referring to FIG. 1, a matrix multiply device MMD (e.g. a matrix multiplier device or matrix multiplication device) may include a matrix multiplier 100 and a uniform BCQ circuit UBC. The matrix multiply device MMD may receive an input matrix XM.

The input matrix XM may include a plurality of input vectors. Each of the plurality of input vectors may include a plurality of input elements. For example, the input matrix XM may be expressed as Equation 1 below.

(Equation 1)

$$ XM = \begin{bmatrix} \overrightarrow{X_1} \\ \overrightarrow{X_2} \\ \vdots \\ \overrightarrow{X_h} \end{bmatrix} = \begin{bmatrix} x_{11} & x_{12} & ... & x_{1n} \\ x_{21} & x_{22} & ... & x_{2n} \\ \vdots & \vdots & \ddots & \vdots \\ x_{h1} & x_{h2} & ... & x_{hn} \end{bmatrix} $$

Referring to Equation 1, $XM$ may represent the input matrix XM, $\overrightarrow{X_1}$ to $\overrightarrow{X_h}$ may represent first to (h)-th input vectors, respectively, and $x_{11}$ to $x_{hn}$ may represent different input elements. For example, $x_{11}$ to $x_{1n}$ may represent input elements included in a first input vector (e.g., $\overrightarrow{X_1}$), and $x_{h1}$ to $x_{hn}$ may represent input elements included in the (h)-th input vector (e.g., $\overrightarrow{X_h}$).

Hereinafter, for a more concise description, example embodiments in which dimensions of each of the input vectors included in the input matrix XM is 'n' will be representatively described. That is, hereinafter, example embodiments in which each of the input vectors includes 'n' input elements will be representatively described. For example, hereinafter, example embodiments in which the input matrix XM includes 'n' columns will be representatively described. Here, 'h' may be the same as, greater than, or less than 'n'.

In some example embodiments, each of the input elements included in the input matrix XM may have a 16-bits floating point (FP16) and/or 32-bits floating point (FP32) data type. However, example embodiments are not limited thereto.

The matrix multiply device MMD may receive a weight matrix WM. The weight matrix WM may include a plurality of weights. For example, the weight matrix WM may be expressed as Equation 2 below.

(Equation 2)

$$WM = \begin{bmatrix} w_{11} & w_{12} & \dots & w_{1m} \\ w_{21} & w_{22} & \dots & w_{2m} \\ \vdots & \vdots & \ddots & \vdots \\ w_{n1} & w_{n2} & \dots & w_{nm} \end{bmatrix}$$

Referring to Equation 2, *WM* may represent a weight matrix WM, and each of the $w_{11}$ to $w_{nm}$ may represent different weights. For example, $w_{ij}$ may be a weight arranged in an (i)-th row and a (j)-th column of the weight matrix WM. The weight matrix WM may have 'n' rows and 'm' columns. Here, 'm' may be the same as, greater than, or less than 'n'.

In some example embodiments, each of the weights included in the weight matrix WM may have a 16-bits floating point FP16 or 32-bits floating point FP32 data type. However, example embodiments are not limited thereto.

The uniform BCQ circuit UBC may perform uniform binary coding quantization (BCQ) for the weight matrix WM. For example, the uniform BCQ circuit UBC may determine a plurality of common scale coefficients CSC, a plurality of multiplication scale coefficients MSC, and a plurality of quantization sign bits QSB based on the weight matrix WM.

More specifically, the uniform BCQ circuit UBC may convert each of a plurality of weights to a plurality of combinations of a common scale coefficient CSC, multiplication scale coefficients MSC, and quantization sign bits QSB. For example, the uniform BCQ circuit UBC may approximate each of the weights of the weight matrix WM based on the plurality of combinations of a common scale coefficient CSC, multiplication scale coefficients MSC, and quantization sign bits QSB. That is, the uniform BCQ circuit may determine, for each weight, a common scale coefficient CSC, multiplication scale coefficients MSC and quantization sign bits QSB that represent a quantized value of the weight. The common scale coefficient CSC, multiplication scale coefficients MSC and quantization sign bits QSB can be used to determine the quantized value of the weight. This will be described in more detail below.

In some example embodiments, each of the plurality of quantization sign bits QSB may represent '0' or '1'.

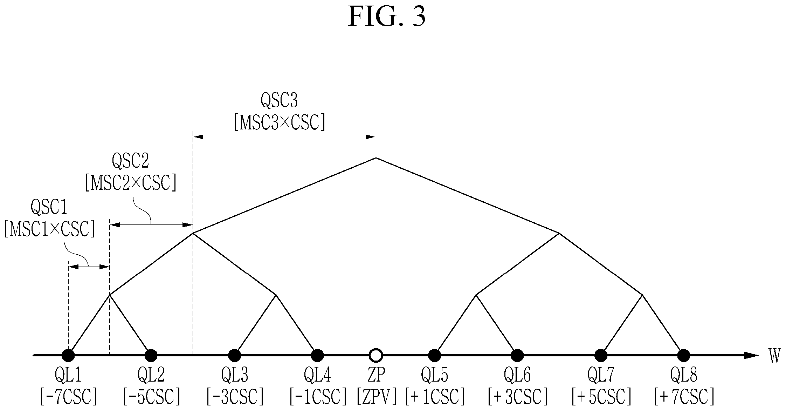

In various example embodiments, each of the plurality of common scale coefficients CSC may have the same data type as the weight of the weight matrix WM. The data type may define a set of possible values, a set of allowed operations on the values, and/or a representation of the values. For example, each of the plurality of common scale coefficients CSC may have an FP16 or FP32 data type. However, example embodiments are not limited thereto. The operation of the uniform BCQ circuit UBC will be described in more detail below with reference to FIG. 3.

The matrix multiplier 100 may receive the plurality of common scale coefficients CSC, the plurality of multiplication scale coefficients MSC, and the plurality of quantization sign bits QSB. The matrix multiplier 100 may perform matrix multiplication on the input matrix XM and the weight matrix WM based on the plurality of common scale coefficients CSC, the plurality of multiplication scale coefficients MSC, and the plurality of quantization sign bits QSB. For example, the matrix multiplier 100 may multiply the input matrix XM by the weight matrix WM approximated by the plurality of common scale coefficients CSC, the plurality of multiplication scale coefficients MSC, and the plurality of quantization sign bits QSB, to generate an output matrix YM.

The output matrix YM may include a plurality of output vectors. Each of the plurality of output vectors may include a plurality of output elements. For example, the output matrix YM may be expressed as Equation 3 below.

(Equation 3)

$$YM = \begin{bmatrix} \overrightarrow{Y_1} \\ \overrightarrow{Y_2} \\ \vdots \\ \overrightarrow{Y_h} \end{bmatrix} = \begin{bmatrix} y_{11} & y_{12} & \cdots & y_{1m} \\ y_{21} & y_{22} & \cdots & y_{2m} \\ \vdots & \vdots & \ddots & \vdots \\ y_{h1} & y_{h2} & \cdots & y_{hm} \end{bmatrix}$$

In this case, *YM* may represent the output matrix YM, and $y_{11}$ to $y_{hm}$ each may represent different output elements. For example, $y_{11}$ to $y_{1m}$ may represent output elements included in a first output vector (e.g., $\overrightarrow{Y_1}$), and $y_{h1}$ to $y_{hm}$ may represent output elements included in a (h)-th output vector (e.g., $\overrightarrow{Y_h}$).

In some example embodiments, 'n' and 'm' may be the same integer. For example, the weight matrix WM may be implemented as a square matrix. In this case, the dimension of the output vectors included in the output matrix YM may be the same as the dimension of the input vector. However, example embodiments are not limited thereto.

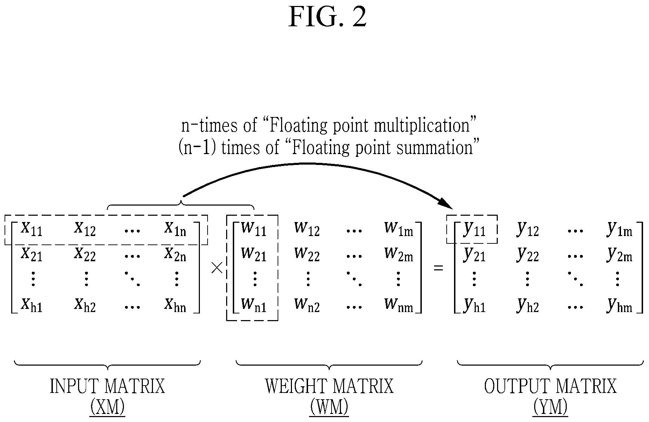

In some example embodiments, when the matrix multiply device MMD calculates the output matrix YM by directly multiplying the input matrix XM and the weight matrix WM, the matrix multiply device MMD may have to process using a very large amount of calculation resources and/or time. In this case, the operation speed of the matrix multiply device MMD may decrease. The operation of the matrix multiply device MMD, which calculates the output matrix YM by directly multiplying the input matrix XM and the weight matrix WM, is described in more detail below with reference to FIG. 2.

On the other hand, when the matrix multiply device MMD calculates the output matrix YM by multiplying the input matrix XM and weight matrix WM which is approximated by the plurality of common scale factors CSC, the plurality of multiplication scale factors MSC, and the plurality of quantization sign bits QSB, the calculation amount of the matrix multiply device MMD may be reduced, e.g., may be greatly reduced. The operation of the matrix multiply device MMD for calculating the output matrix YM based on the plurality of common scale coefficients CSC, the plurality of multiplication scale coefficients MSC, and the plurality of quantization sign bits QSB will be described in more detail below with reference to drawings.

FIG. 2 is a diagram illustrating an operation of the matrix multiply device implemented to directly multiply the input matrix and the weight matrix of FIG. 1. Referring to FIGS. 1 and 2, the matrix multiply device MMD may calculate the output matrix YM by directly multiplying the input matrix XM and the weight matrix WM.

To calculate one output element included in the output matrix YM, the matrix multiply device MMD may perform floating point multiplication 'n' times, and then perform floating point summation 'n-1' times. For example, the matrix multiply device MMD may calculate one (e.g., $y_{11}$) of the output elements included in the output matrix YM in a manner similar to Equation 4 below.

(Equation 4)

$$y_{11} = x_{11} \times w_{11} + x_{12} \times w_{21} + \cdots + x_{1n} \times w_{n1}$$

In this way, to calculate one output vector (e.g., $\overrightarrow{Y_1}$) corresponding to one input vector (e.g., $\overrightarrow{X_1}$), the matrix multiply device MMD may have to perform the floating point multiplication operation 'm × n' times, and perform the floating point summation operation 'm×(n-1)' times. In this case, the operation speed of the artificial intelligence model driven based on the matrix multiply device MMD may decrease due to the excessive calculation amount performed by the matrix multiply device MMD.

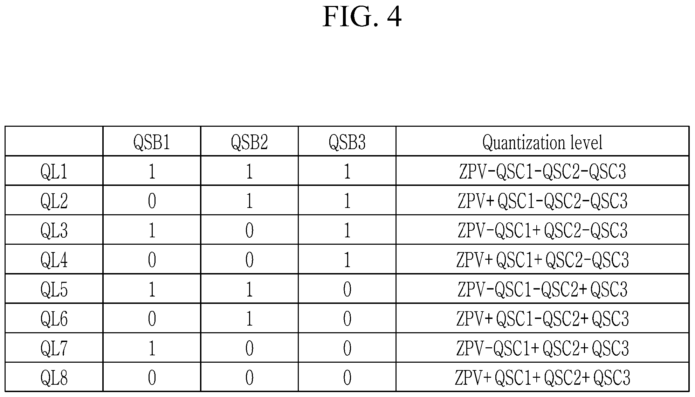

FIGS. 3 and 4 are diagrams illustrating an operation of the uniform BCQ circuit of FIG. 1. FIG. 3 is illustrated as a tree, such as a binary tree; example embodiments are not limited thereto. First, referring to FIGS. 1 and 3, a horizontal axis represents a size of a weight included in the weight matrix WM.

The uniform BCQ circuit UBC may approximate one or more of the weights included in the weight matrix WM to a plurality of quantum levels QL.

The uniform BCQ circuit UBC may determine the number of a plurality of quantum levels QL based on a predetermined BCQ resolution. For example, the uniform BCQ circuit UBC may approximate each of the plurality of weights to $2^R$ (where $R$ is the BCQ resolution) quantum levels QL. Each of the $2^R$ quantum levels QL may be determined based on a combination of a zero point value ZPV (null point value), $R$ quantization scale coefficients QSC, and $R$ quantization sign bits QSB.

Hereinafter, for a more concise explanation, example embodiments in which $R$ is '3' will be representatively described; however, example embodiments are not limited thereto. For example, the uniform BCQ circuit UBC may approximate one or more of the weights included in the weight matrix WM to first to eighth quantum levels QL1 to QL8. In this case, each of the first to eighth quantum levels QL1 to QL8 may be determined based on Equation 5 below.

(Equation 5)

$$QL = \text{ZPV} + \alpha_1 \times (-1)^{b_1} + \alpha_2 \times (-1)^{b_2} + \alpha_3 \times (-1)^{b_3}$$

Referring to Equation 5, $QL$ may represent a quantum level, $ZPV$ may represent the zero point value ZPV of the uniform BCQ, $\alpha_1$ to $\alpha_3$ may represent first to third quantization scale coefficients QSC1 to QSC3, respectively, and $b_1$ to $b_3$ may represent first to third quantization sign bits QSB1 to QSB3, respectively. In this case, the first to eighth quantum levels QL1 to QL8 may correspond to different combinations of the first to third quantization sign bits QSB1 to QSB3.

For example, further referring to FIG. 4, the first quantum level QL1 may correspond to the case where all of the first to third quantization sign bits QSB1 to QSB3 are '1'. In this case, the first quantum level QL1 may correspond to "ZPV - $\alpha_1$ - $\alpha_2$ - $\alpha_3$". Similarly, the eighth quantum level QL8 may correspond to the case where all of the first to third quantization sign bits QSB1 to QSB3 are '0'. In this case, the eighth quantum level QL8 may correspond to "ZPV + $\alpha_1$ + $\alpha_2$ + $\alpha_3$". In this

way, the seventh quantum level QL7 may correspond to the case where the first to third quantization sign bits QSB1 to QSB3 are '1', '0', '0' respectively. In this case, the seventh quantum level QL7 may correspond to "ZPV-$\alpha_1 + \alpha_2 + \alpha_3$". However, example embodiments are not limited thereto.

Continuing to refer to FIG. 3, the intervals between the plurality of quantum levels QL may be 'uniform' to each other. For example, the intervals between the plurality of quantum levels QL may be equal to each other. In this case, the plurality of quantization scale coefficients QSC may form a geometric sequence with a common ratio of '2'. For example, the second quantization scale coefficient QSC2 may be twice of the first quantization scale coefficient QSC1, and the third quantization scale coefficient QSC3 may be twice of the second quantization scale coefficient QSC2.

Each of the plurality of quantization scale coefficients QSC may be expressed as the product of the same common scale coefficient CSC but different multiplication scale coefficients MSC. For example, the first quantization scale coefficient QSC1 may be expressed as the product of the common scale coefficient CSC and a first multiplication scale coefficient MSC1, the second quantization scale coefficient QSC2 may be expressed as the product of the common scale coefficient CSC and the second multiplication scale coefficient MSC2, and the third quantization scale coefficient QSC3 may be expressed as the product of the common scale coefficient CSC and the third multiplication scale coefficient MSC3.

The multiplication scale coefficient MSC corresponding to each of the plurality of quantization scale coefficients QSC may be different consecutive powers of 2. For example, a k-th multiplication scale coefficient MSCk may be $2^{k-1}$. For a more detailed example, the first multiplication scale coefficient may be $2°$, the second multiplication scale coefficient MSC2 may be $2^1$, and the third multiplication scale coefficient MSC3 may be $2^2$.

Accordingly, each of the $2^R$ quantum levels QL may be determined based on a combination of the zero point value ZPV, one common scale coefficient CSC, R multiplication scale coefficients MSC, and R quantization sign bits QSB. For example, Equation 5 described above may also or alternatively be expressed as Equation 6 below.

(Equation 6)

$$QL = \text{ZPV} + 2^0 \times s \times (-1)^{b_1} + 2^1 \times s \times (-1)^{b_2} + 2^2 \times s \times (-1)^{b_3}$$

Referring to Equations 5 and 6, $2°$ to $2^2$ may represent first to third multiplication scale coefficients MSC1 to MSC3 that are different powers of 2, and s may represent the common scale coefficient CSC.

The uniform BCQ circuit UBC may approximate each of the weights included in the weight matrix WM to the quantum level having the nearest value among the plurality of quantum levels QL. For example, when the size of the weight "$w_{11}$" is nearest to the seventh quantum level QL7 from among the first to eighth quantum levels QL1 to QL8, the uniform BCQ circuit UBC may approximate the weight "$w_{11}$" to the seventh quantum level QL7. In this case, the uniform BCQ circuit UBC may represent the weight "$w_{11}$" as the combination of a zero point value ZPV, a common scale coefficient CSC, a plurality of multiplication scale coefficients MSC, and a plurality of quantization sign bits QSB corresponding to the seventh quantum level QL7. Similarly, the uniform BCQ circuit UBC may approximate the weights included in the weight matrix WM based on the zero point value ZPV, a plurality of common scale coefficients CSC, a plurality of multiplication scale coefficients MSC, and a plurality of quantization sign bits QSB.

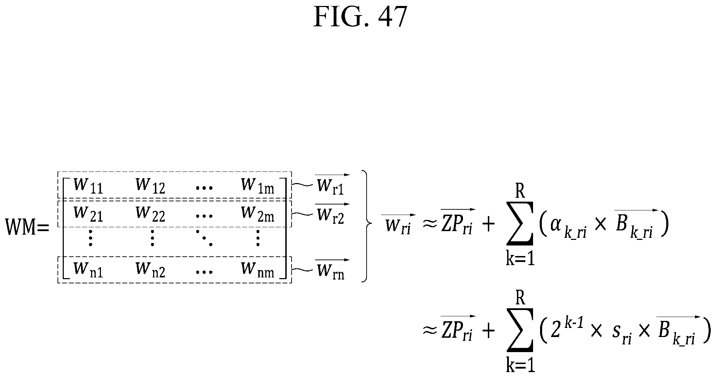

However, hereinafter, for a more concise description, example embodiments in which zero point value ZPV is '0' will be representatively described. For example, the following will typically describe example embodiments in which the uniform BCQ circuit UBC performs the uniform binary coding quantization on each of the weights included in the weight matrix WM symmetrically. In particular, example embodiments in which the uniform BCQ circuit UBC approximates the weight matrix WM based on a plurality of common scale coefficients CSC, a plurality of multiplication scale coefficients MSC, and a plurality of quantization sign bits QSB will be described. The operation of the matrix multiply device MMD when the zero point value ZPV is not '0' (e.g., the operation of the matrix multiply device MMD when the uniform BCQ circuit UBC performs uniform binary coding quantization asymmetrically) will be described in more detail with reference to FIGS. 47 to 58 below.

For a more concise description, in FIG. 3, example embodiments in which the BCQ resolution is '3' is representatively described, but example embodiments are not limited thereto. For example, the BCQ resolution may be determined to be an integer greater than or equal to '2' depending on the type of artificial intelligence model driven based on the matrix multiply device MMD.

In example embodiments, when the artificial intelligence model driven based on the matrix multiply device MMD is or includes (or is included in) a large language model (LLM), the BCQ resolution may be '3'. However, example embodiments are not limited thereto.

In example embodiments, when the artificial intelligence model driven based on the matrix multiply device MMD is or includes (or is included in) an image object identification model, the BCQ resolution may be '2'. However, example embodiments are not limited thereto.

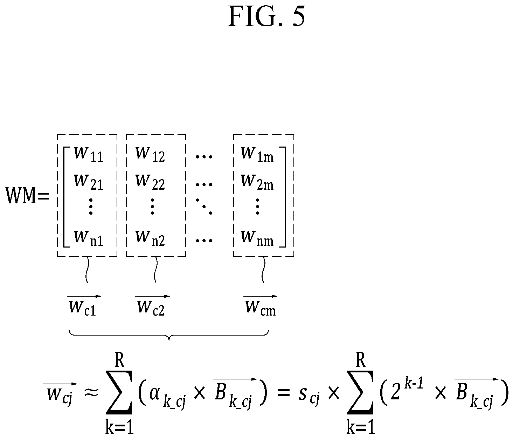

In example embodiments, the uniform BCQ circuit UBC may perform the uniform binary coding quantization operation for each column of the weight matrix WM. For example, the uniform BCQ circuit UBC may determine different common scale coefficients CSC for each column of the weight matrix WM. In this case, the common scale coefficient CSC for the weights included in the first column of the weight matrix WM may be different from the common scale coefficient CSC for the weights included in the second column of the weight matrix WM. Example embodiments in which the uniform BCQ circuit UBC performs the binary coding quantization operation for each column of the weight matrix WM will be described in more detail below with reference to FIGS. 5 to 22. However, example embodiments are not limited thereto.

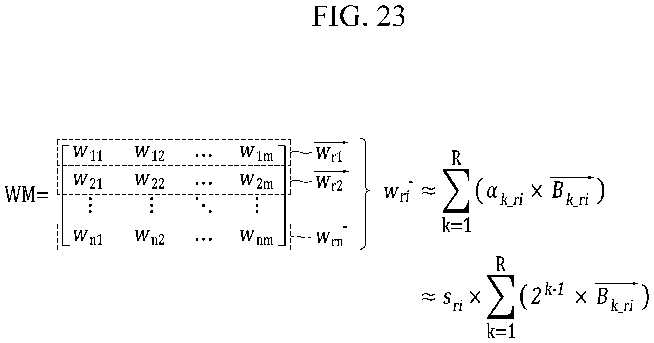

In various example embodiments, the uniform BCQ circuit UBC may perform the uniform binary coding quantization operation for each row of the weight matrix WM. For example, the uniform BCQ circuit UBC may determine different common scale coefficients CSC for each row of the weight matrix WM. In this case, the common scale coefficient CSC for the weights included in a first row of the weight matrix WM may be different from the common scale coefficient CSC for the weights included in a second row of the weight matrix WM. Example embodiments in which the uniform BCQ circuit UBC performs the binary coding quantization operation for each row of the weight matrix WM will be described in more detail below with reference to FIGS. 23 to 58. However, example embodiments are not limited thereto.

FIG. 5 is a diagram illustrating the operation of the uniform BCQ circuit of FIG. 1, which performs the binary coding quantization operation for each column of the weight matrix. Referring to FIGS. 1 to 5, the uniform BCQ circuit UBC may perform the uniform binary coding quantization operation for each column of the weight matrix WM.

First, the weight matrix WM may be expressed as Equation 7 below.

(Equation 7)

$$WM = \begin{bmatrix} w_{11} & w_{12} & ... & w_{1m} \\ w_{21} & w_{22} & ... & w_{2m} \\ \vdots & \vdots & \ddots & \vdots \\ w_{n1} & w_{n2} & ... & w_{nm} \end{bmatrix} = \begin{bmatrix} \overrightarrow{w_{c1}} & \overrightarrow{w_{c2}} & ... & \overrightarrow{w_{cm}} \end{bmatrix}$$

In this case, $\overrightarrow{w_{cj}}$ may represent a j-th column vector of the weight matrix WM. For example, $\overrightarrow{w_{cj}}$ may include $w_{1j}$ to $w_{nj}$. 'j' may be an integer greater than or equal to 1 and less than or equal to m.

The BCQ circuit 200 may perform a binary coding quantization operation for each column of the weight matrix WM based on Equation 8 below.

(Equation 8)

$$\overrightarrow{w_{cj}} \approx \sum_{k=1}^{R} \left( \alpha_{k\_cj} \times \overrightarrow{B_{k\_cj}} \right)$$

Referring to Equation 8, R may represent the BCQ resolution. The $\alpha_{k\_cj}$ may represent a k-th quantization scale coefficient corresponding to the j-th column vector of the weight matrix WM.

The $\overrightarrow{B_{k\_cj}}$ may represent a quantization sign vector corresponding to $\alpha_{k\_cj}$. For example, $\overrightarrow{B_{k\_cj}}$ may represent a quantization sign vector corresponding to the k-th quantization scale coefficient of the j-th column vector of the weight matrix WM. The $\overrightarrow{B_{k\_cj}}$ may include a plurality of values equal to -1 raised to the power of a plurality of corresponding quantization sign bits corresponding to the k-th quantization scale coefficient of the j-th column vector. These values may be either -1 or 1. More specifically, $\overrightarrow{B_{k\_cj}}$ may be expressed as Equation 9 below.

(Equation 9)

$$\overrightarrow{B_{k\_cj}} = \begin{bmatrix} (-1)^{b_{1\_k\_cj}} \\ (-1)^{b_{2\_k\_cj}} \\ \vdots \\ (-1)^{b_{n\_k\_cj}} \end{bmatrix}$$

Each of the $b_{1\_k\_cj}$ to $b_{n\_k\_cj}$ may represent different quantization sign bits QSB. More specifically, each of the $b_{1\_k\_cj}$ to $b_{n\_k\_cj}$ may be a $k^{th}$ quantization sign bit for weights arranged in different rows of the weight matrix WM. $b_{i\_k\_cj}$ may represent the $k^{th}$ quantization sign bit for the weight at the $i^{th}$ column and $j^{th}$ row of the weight matrix WM. Each of the $b_{1\_k\_cj}$ to $b_{n\_k\_cj}$ may be '0' or '1'. For each weight in the weight matrix WM, there may be R quantization scale coefficients and R quantization sign bits QSB.

The calculation of Equation 8 may be implemented through the use of circutry (e.g. an arithmetic logic unit) that adds or subtracts values based on the values of the quantization sign bits. Accordingly, to implement this, the circuitry may receive a quantization sign bit vector $\overrightarrow{QSB_{k\_cj}}$. The $\overrightarrow{QSB_{k\_cj}}$ may include a plurality of quantization sign bits corresponding to the k-th quantization scale coefficient of the j-th column vector. More specifically, $\overrightarrow{QSB_{k\_cj}}$ may be expressed as Equation 9.1 below.

(Equation 9.1)

$$\overrightarrow{QSB_{k\_cj}} = \begin{bmatrix} b_{1\_k\_cj} \\ b_{2\_k\_cj} \\ \vdots \\ b_{n\_k\_cj} \end{bmatrix}$$

Meanwhile, $\alpha_{k\_cj}$ may be expressed as the product of the common scale coefficient and the multiplication scale coefficient. For example, $\alpha_{k\_cj}$ may be expressed as $2^{k-1} \times s_{cj}$. Accordingly, the above-described Equation 8 may alternatively or additionally be expressed as the following Equation 10.

(Equation 10)

$$\overrightarrow{w_{cj}} \approx s_{cj} \times \sum_{k=1}^{R} \left( 2^{k-1} \times \overrightarrow{B_{k\_cj}} \right)$$

Referring to Equation 10, $2^{k-1}$ may represent the k-th multiplication scale coefficient, and $s_{cj}$ may represent the common scale coefficient for the (j)-th column vector of the weight matrix WM.

For example, the uniform BCQ circuit UBC may approximate each weight of the weight matrix WM based on one or more common scale coefficients CSC (e.g., "s" values), the plurality of multiplication scale coefficients MSC (e.g., power of 2), and the plurality of quantization sign bits QSB (e.g., "$b$" values). The same common scale coefficient CSC may be used for each column, but different common scale coefficients CSC may be used for different columns.

In this way, for various example embodiments the uniform BCQ circuit UBC may generate the plurality of common scale coefficients CSC, the plurality of multiplication scale coefficients MSC, and the plurality of quantization sign bits QSB based on the weight matrix WM. The uniform BCQ circuit UBC may provide the plurality of common scale coefficients CSC, the plurality of multiplication scale coefficients MSC, and the plurality of quantization sign bits QSB to the matrix multiplier 100. Hereinafter, the operation of the matrix multiplier 100 performing the matrix multiplication operation will be described based on the plurality of common scale coefficients CSC, the plurality of multiplication scale coefficients MSC, and the plurality of quantization sign bits QSB.

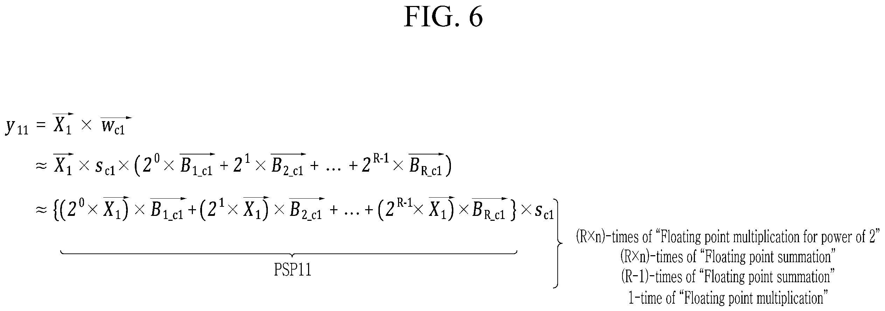

FIG. 6 is a diagram illustrating an operation of a matrix multiplier according to various example embodiments of FIG. 5. Referring to FIGS. 1 to 6, the matrix multiplier 100 may calculate the output matrix YM based on the plurality of common scale coefficients CSC, the plurality of multiplication scale coefficients MSC, and the plurality of quantization sign bits QSB.

Hereinafter, for a more concise explanation, the operation of the matrix multiplier 100 calculating the output element (e.g., $y_{11}$) of the first row and first column of the output matrix YM by multiplying the first input vector (e.g., $\overrightarrow{X_1}$) and the first column vector (e.g., $\overrightarrow{w_{c1}}$) of the approximated weight matrix WM based on the plurality of common scale coefficients CSC, the plurality of multiplication scale factors MSC, and the plurality of quantization sign bits QSB will be representatively described. However, example embodiments are not limited thereto.

Referring to Equation 10, the matrix multiplier 100 may calculate $y_{11}$ according to Equation 11 below.

(Equation 11)

$$y_{11} \approx \overrightarrow{X_1} \times s_{c1} \times \left( 2^0 \times \overrightarrow{B_{1\_c1}} + 2^1 \times \overrightarrow{B_{2\_c1}} + \ldots + 2^{R-1} \times \overrightarrow{B_{R\_c1}} \right)$$

$$\approx s_{c1} \times \left\{ (2^0 \times \overrightarrow{X_1}) \times \overrightarrow{B_{1\_c1}} + (2^1 \times \overrightarrow{X_1}) \times \overrightarrow{B_{2\_c1}} + \ldots + (2^{R-1} \times \overrightarrow{X_1}) \times \overrightarrow{B_{R\_c1}} \right\}$$

Referring to Equation 11, first, the matrix multiplier 100 may calculate the product of the plurality of multiplication scale coefficients (e.g., power of 2) for each input vector (e.g., $\overrightarrow{X_1}$). For example, the matrix multiplier 100 may multiply each multiplication scale coefficient by the plurality of input elements (e.g., $x_{11}$ to $x_{1n}$) included in the input vector to generate a multiplication scaled input vector (hereinafter referred to as " multiplication scaled input vector MSX"). In this case, the multiplication scaled input vector MSX may include a plurality of multiplication scaled input elements (hereinafter, referred to as "multiplication scaled input elements MSIE").

The data type of the plurality of input elements included in the input vector may be floating point. In this case, the matrix multiplier 100 may have to perform a total of (R×n) times of floating point multiplication operations for a power of 2, in order to calculate one output element (for example, $y_{11}$).

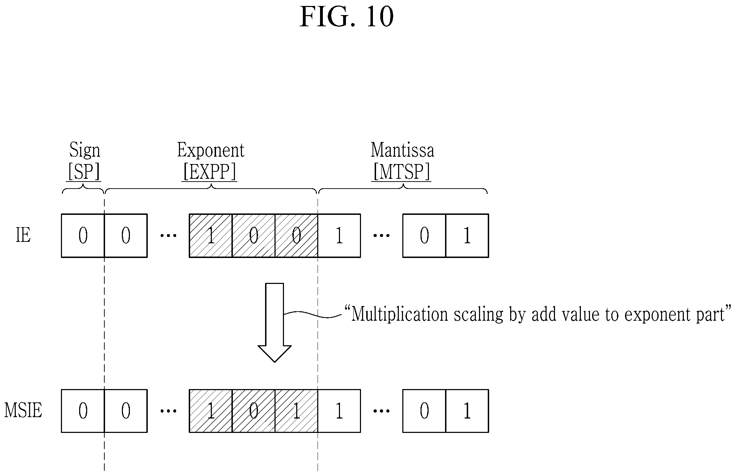

In various example embodiments, the floating point multiplication operation for the power of 2 may be performed with less calculation amount (e.g. reduced computation). For example, the matrix multiplier 100 may perform the floating point multiplication operation for the power of 2 by changing an exponent part of the floating point data type. Where the input elements are represented in floating point using base 2, multiplication with a multiplication scale coefficient that is a power of 2 can be achieved efficiently through simple addition of the respective exponents. This therefore allows efficient multiplication. The operation of the matrix multiplier 100, which performs the floating point multiplication operation for the power of 2, is described in more detail below with reference to FIG. 10.

Thereafter, the matrix multiplier 100 may calculate a partial product PSP by adding the results of multiplying each of the plurality of scaled input vectors MSX by different quantization sign vectors (e.g., one of $\vec{B}$). Hereinafter, for a more concise description, the partial product for the j-th column of the weight matrix WM and the i-th input vector (e.g., $\vec{X_i}$) will be referred to as "PSPij".

In some example embodiments, the product of one multiplication scaled input vector MSX and one quantization sign vector (e.g., one $\vec{B}$) may be calculated by sequentially adding or subtracting the values of the plurality of multiplication scaled elements MSIE based on the plurality of quantization sign bits QSB. This may be based on a received plurality of quantization sign bits (e.g. in the form of a quantization sign bit vector $\overrightarrow{QSB}$). Thereafter, the matrix multiplier 100 may calculate a partial product PSP by adding the results of multiplying the multiplication scaled input vector MSX and the quantization sign vector. Therefore, in order to calculate one partial product PSP, the matrix multiplier 100 may have to perform the floating point summation operation 'R×n' times and the plurality of floating point summation operation 'R-1' times.

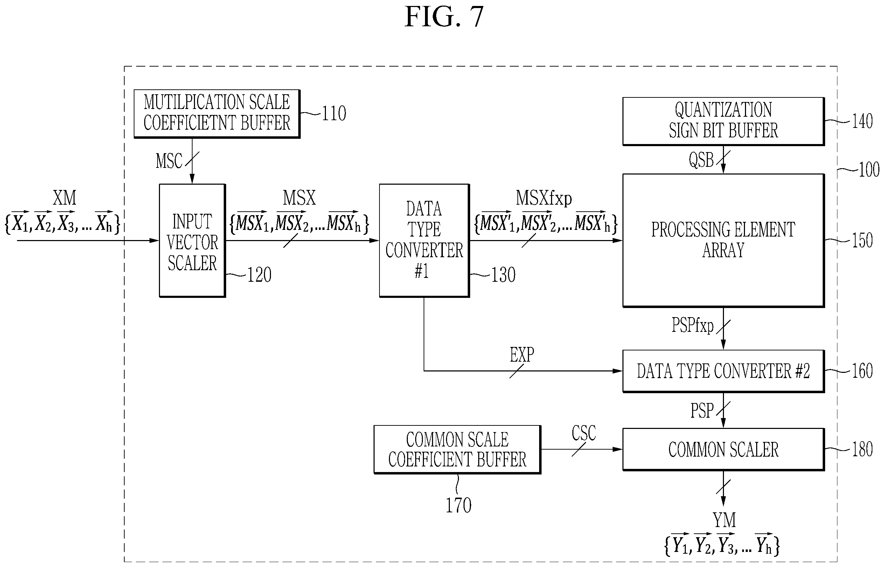

In various example embodiments, when the data type of each of the plurality of input elements is converted to fixed point, the matrix multiplier 100 may calculate the partial product PSP with fewer calculations. For example, when the data type of each of the plurality of input elements is the fixed point data type corresponding to the same exponent value, the matrix multiplier 100 may have to perform the fixed point summation operation 'R × n' times and the fixed point summation operation 'R-1' times to calculate the partial product PSP. The detailed operation of the matrix multiplier 100, which converts the data type of each of the plurality of input elements to fixed point, will be described in more detail with reference to FIGS. 7 to 22 below.

The matrix multiplier 100 may calculate one output element (e.g., $y_{11}$) by multiplying a partial product PSP11 and a common scale coefficient (e.g., $s_{c1}$) for the first column vector of the weight matrix WM. For example, the matrix multiplier 100 may calculate the output element (e.g., $y_{11}$) by performing the floating point multiplication of the partial product PSP11 and the common scale coefficient (e.g., $s_{c1}$) once.

As noted above, the RxN floating point multiplication for the power of 2 can be performed efficiently through simple addition of exponents. As a result, the matrix multiplier 100 may calculate one output element (e.g., $y_{11}$) by performing full floating point multiplication only once. In this case, unlike previously described with reference to FIG. 2, the number of times of floating point multiplication operation performed by the matrix multiplier 100 may be reduced or minimized. Therefore, according to various example embodiments illustrated in FIGS. 5 and 6, the operation speed of the matrix multiply device MMD may be improved.

FIG. 7 is a block diagram illustrating a configuration of the matrix multiplier of FIG. 1 according to various example embodiments relative to FIG. 4. Referring to FIGS. 1 to 7, the matrix multiplier 100 may include a multiplication scale coefficient buffer 110, an input vector scaler 120, a first data type converter 130, a quantization sign bit buffer 140, a processing element array 150, a second data type converter 160, a common scale coefficient buffer 170, and a common scaler 180.

The multiplication scale coefficient buffer 110 may store the plurality of multiplication scale coefficients MSC provided from the uniform BCQ circuit UBC. The multiplication scale coefficient buffer 110 may provide the plurality of multiplication scale coefficients MSC to the input vector scaler 120.

The input vector scaler 120 may receive the input matrix XM. For example, the input vector scaler 120 may receive the plurality of input vectors (e.g., $\vec{X_1}$ to $\vec{X_h}$) each including a plurality of input elements.

The input vector scaler 120 may perform multiplication scaling on the input matrix XM based on the plurality of multiplication scale coefficients MSC. For example, the input vector scaler 120 may generate the plurality of scaled input vectors MSX based on the plurality of input vectors. In this case, the plurality of scaled input vectors MSX may correspond to the plurality of input vectors (e.g., $\vec{X_1}$ to $\vec{X_h}$), respectively. Hereinafter, the scaled input vectors corresponding to $\vec{X_1}$ to $\vec{X_h}$ will be referred to as to $\overrightarrow{MSX_1}$ to $\overrightarrow{MSX_h}$, respectively.

In example embodiments, the plurality of multiplication scaled input vectors MSX may be included in a scaled input matrix. In this case, a row size of the multiplication scaled input matrix may be an integer multiple of a row size of the input matrix XM, and a column size of the multiplication scaled input matrix may be the same as a column size of the input matrix XM. However, example embodiments are not limited thereto.

Each of the plurality of multiplication scaled input vectors MSX may be implemented as a row vector having an 'R'-times dimension of that of the corresponding input vector. For example, the first multiplication scaled input vector (e.g., $\overrightarrow{MSX_1}$) corresponding to the first input vector (e.g., $\overrightarrow{X_1}$) may include 'R × $n$' scaled input elements MSIE as illustrated in Equation 12 below.

(Equation 12)

$$\overrightarrow{MSX_1} \ni (2^0 \times x_{11}),(2^1 \times x_{11}),\ldots,(2^{R-1} \times x_{11}),$$

$$(2^0 \times x_{12}),(2^1 \times x_{12}),\ldots,(2^{R-1} \times x_{12}),$$

$$\ldots,$$

$$(2^0 \times x_{1n}),(2^1 \times x_{1n}),\ldots,(2^{R-1} \times x_{1n})$$

Referring to Equation 12, the plurality of multiplication scaled input elements MSIE included in the first multiplication scaled input vector $\overrightarrow{MSX_1}$ may be generated by multiplying each of the plurality of input elements included in the first input vector with BCQ resolution corresponding number of multiplication scale coefficients (e.g., R multiplication scale coefficients).

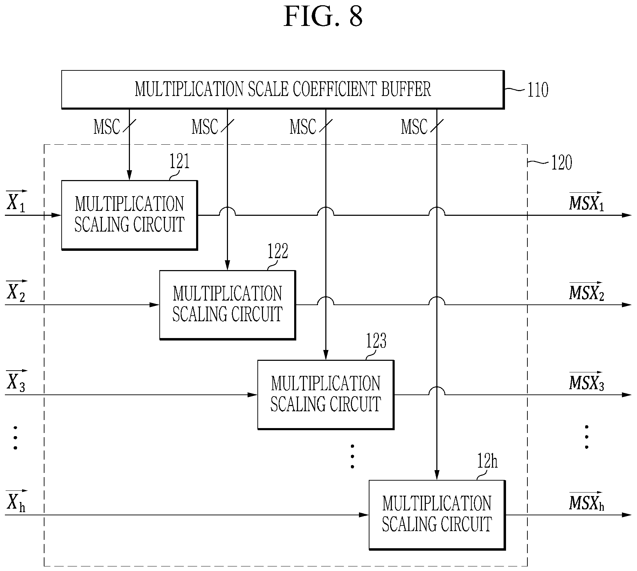

In this way, each of the second to (h)-th multiplication scaled input vectors (e.g., $\overrightarrow{MSX_2}$ to $\overrightarrow{MSX_h}$) may include 'R × $n$' multiplication scaled input elements. For concise description, detailed description of the multiplication scaled input elements included in each of the second to (h)-th scaled input vectors (e.g., $\overrightarrow{MSX_2}$ to $\overrightarrow{MSX_h}$) will be omitted. The configuration and operation of the input vector scaler 120 will be described in more detail with reference to FIGS. 8 to 10 below.

In example embodiments, the data type of each multiplication scaled input element MSIE may be floating point. However, example embodiments are not limited thereto.

The first data type converter 130 may receive the plurality of multiplication scaled input vectors MSX. For example, the first data type converter 130 may receive first to (h)-th multiplication scaled input vectors (e.g., $\overrightarrow{MSX_1}$ to $\overrightarrow{MSX_h}$). Each of the first to (h)-th multiplication scaled input vectors may include the plurality of multiplication scaled input elements MSIE.

The first data type converter 130 may extract an exponent EXP from each of the plurality of multiplication scaled input vectors MSX. For example, the first data type converter 130 may extract a first exponent from the first multiplication scaled input vector $\overrightarrow{MSX_1}$ and extract a second exponent from a second multiplication scaled input vector $\overrightarrow{MSX_2}$.

The first data type converter 130 may provide the extracted exponents EXP to the second data type converter 160. The first data type converter 130 may convert the data type of the plurality of multiplication scaled input vectors MSX to fixed point. For example, the first data type converter 130 may receive the plurality of multiplication scaled input vectors MSX and output a plurality of fixed point multiplication scaled input vectors MSXfxp. In some examples, the first data type converter 130 may generate first to (h)-th fixed point multiplication scaled input vectors (e.g., $\overrightarrow{MSX'_1}$ to $\overrightarrow{MSX'_h}$), respectively, based on the first to (h)-th multiplication scaled input vectors.

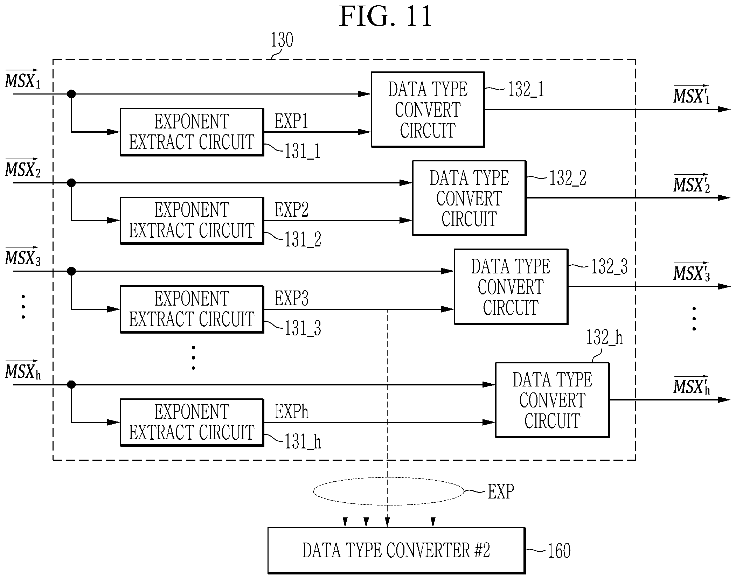

More specifically, the first data type converter 130 converts the data type of each of the plurality of multiplication scaled input elements MSIE included in the multiplication scaled input vector MSX to fixed point based on the extracted exponent. In this case, the first fixed point multiplication scaled input vector (e.g., $\overrightarrow{MSX'_1}$) may include elements of Equation 12 described above that are converted into fixed point form (hereinafter, the elements may be referred to as the fixed point multiplication scaled input elements MSIEfxp). The configuration and operation of the first data type converter 130 will be described in more detail below with reference to FIGS. 11 to 13.

The quantization sign bit buffer 140 may store the plurality of quantization sign bits QSB provided from the uniform BCQ circuit UBC. The quantization sign bit buffer 140 may provide the plurality of quantization sign bits QSB to the processing element array 150.

The processing element array 150 may receive the plurality of quantization sign bits QSB and the plurality of fixed point multiplication scaled input vectors MSXfxp. The processing element array 150 may calculate a plurality of fixed point partial products PSPfxp based on the plurality of fixed point scaled input elements MSIEfxp and the plurality of quantization sign bits QSB included in the plurality of fixed point scaled input vectors MSXfxp.

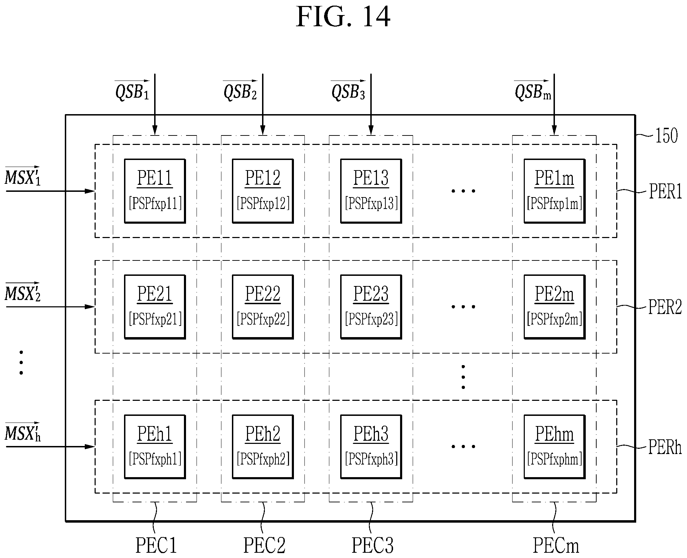

The processing element array 150 may include the plurality of processing elements arranged in a row direction and a column direction. Each of the plurality of processing elements may calculate different fixed point partial products PSPfxp. More detailed configuration and operation of each of the processing element arrays 150 is described in more detail below with reference to FIGS. 14 to 17.

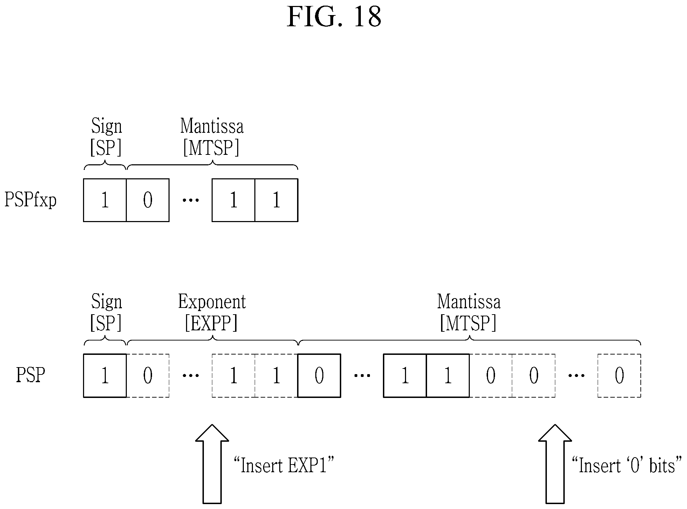

The second data type converter 160 may receive a plurality of exponents EXP from the first data type converter 130. The second data type converter 160 may receive the plurality of fixed point partial products PSPfxp from the processing element array 150. The second data type converter 160 may convert the data type of the plurality of fixed point partial products PSPfxp to floating point based on the plurality of exponents EXP. In some examples, the second data type converter 160 may output the plurality of partial products PSPs having the floating point data type. The detailed configuration and operation of the second data type converter 160 will be described in more detail below with reference to FIG. 18.

The common scale coefficient buffer 170 may store the plurality of common scale coefficients CSC provided from the uniform BCQ circuit UBC. The common scale coefficient buffer 170 may provide the plurality of common scale coefficients CSC to the common scaler 180.

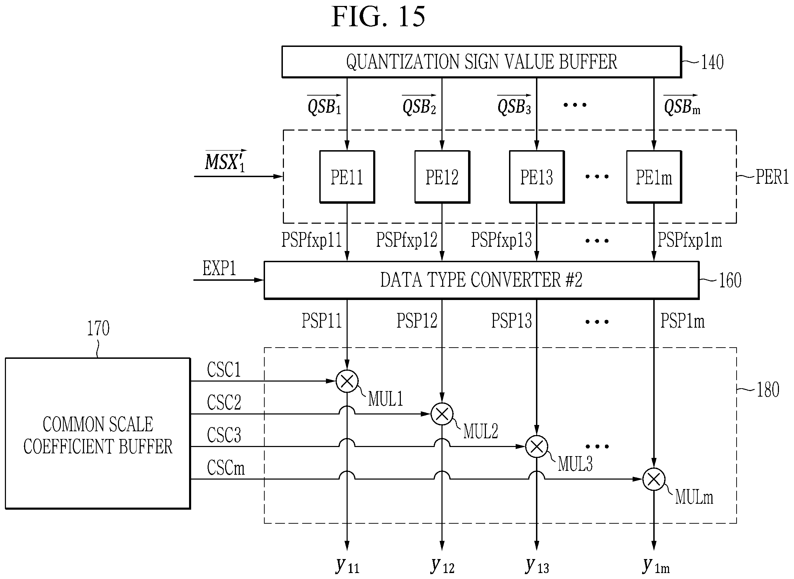

The common scaler 180 may receive the plurality of common scale coefficients CSC and the plurality of partial products PSP. The common scaler 180 may scale the plurality of partial products PSP based on the plurality of common scale coefficients CSC. For example, the common scaler 180 may generate the plurality of output vectors included in the output matrix YM by multiplying each of the plurality of partial products PSP with corresponding common scale coefficient CSC. The detailed configuration and operation of the common scaler 180 will be described in more detail below with reference to FIG. 15.

FIG. 8 is a block diagram illustrating a configuration of an input vector scaler of FIG. 7. Referring to FIGS. 1 to 8, the input vector scaler 120 may include first to (h)-th multiplication scaling circuits 121 to 12h.

Each of the first to (h)-th multiplication scaling circuits 121 to 12h may receive different input vectors. For example, each of the first to (h)-th multiplication scaling circuits 121 to 12h may receive the first to (h)-th input vectors (e.g., $\overrightarrow{X_1}$ to $\overrightarrow{X_h}$), respectively.

Each of the first to (h)-th multiplication scaling circuits 121 to 12h may sequentially receive the plurality of input elements. For example, the first multiplication scaling circuit 121 may sequentially receive $x_{11}$ to $x_{1n}$, and the (h)-th multiplication scaling circuit 12h may sequentially receive $x_{h1}$ to $x_{hn}$. The multiplication scaling circuits 121 to 12h may operate in parallel to each other.

Each of the first to (h)-th multiplication scaling circuits 121 to 12h may sequentially receive the plurality of multiplication scale coefficients MSC from the multiplication scale coefficient buffer 110. For example, each of the first to (h)-th multiplication scaling circuits 121 to 12h may receive the first-to-Rth multiplication scale coefficients MSC1 to MSCR (e.g., $2^0$ to $2^{R-1}$).

The first to (h)-th multiplication scaling circuits 121 to 12h may generate first to (h)-th multiplication scaled input vectors (e.g., $\overrightarrow{MSX_1}$ to $\overrightarrow{MSX_h}$) respectively. For example, the first multiplication scaling circuit 121 may generate the first multiplication scaled input vector (e.g., $\overrightarrow{MSX_1}$) based on the $x_{11}$ to $x_{1n}$, and the first-to-Rth multiplication scale coefficients MSC1 to MSCR.

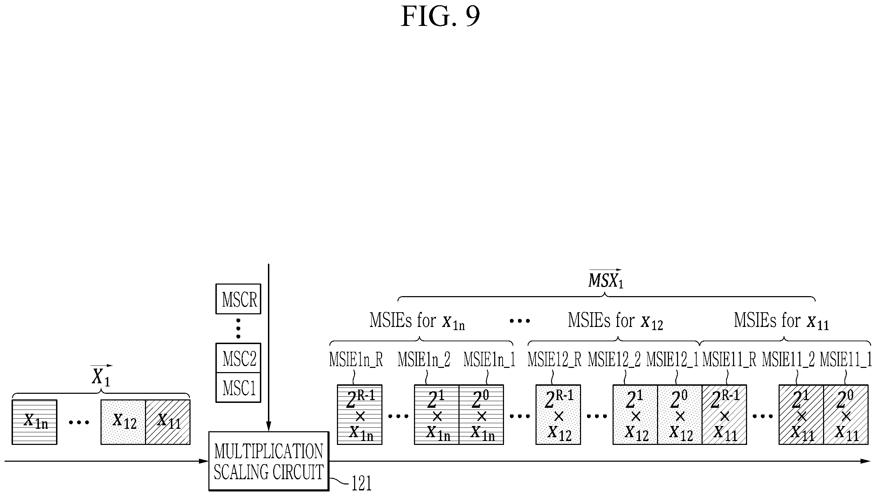

FIG. 9 is a diagram illustrating in more detail an operation of the multiplication scaling circuit of FIG. 8. Hereinafter, for a more concise description, the operation of the first multiplication scaling circuit 121 will be representatively described with reference to FIGS. 1 to 9. However, example embodiments are not limited thereto, and the second to (h)-th multiplication scaling circuits 122 to 12h may operate in a similar manner.

The first multiplication scaling circuit 121 may receive the first input vector (e.g., $\overrightarrow{X_1}$). In particular, the first multiplication scaling circuit 121 may sequentially receive $x_{11}$ to $x_{1n}$. The first multiplication scaling circuit 121 may sequentially receive the first-to-Rth multiplication scale coefficients MSC1 to MSCR. The first multiplication scaling circuit 121 may generate the plurality of multiplication scaled input elements MSIE by multiplying each of the received input elements with the first-to-Rth multiplication scale coefficients MSC1 to MSCR.

For example, the first multiplication scaling circuit 121 may generate the plurality of multiplication scaled input elements MSIE11_1 to MSIE11_R by multiplying the input element "$x_{11}$" with the first-to-Rth multiplication scale coefficients MSC1 to MSCR, respectively. This is illustrated in FIG. 9 as diagonal stripe.

Similarly, the first multiplication scaling circuit 121 may generate the multiplication scaled input elements MSIE12_1-MSIE12_R by multiplying the input element "$x_{12}$" by the first-to-Rth multiplication scale coefficients MSC1 to MSCR, respectively. This is illustrated in FIG. 9 as a dot pattern.

In this way, the first multiplication scaling circuit 121 will be able to sequentially calculate the plurality of multiplication scaled input elements MSIE corresponding to $x_{13}$ to $x_{1n}$.

The first multiplication scaling circuit 121 may sequentially output the plurality of multiplication scaled input elements MSIE. For example, the first multiplication scaling circuit 121 may provide the plurality of multiplication scaled input elements MSIE to the first data type converter 130.

In particular, according to various example embodiments of the present disclosure, the first multiplication scaling circuit 121 may generate the plurality of multiplication scaled input elements (e.g., multiplication scaled input elements (MSIEs for $x_{11}$) illustrated as diagonal stripes) based on one input element (e.g., $x_{11}$). In some cases, the first multiplication scaling circuit 121 may generate the plurality of multiplication scaled input elements MSIE by repeatedly using one input element. This may be achieved through the use of a buffer or memory. Therefore, according to various example embodiments, the input reuse of the matrix multiplier 100 may be increased or maximized, and thus, the number of times the matrix multiplier 100 receives input elements from the outside may be reduced or minimized. In this case, the number of times the matrix multiplier 100 accesses an external memory device that stores the input elements may be reduced or minimized, so the operation efficiency and operating speed of the matrix multiply device MMD may be improved.

FIG. 10 is a diagram illustrating in more detail a method of performing, by the multiplication scaling circuit of FIG. 8, a multiplication scaling operation. Hereinafter, for a more concise description, a method in which the first multiplication scaling circuit 121 generates one multiplication scaled input element MSIE will be representatively described with reference to FIGS. 1 to 10. However, example embodiments are not limited thereto.

The first multiplication scaling circuit 121 may receive an input element IE and the multiplication scale coefficient MSC.

The input element IE may have the floating point data type. Floating point arithmetic may represent a number using an integer of fixed precision (a signficand or mantissa) and an integer exponent of a fixed base (e.g. base 2). For example, the input element IE may include a sign part SP (e.g. representing whether the input element IE is positive or negative), an exponent part EXPP (e.g. representing an exponent of the input element IE), and a mantissa part MTSP (e.g. representing a mantissa (otherwise known as a significand) of the input element IE). The input element IE may be in a floating point data type of base 2.

The multiplication scale coefficient MSC may be a power of 2. For example, the multiplication scale coefficient MSC may be one of the $2°$ to $2^{R-1}$.

The first multiplication scaling circuit 121 may generate the multiplication scaled input element MSIE by multiplying the input element IE and the multiplication scale coefficient MSC. In this case, the first multiplication scaling circuit 121 may change the value of the exponent part EXPP of the input element IE to generate the multiplication scaled input element MSIE. For example, the first multiplication scaling circuit 121 may perform the floating point multiplication on the power of 2 by increasing the value of the exponent part EXPP of the input element IE as much as the size corresponding to the multiplication scale coefficient MSC.

For example, when the first multiplication scaling circuit 121 calculates the product of the input element IE and the k-th multiplication scale coefficient MSCk (e.g., $2^{k-1}$), the first multiplication scaling circuit 121 may generate the multiplication scaled input element MSIE by increasing the value of the exponent EXPP of the input element IE by 'k-1'.

For a more detailed example, when the lowest three bits of the exponent EXPP of the input element IE are '100' (e.g. representing $2^4$) and the first multiplication scaling circuit 121 calculates the product of the input element IE and the second multiplication scale coefficient MSC2 (e.g., $2^1$), the multiplication scaled input element MSIE may be generated by changing the lowest three bits of the exponent EXPP of the input element IE of the first multiplication scaling circuit 121 to '101' (e.g., by increasing the value of the exponent part EXPP by '1'), representing $2^5$.

Therefore, according to various example embodiments of the present disclosure, the input vector scaler 120 will be able to generate the first to (h)-th multiplication scaled input vectors (that is, $\overrightarrow{MSX_1}$ to $\overrightarrow{MSX_h}$) with a very small computational amount. However, example embodiments are not limited thereto.

FIG. 11 is a diagram illustrating a configuration of a first data type converter of FIG. 7. Referring to FIGS. 1 to 11, the first data type converter 130 may include first to (h)-th exponent extraction circuits 131_1 to 131_h and first to (h)-th data type conversion circuits 132_1 to 132_h.

Each of the first to (h)-th exponent extraction circuits 131_1 to 131_h may receive different multiplication scaled input vectors MSX. For example, the first to (h)-th exponent extraction circuits 131_1 to 131_h may receive first to (h)-th multiplication scaled input vectors (e.g., $\overrightarrow{MSX_1}$ to $\overrightarrow{MSX_h}$) respectively.

Each of the first to (h)-th exponent extraction circuits 131_1 to 131_h may extract an exponent from a plurality of received multiplication scaled input elements MSIE. For example, the first exponent extraction circuit 131_1 may extract a first exponent EXP1 from the multiplication scaled input elements MSIE included in the first multiplication scaled input vector (e.g., $\overrightarrow{MSX_1}$), and the second exponent extraction circuit 131_2 may extract a second exponent EXP2 from the multiplication scaled input elements MSIE included in the second multiplication scaled input vector (e.g., $\overrightarrow{MSX_2}$). In this way, the first to (h)-th exponent extraction circuits 131_1 to 131_h may extract first to (h)-th exponents EXP1 to EXPh, respectively.

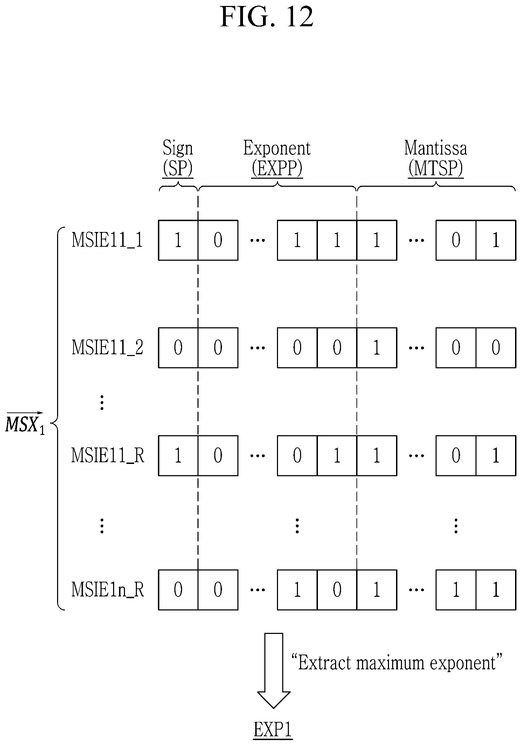

The first to (h)-th exponent extraction circuits 131_1 to 131_h may provide the extracted exponents to the first to (h)-th data type conversion circuits 132_1 to 132_h, respectively. Alternatively or additionally, each of the first to (h)-th exponent extraction circuits 131_1 to 131_h may provide the extracted exponent to the second data type converter 160. The detailed operation of the first to (h)-th exponent extraction circuits 131_1 to 131_h will be described in more detail below with reference to FIG. 12.

The first to (h)-th data type conversion circuits 132_1 to 132_h may receive the first to (h)-th exponents EXP1 to EXPh, respectively. The first to (h)-th data type conversion circuits 132_1 to 132_h may receive the first to (h)-th multiplication scaled input vectors (e.g., $\overrightarrow{MSX_1}$ to $\overrightarrow{MSX_h}$), respectively.

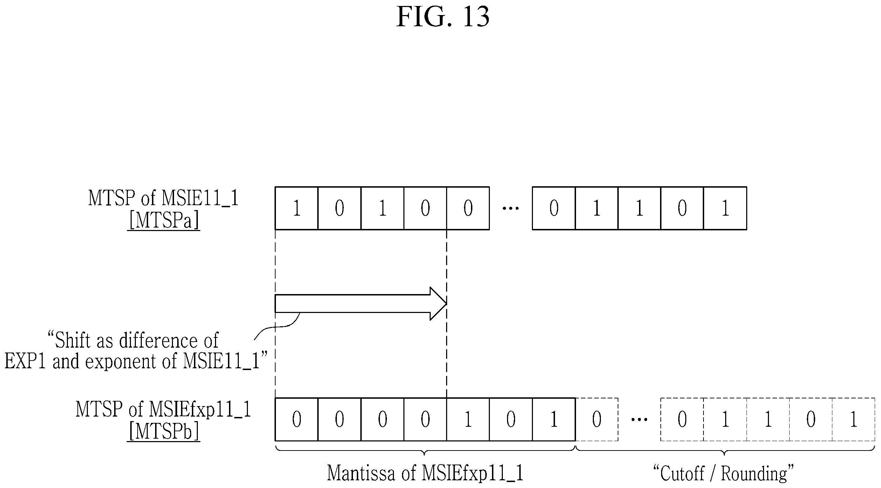

Each of the first to (h)-th data type conversion circuits 132_1 to 132_h may convert the data type of the received multiplication scaled input vector into fixed point based on the received exponent. The first to (h)-th data type conversion circuits 132_1 to 132_h may output the first to (h)-th fixed point multiplication scaled input vectors (e.g., $\overrightarrow{MSX'_1}$ to $\overrightarrow{MSX'_h}$), respectively. For example, the first data type conversion circuit 132_1 may convert each of the multiplication scaled input elements MSIE included in the first multiplication scaled input vector MSX into the fixed point data type based on the first exponent EXP1. The detailed operation of the first to (h)-th data type conversion circuits 132_1 to 132_h will be described in more detail below with reference to FIG. 13.

FIG. 12 is a diagram illustrating an operation of an exponent extraction circuit of FIG. 11. Hereinafter, for a more concise description, the operation of the first exponent extraction circuit 131_1 will be representatively described. However, example embodiments are not limited thereto.

Referring to FIGS. 1 to 12, the first exponent extraction circuit 131_1 may receive the plurality of multiplication scaled input elements MSIE. For example, the first exponent extraction circuit 131_1 may receive multiplication scaled input elements MSIE11_1 to MSIE1n_R described above with reference to FIG. 9.

The data type of each of the plurality of multiplication scaled input elements MSIE may be floating point. For example, each of the multiplication scaled input elements MSIE11_1 to MSIE1n_R may include the sign part SP, the exponent part EXPP, and the mantissa part MTSP. The floating point format may use base 2.

The first exponent extraction circuit 131_1 may identify the largest value among the values of the exponent part EXPP of each of the received plurality of multiplication scaled input elements MSIE. In this case, the first exponent extraction circuit 131_1 may determine the identified value as the first exponent EXP1. That is, the first exponent extraction circuit 131_1 may extract the largest exponent among the exponents of the multiplication scaled input elements MSIE11_1 to MSIE1n_R as the first exponent EXP1.

For a more concise description, various example embodiments in which the first exponent extraction circuit 131_1 extracts the largest value among the values of the exponent part EXPP of the plurality of multiplication scaled input elements MSIE is representatively described in FIG. 12, but the scope of the disclosure is not limited thereto. For example, the first exponent extraction circuit 131_1 may be implemented to extract the smallest value among the values of the exponent part EXPP of the plurality of multiplication scaled input elements MSIE.

FIG. 13 is a diagram illustrating an operation of a data type conversion circuit of FIG. 11. Hereinafter, for a more concise description, the operation of the first data type conversion circuit 132_1 will be representatively described. However, example embodiments are not limited thereto.

Referring to FIGS. 1 to 13, the first data type conversion circuit 132_1 may receive the plurality of multiplication scaled input elements MSIE. For example, the first data type conversion circuit 132_1 may receive the multiplication scaled input elements MSIE11_1 to MSIE1n_R.

The first data type conversion circuit 132_1 may receive the first exponent EXP1. The first data type conversion circuit 132_1 may convert the data type of the plurality of received multiplication scaled input elements MSIE to fixed point based on the first exponent EXP1. That is, the first data type conversion circuit 132_1 may convert each of the multiplication scaled input elements MSIE11_1 to MSIE1n_R to fixed point multiplication scaled input elements MSIEfxp11_1 to MSIEfxp1n_R. However, hereinafter, for a more concise description, the operation of the first data type conversion circuit 132_1 that converts the multiplication scaled input element MSIE11_1 to a fixed point multiplication scaled input element MSIEfxp11_1 will be representatively described.

The first data type conversion circuit 132_1 may shift the mantissa part of the multiplication scaled input element MSIE11_1 (hereinafter, referring to a first mantissa part MTSPa) towards a least significant bit (LSB) direction, by as much as the difference between the exponent of the multiplication scaled input element MSIE11_1 and the first exponent EXP1. For example, when the difference between the exponent of the multiplication scaled input element MSIE11_1 and the first exponent EXP1 is '4', the first data type conversion circuit 132_1 may insert 'four' '0' bits into a most significant bit (MSB) place of the first mantissa part MTSPa.

The first data type conversion circuit 132_1 may determine a mantissa part of the fixed point multiplication scaled input element MSIEfxp11_1 (hereinafter, referred to as a second mantissa part MTSPb) based on the shifted first mantissa part MTSPa. For example, the first data type conversion circuit 132_1 may cut-off lower bits of the shifted first mantissa part MTSPa according to a code length of the second mantissa part MTSPb. Alternatively, the first data type conversion circuit 132_1 may round based on various types of rounding algorithms such as "nearest even rounding" on the lower bits of the shifted first mantissa part MTSPa according to the code length of the second mantissa part MTSPb. However, example embodiments are not limited thereto. That is, the mantissa mantissa part of the fixed point multiplication scaled input element MSIEfxp11_1 may be set to a predefined maximum length. This may require shifted first mantissa part MTSPa to be shortened and/or rounded.

In example embodiments, the code length of the first mantissa part MTSPa may be '10-bit' or '23-bit'. However, example embodiments are not limited thereto.

In example embodiments, the code length of the second mantissa part MTSPb may be '7-bit'. However, example embodiments are not limited thereto.

In example embodiments, the data type of each of the plurality of fixed point multiplication scaled input elements MSIEfxp may be INT8 (8-bit integer). However, example embodiments are not limited thereto. The fixed point multiplication scaled input elements MSIEfxp may each include the sign part of the corresponding multiplication scaled input elements MSIE11_1 to MSIE1n_R and the second mantissa mantissa part.

FIG. 14 is a block diagram illustrating in more detail a configuration of a processing element array of FIG. 7. Referring to FIGS. 1 to 14, the processing element array 150 may include a plurality of processing elements PE arranged in a row direction and a column direction. Hereinafter, for a more concise description, it is assumed that the plurality of processing elements PE are arranged along (h) rows and (m) columns. In addition, the processing element disposed in the (i)-th row and (j)-th column of the processing element array 150 will be referred to as "PEij". For example, the processing element arranged in the first row and second column of processing element array 150 will be referred to as "PE12."

The processing element array 150 may include first to (h)-th processing element rows PER1 to PERh. Each of the first to (h)-th processing element rows PER1 to PERh may include the plurality of processing elements PE. For example, the first processing element row PER1 may include processing elements PE11 to PE1m.

The processing element array 150 may include first to (m)-th processing element columns PEC1 to PECm. Each of the first to (m)-th processing element columns PEC1 to PECm may include the plurality of processing elements PE. For example, the first processing element column PEC1 may include processing elements PE11 to PEh1.

Each of the plurality of processing element rows PER may receive a different fixed point multiplication scaled input vector MSXfxp. For example, the first to (h)-th processing element rows PER1 to PERh may receive the first to (h)-th fixed point multiplication scaled input vectors (that is, $\overrightarrow{MSX'_1}$ to $\overrightarrow{MSX'_h}$) respectively.

The processing elements included in the same processing element row may receive the same fixed point multiplication scaled input vector. For example, each of the processing elements PE11 to PE1m may receive the first fixed point multiplication scaled input vector (e.g., $\overrightarrow{MSX'_1}$).

Each of the plurality of processing element columns PEC may receive a different quantization sign bit vector $\overrightarrow{QSB}$ from the quantization sign bit buffer 140. For example, the first to (m)-th processing element columns PEC1 to PECm may receive the first to (m)-th quantization sign bit vectors (e.g., $\overrightarrow{QSB_1}$ to $\overrightarrow{QSB_m}$) respectively.

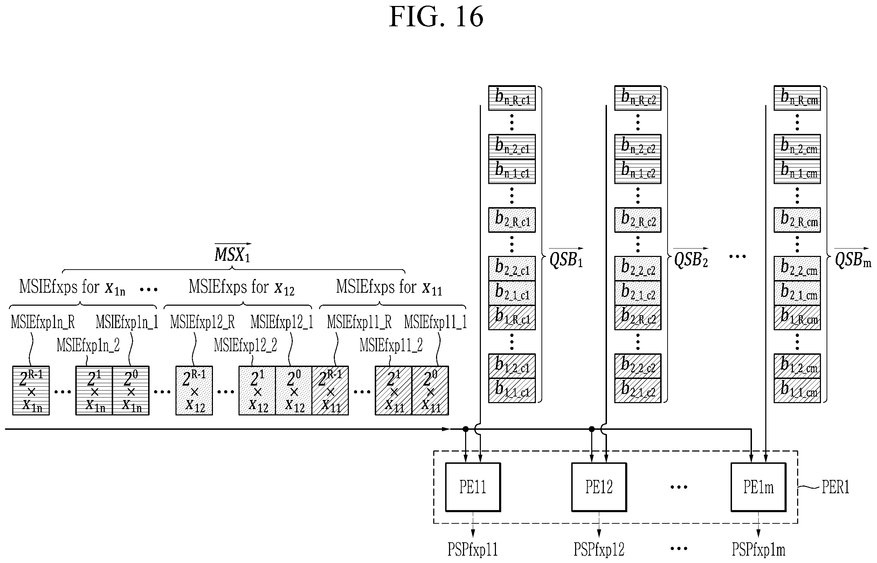

The first to (m)-th quantization sign bit vectors (e.g., $\overrightarrow{QSB_1}$ to $\overrightarrow{QSB_m}$) may include a plurality of quantization sign bits QSB for different columns of the weight matrix WM. For example, the j-th quantization sign bit vector (e.g., $\overrightarrow{QSB_j}$) may include a plurality of quantization sign bits QSB for the (j)-th column vector of the weight matrix WM. More specifically, the j-th quantization sign bit vector (e.g., $\overrightarrow{QSB_j}$) may include the quantization sign bits QSB included in $\overrightarrow{QSB_{1\_cj}}$ to $\overrightarrow{QSB_{R\_cj}}$ described with reference to Equation 9.1 above. Each of $\overrightarrow{QSB_{1\_cj}}$ to $\overrightarrow{QSB_{R\_cj}}$ may include n quantization sign bits QSB. Each quantization sign bit vector (e.g., $\overrightarrow{QSB_j}$) may therefore include n × R quantization sign bits QSB. The first to (m)-th quantization sign bit vectors (e.g., $\overrightarrow{QSB_1}$ to $\overrightarrow{QSB_m}$) are described in more detail below with reference to FIG. 16.

The processing elements included in the same processing element column may receive the same quantization sign bit vector. For example, each of the processing elements PE11 to PEh1 may receive the first quantization sign bit vector (e.g., $\overrightarrow{QSB_1}$), and each of the processing elements PE12 to PEh2 may receive the second quantization sign bit vector (e.g., $\overrightarrow{QSB_2}$). That is, the processing elements included in the same processing element column may receive the same quantization sign bits QSB.

Each of the plurality of processing elements PE may calculate a different fixed point partial product PSPfxp based on the received fixed point multiplication scaled input vector MSXfxp and the quantization sign bit vector. That is, according to some example embodiments, one processing element PE may calculate one fixed point partial product PSPfxp. For example, the processing element PEij may calculate a fixed point partial product PSPfxpij. Hereinafter, the method in which the fixed point partial product PSPfxp is calculated in each processing element PE will be described in more detail.

FIG. 15 is a block diagram illustrating in more detail some operations of the matrix multiplier of FIG. 7. Hereinafter, the operation of the matrix multiplier 100 on the first fixed point multiplication scaled input vector (e.g., $\overrightarrow{MSX'_1}$) will be representatively described, but example embodiments are not limited thereto.

For example, the matrix multiplier 100 may operate in a similar manner for the second to (h)-th fixed point multiplication scaled input vectors (e.g., $\overrightarrow{MSX'_2}$ to $\overrightarrow{MSX'_h}$).

Referring to FIGS. 1 to 15, the first processing element row PER1 may receive the first fixed point multiplication scaled input vector (that is, $\overrightarrow{MSX'_1}$). For example, each of the processing elements PE11 to PE1m may receive fixed point multiplication scaled input elements MSIEfxp11_1 to MSIEfxp1n_R.

Each processing element PE11 to PE1m may receive a corresponding quantization sign bit vector. For example, the processing elements PE11 to PE1m may receive the first to (m)-th quantization sign bit vectors (e.g., $\overrightarrow{QSB_1}$ to $\overrightarrow{QSB_m}$) respectively.

Each processing element PE11 to PE1m may calculate a corresponding fixed point partial product PSPfxp. For example, the processing elements PE11 to PE1m may calculate fixed point partial products PSPfxp11 to PSPfxp1m respectively.

The second data type converter 160 may receive the first exponent EXP1. The second data type converter 160 may receive the fixed point partial products PSPfxp11 to PSPfxp1m from the first processing element row PER1. The second data type converter 160 may convert the fixed point partial products PSPfxp1 1 to PSPfxp1m to the floating point data type based on the first exponent EXP1. For example, the second data type converter 160 may convert the fixed point partial products PSPfxp1 1 to PSPfxp1m to the partial products PSP11 to PSP1m respectively.

The common scaler 180 may include first to m-th multiplication operation circuits MUL1 to MULm. The first to m-th multiplication operation circuits MUL1 to MULm may receive partial products PSP11 to PSP1m, respectively. The first to m-th multiplication operation circuits MUL1 to MULm may receive first to m-th common scale coefficients CSC1 to CSCm, respectively, from the common scale coefficient buffer 170. Each of the first to m-th common scale coefficients CSC1 to CSCm may correspond to a different column vector of the weight matrix WM. For example, the first to m-th common scale coefficients CSC1 to CSCm may correspond $s_{c1}$ to $s_{cm}$ respectively, described with reference to Equations 9 to 11 above.

Each of the first to m-th multiplication operation circuits MULL to MULm may calculate an output element based on the received partial product and common scale coefficient. For example, the first multiplication operation circuit MULL may calculate $y_{11}$ by multiplying a partial product PSP11 and a first common scale coefficient CSC1. Similarly, the second multiplication operation circuit MUL2 may calculate $y_{12}$ by multiplying a partial product PSP12 and a second common scale coefficient CSC2.

In this way, the matrix multiplier 100 may use the processing elements included in the first processing element row PER1 to calculate the output elements (e.g., $y_{11}$ to $y_{1m}$) corresponding to the first input vector (e.g., $\overrightarrow{X_1}$). Similarly, the matrix multiplier 100 may use the processing elements included in the second processing element row PER2 to calculate the output elements (e.g., $y_{21}$ to $y_{2m}$) corresponding to the second input vector (e.g., $\overrightarrow{X_2}$).

In example embodiments, the first to m-th multiplication operation circuits MULL to MULm may also generate a plurality of output elements by multiplying the first to m-th common scale coefficients CSC1 to CSCm with partial products generated based on the second processing element row PER2 (e.g., partial products PSP21 to PSP2m) respectively. For example, the first multiplication operation circuit MULL may generate the output element "$y_{21}$" by multiplying the partial product PSP21 and the first common scale coefficient CSC1. In some examples, the first to m-th multiplication operation circuits MULL to MULm may multiply the first to m-th common scale coefficients CSC1 to CSCm by the partial products generated based on the first to m-th processing element columns PEC1 to PECm, respectively. That is, the first two m-th multiplication circuits MULL to MULm may operate on the partial products ouput from processing element each row (e.g. each multiplication circuit may operate on a corresponding column of the processing element array). However, example embodiments are not limited to a specific implementation method of the common scaler 180.

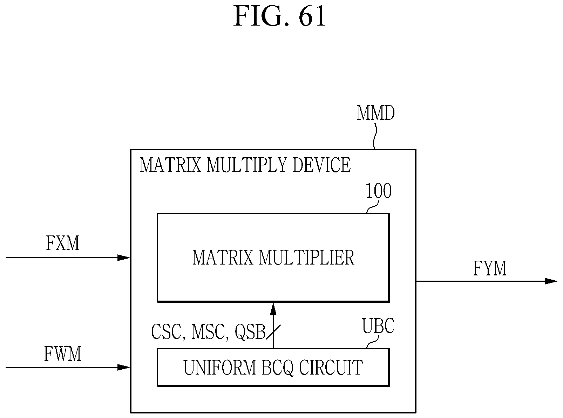

In example embodiments, when the number of columns of the weight matrix WM is greater than the number of columns of the processing element array 150 or the number of rows of the weight matrix WM is greater than the number of rows of the processing element array 150, the matrix multiplier 100 may calculate the output elements based on various tiling techniques. The tiling technique will be described in more detail below with reference to FIGS. 61 to 64.

FIG. 16 is a block diagram illustrating in more detail an operation of a first processing element row of FIG. 15. That is, hereinafter, the operation of the first processing element row PER1 will be representatively described with reference to FIGS. 1 to 16. However, example embodiments are not limited thereto, and the second to (h)-th processing element rows PER2 to PERh may also operate in a similar manner.

The first processing element row PER1 may receive the first fixed point multiplication scaled input vector (e.g., $\overrightarrow{MSX'_1}$). For example, the first processing element row PER1 may sequentially receive the fixed point multiplication scaled input elements MSIEfxp11_1 to MSIEfxp1n_R. In this case, the plurality of fixed point multiplication scaled input elements MSIEfxp11_1 to MSIEfxp1n_R may correspond to each of the plurality of multiplication scaled input elements MSIE11_1 to MSIE1n_R described above with reference to FIG. 9.

The processing elements PE11 to PE1m may receive the first to (m)-th quantization sign bit vectors (e.g., $\overrightarrow{QSB_1}$ to $\overrightarrow{QSB_m}$), respectively. Each of the first to (m)-th quantization sign bit vectors (e.g., $\overrightarrow{QSB_1}$ to $\overrightarrow{QSB_m}$) may include a plurality of quantization sign bits QSB generated based on different column vectors of the weight matrix WM.

For a more detailed example, the first quantization sign bit vector (e.g., $\overrightarrow{QSB_1}$) may include $b_{1\_1\_c1}$ to $b_{n\_R\_c1}$. In this case, $b_{1\_1\_c1}$ to $b_{1\_R\_c1}$ may respectively correspond to fixed point multiplication scaled input elements MSIEfxp11_1 to MSIEfxp11_R (e.g., fixed point multiplication scaled input elements for $x_{11}$); and $b_{2\_1\_c1}$ to $b_{2\_R\_c1}$ may respectively correspond to fixed point multiplication scaled input elements MSIEfxp12_1 to MSIEfxp12_R (e.g., fixed point multiplication scaled input elements for $x_{12}$). Similarly, $b_{n\_1\_c1}$ to $b_{n\_R\_c1}$ may respectively correspond to fixed point multiplication scaled input elements MSIEfxp1n_1 to MSIEfxp1n_R (e.g., fixed point multiplication scaled input elements for $x_{1n}$).

The processing element PE11 may sequentially receive a plurality of pairs of quantization sign bit QSB and fixed point multiplication scaled input element MSIEfxp, corresponding to each other. Each pair may comprise a quantization sign bit QSB and a corresponding fixed point multiplication scaled input element MSIEfxp. For example, the processing element PE11 may sequentially receive $b_{1\_1\_c1}$ to $b_{1\_R\_c1}$ corresponding to the fixed point scale multiplication scaled input elements MSIEfxp for $x_{11}$, and then sequentially receive $b_{2\_1\_c1}$ to $b_{2\_R\_c1}$ corresponding to the fixed point multiplication scaled input elements MSIEfxp for $x_{12}$. In this way, the processing element PE11 may sequentially receive $b_{1\_1\_c1}$ to $b_{n\_R\_c1}$ corresponding to the fixed point multiplication scaled input elements MSIEfxp for $x_{1n}$.

The processing element PE11 may calculate the fixed point partial product PSPfxp11 based on the order of the quantization sign bits QSB and the plurality of fixed point multiplication scaled input elements MSIEfxp being received. For example, the processing element PE11 may calculate the fixed point partial product PSPfxp11 by subtracting a value obtained by summing the fixed point multiplication scaled input elements corresponding to the quantization sign bits QSB representing '1' among the fixed point multiplication scaled input elements MSIEfxp11_1 to MSIEfxp1n_R, from a value obtained by summing the fixed point scaled input elements corresponding to the quantization sign bit QSB representing '0' among the fixed point scaled input elements MSIEfxp11_1 to MSIEfxp1n_R.

Similarly, the processing element PE1j may receive the quantization sign bits (e.g., $b_{1\_1\_cj}$ to $b_{n\_R\_cj}$) included in the j-th quantization sign bit vector (e.g., $\overrightarrow{QSB_j}$). The processing element PE1j may receive the plurality of fixed point multiplication scaled input elements MSIEfxp included in the first fixed point multiplication scaled input vector (e.g., $\overrightarrow{MSX'_1}$). The processing element PE1j may calculate the fixed point partial product PSPfxp1j based on the j-th quantization sign bit vector (e.g., $\overrightarrow{QSB_j}$) and the first fixed point multiplication scaled input vector (e.g., $\overrightarrow{MSX'_1}$).

For a more detailed example, the processing element PE may calculate the fixed point partial product PSPfxp according to Equation 13 below.

(Equation 13)

$$PSPfxp = \sum MSIEfxp \times (-1)^{QSB}$$

Referring to Equation 13, MSIEfxp and QSB may represent a fixed point multiplication scaled input element MSIEfxp and quantization sign bit QSB pair provided to the processing element PE. That is, the processing element PE may calculate the fixed point partial product PSPfxp by sequentially performing calculations of adding or subtracting the value of the fixed point multiplication scaled input element MSIEfxp based on the received quantization sign bit QSB. However, example embodiments are not limited thereto.

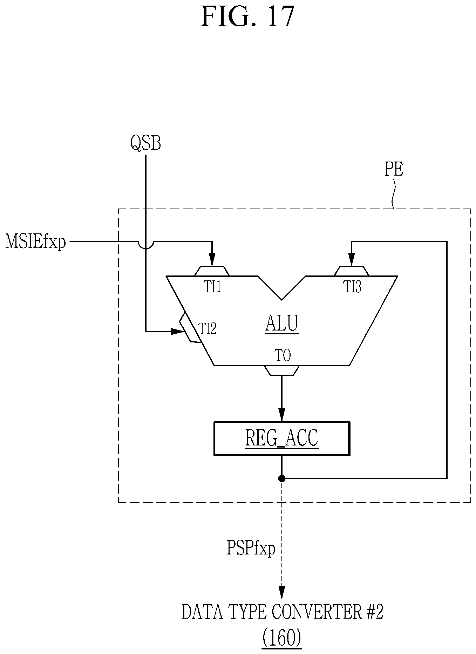

FIG. 17 is a diagram illustrating a configuration of one of the processing elements of FIG. 16 implemented according to various example embodiments. Referring to FIGS. 1 to 17, the processing element PE may include an arithmetic logic unit ALU and an accumulation register REG_ACC.

The arithmetic logic unit ALU may include first to third input terminals TI1 to TI3 and an output terminal TO. The first input terminal TI1 may sequentially receive the plurality of fixed point multiplication scaled input elements MSIEfxp. The second input terminal TI2 may sequentially receive the plurality of quantization sign bits QSB. The third input terminal TI3 may be connected to the accumulation register REG_ACC.

When the value received by the second input terminal TI2 is '0', the arithmetic logic unit ALU may store the sum of the values received by the first input terminal TI1 and the third input terminal TI3 in the accumulation register REG_ACC through the output terminal TO. On the other hand, when the value received by the second input terminal TI2 is '1', the arithmetic logic unit ALU may store a value obtained by subtracting the value provided to the first input terminal TI1 from the value provided to the third input terminal TI3 in the accumulation register REG_ACC through the output terminal TO. That is, when receiving a quantization sign bit QSB at the second terminal TI2 equal to '0' the arithmetic logic unit ALU may calculate the sum of the values input into the first and third terminals TI1 and TI3 and output the sum through output terminal TO. Similarly, when receiving when receiving a quantization sign bit QSB at the second terminal TI2 equal to '1' the arithmetic logic unit ALU may subtract the value input into the first terminal TI1 from the value input into the third terminal TI3 and output the resulting value through output terminal TO. The accumulation register may store the most recently received value output from the arithmetic logic unit ALU and feed that value back to the third input terminal TI3.

In this way, the processing element PE will be able to store the fixed point partial product PSPfxp calculated according to Equation 13 described above in the accumulation register REG_ACC. In this case, the fixed point partial product PSPfxp stored in the accumulation register REG_ACC may be provided to the second data type converter 160. However, example embodiments are not limited to a specific method in which the processing element PE performs the calculation and a specific configuration method of the processing element PE.

In example embodiments, the processing element PE may not include any '1-bit adder' to perform the multiplication operation on the multiplication scale coefficient MSC. That is, according to some example embodiments, since the multiplication scaled input element MSIE is provided to the processing element array 150, each processing element PE may be implemented not to perform the calculation on the scale coefficient MSC. In this case, instead of each processing element PE including the circuit element for performing the multiplication operation for the multiplication scale coefficient MSC, only one multiplication scaling circuit 121 may be included for each processing element row PER, so the size and production cost of the matrix multiplier 100 may be reduced.

FIG. 18 is a diagram illustrating an operation of the second data type converter of FIG. 7. Hereinafter, for a more concise description, the operation of the second data type converter 160, which receives one fixed point partial product PSPfxp generated based on the first input vector (e.g., $\overrightarrow{X_1}$) and outputs one partial product PSP, will be representatively described. However, example embodiments are not limited thereto.

Referring to FIGS. 1 to 18, the second data type converter 160 may receive the first exponent EXP1 from the first data type converter 130. The second data type converter 160 may receive a fixed point partial product PSPfxp from one processing element PE. In this case, the fixed point partial product PSPfxp may include a sign part SP and a mantissa part MTSP.

The second data type converter 160 may generate a partial product PSP by converting the data type of the fixed point partial product PSPfxp to floating point. For example, the second data type converter 160 may add (e.g. insert) an exponent part EXPP to the fixed point partial product PSPfxp. The second data type converter 160 may determine the exponent part EXPP of the partial product PSP so that the exponent part EXPP of the partial product PSP corresponds to the first exponent EXP1.

The second data type converter 160 may add a plurality of '0' bits to a least significant bit (LSB) place of the mantissa part MTSP of the partial product PSP according to the difference in code lengths of the mantissa part of the partial product PSP and the mantissa part of the fixed point partial product PSPfxp. However, example embodiments are not limited thereto.

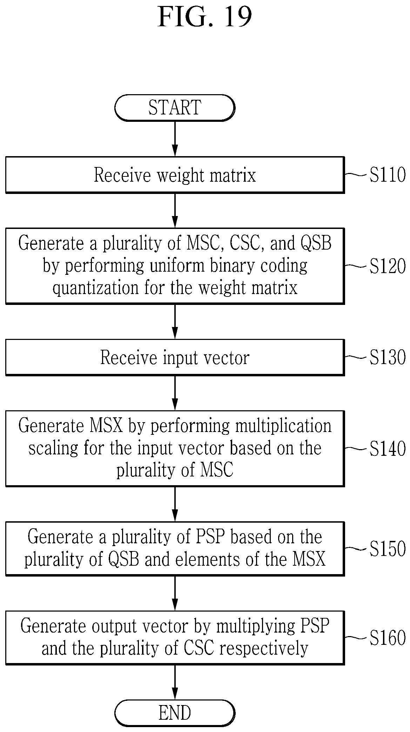

FIG. 19 is a flowchart illustrating the operation of the matrix multiply device of FIG. 1. Hereinafter, referring to FIGS. 1 to 19, the operation of the matrix multiply device MMD that receives one input vector (e.g., $\overrightarrow{X_1}$) and outputs one output vector (e.g., $\overrightarrow{Y_1}$) will be described.

In operation S110, the matrix multiply device MMD may receive the weight matrix WM. For example, the uniform BCQ circuit UBC may receive a plurality of weights (e.g., $w_{11}$ to $w_{nm}$) included in the weight matrix WM.

In operation S120, the matrix multiply device MMD performs the uniform binary coding quantization for the weight matrix WM to generate the plurality of multiplication scale coefficients MSC, the plurality of common scale coefficients CSC, and the plurality of quantization sign bits QSB. For example, the uniform BCQ circuit UBC may generate the plurality of multiplication scale coefficients MSC, one common scale coefficient CSC, and a plurality of quantization sign bits QSB for each weight. The uniform BCQ circuit UBC may provide the plurality of multiplication scale coefficients MSC, the plurality of common scale coefficients CSC, and the plurality of quantization sign bits QSB to the matrix multiplier 100. In this case, the plurality of multiplication scale coefficients MSC may be stored in the multiplication scale coefficient buffer 110, the plurality of common scale coefficients CSC may be stored in the common scale coefficient buffer 170, and the plurality of quantization sign bits QSB may be stored in the quantization sign bit buffer 140. However, example embodiments are not limited thereto.

In operation S130, the matrix multiply device MMD may receive an input vector (e.g., $\overrightarrow{X_1}$). For example, the matrix multiplier 100 may receive the plurality of input elements (e.g., $x_{11}$ to $x_{1n}$) included in the input vector.

In example embodiments, the matrix multiply device MMD may perform operation S130 regardless of the order of steps S110 to S120. For example, the matrix multiply device MMD may perform operation S130 followed by steps S110 to S120, or perform operation S130 between steps S110 and S120.

In operation S140, the matrix multiply device MMD may generate the multiplication scaled input vector MSX by performing the multiplication scaling for the input vector based on the plurality of multiplication scale coefficients MSC. For example, the input vector scaler 120 may perform multiplication scaling on each of the plurality of input elements based on the plurality of multiplication scale coefficients MSC provided from the multiplication scale coefficient buffer 110. More specifically, the input vector scaler 120 may multiply each of the plurality of input elements with the plurality of multiplication scale coefficients MSC to generate the plurality of multiplication scaled input elements MSIE.

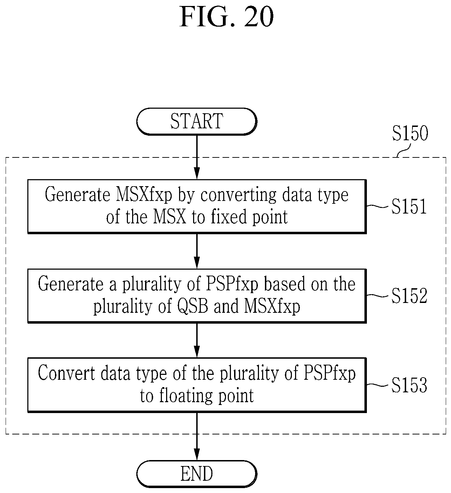

In operation S150, the matrix multiply device MMD may generate the plurality of partial products PSP based on the elements included in the multiplication scaled input vector MSX (e.g., the plurality of multiplication scaled input elements MSIE) and the plurality of quantization sign bits QSB. Operation S150 is described in more detail below with reference to FIG. 20.

In operation S160, the matrix multiply device MMD may generate the output vector (e.g., $\overrightarrow{Y_1}$) by multiplying the plurality of partial products PSP and the plurality of common scale coefficients CSC, respecitvely. For example, the matrix multiplier 100 may generate one output element (e.g., $y_{11}$) by multiplying the partial product PSP11 with the first common scale coefficient CSC1. Similarly, the matrix multiplier 100 may generate one output element (e.g., $y_{12}$) by multiplying the partial product PSP12 with the second common scale coefficient CSC2. In this way, the matrix multiplier 100 may generate the plurality of output elements included in the output vector.

FIG. 20 is a flowchart illustrating in more detail operation S150 of FIG. 19. Referring to FIGS. 1 to 20, operation S150 may include the following operations S151 to S153.

In operation S151, the matrix multiplier 100 may convert the data type of the multiplication scaled input vector MSX to fixed point and generate the fixed point multiplication scaled input vector MSXfxp. For example, the first data type converter 130 may convert each data type of the plurality of multiplication scaled input elements MSIE to fixed point, and generate the plurality of fixed point multiplication scaled input elements MSIEfxp.

In operation S152, the matrix multiplier 100 may generate the plurality of fixed point partial products PSPfxp based on the plurality of quantization sign bits QSB and the fixed point multiplication scaled input vector MSXfxp. For example, the matrix multiplier 100 may generate the fixed point partial product PSPfxp by sequentially adding or subtracting each of the fixed point multiplication scaled input elements MSIEfxp based on the plurality of quantization sign bits QSB.

In operation S153, the matrix multiplier 100 may change the data type of the plurality of fixed point partial products PSPfxp to floating point. For example, the second data type converter 160 may generate the plurality of partial products PSP based on the plurality of fixed point partial products PSPfxp.

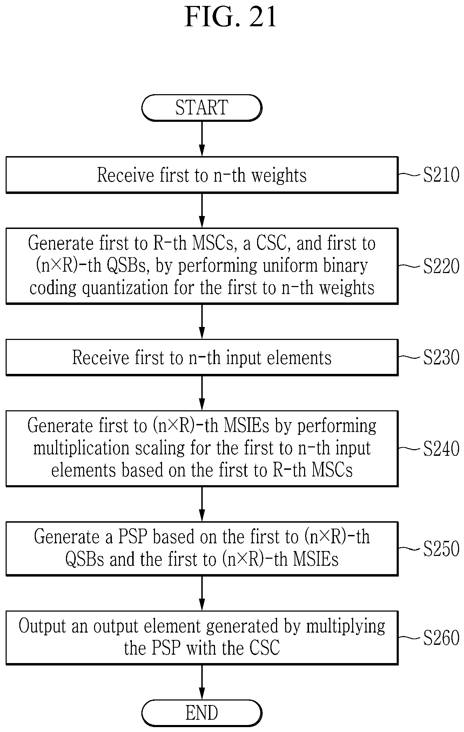

FIG. 21 is a flowchart illustrating the operation of the matrix multiply device of FIG. 1. Hereinafter, referring to FIGS. 1 to 18 and 21, the operation of the matrix multiply device MMD that receives one input vector (e.g., $\overrightarrow{X_1}$) and generates one input element (e.g., $y_{11}$) will be described.

In operation S210, the matrix multiply device MMD may receive the first to (n)-th weights. For example, the uniform BCQ circuit UBC may receive the weights (e.g., $w_{11}$ to $w_{n1}$) corresponding to one column of the weight matrix WM.

In operation S220, the matrix multiply device MMD may generate the first to (R)-th multiplication scale coefficients MSC, one common scale coefficient CSC, and the first-to-(NxR)th quantization sign bits QSB by performing the uniform binary coding quantization for the first to (n)-th weights.

In operation S230, the matrix multiply device MMD may receive the first to (n)-th input elements. For example, the matrix multiplier 100 may receive the plurality of input elements (e.g., $x_{11}$ to $x_{1n}$) included in one input vector.

In example embodiments, the matrix multiply device MMD may perform operation S230 regardless of the order of operations S210 and S220. For example, the matrix multiply device MMD may perform operation S230 followed by operations S210 and S220, or perform operation S230 between operations S210 and S220.

In operation S240, the matrix multiply device MMD may generate the first-to-(NxR)th multiplication scaled input elements by performing the multiplication scaling on the first to (n)-th input elements based on the first-to-Rth multiplication scale coefficients MSC. For example, the input vector scaler 120 may generate 'R' multiplication scaled input elements MSIE for each single input element based on 'R' scale coefficients MSC.

In operation S250, the matrix multiplication device MMD may generate one partial product PSP based on the first-to-(NxR)th scaled input elements and the first-to-(NxR)th quantization sign bits QSB. For example, the processing element PE may calculate the partial product PSP by adding or subtracting each of the first-to-(NxR)th scaled input elements based on the first-to-(NxR)th quantiztion sign bits QSB.

In operation S260, the matrix multiply device MMD may output the output element (e.g., $y_{11}$) generated by multiplying the partial product PSP by the common scale coefficient CSC. For example, the common scaler 180 may generate one output element by multiplying the partial product PSP by the common scale coefficient CSC. In this case, the generated output element may correspond to a summation of multiplications of the weights and input elements previously received through operations S210 and S230, respectively.

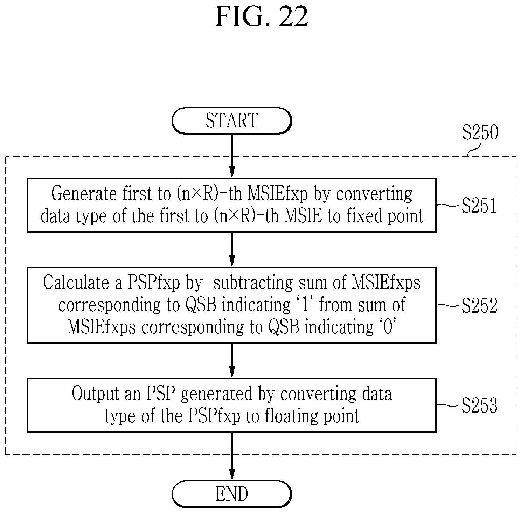

FIG. 22 is a flowchart illustrating in more detail operation S250 of FIG. 21. Referring to FIGS. 1 to 18 and 21 to 22, operation S250 may include operations S251 to S253.

In operation S251, the matrix multiplier 100 may generate the first-to-(NxR)th fixed point multiplication scaled input elements MSIEfxp by converting the data type of the first-to-(NxR)th multiplication scaled input elements MSIE to fixed point. For example, the first data type converter 130 may convert the first-to-(NxR)th multiplication scaled input elements MSIE to the first-to-(NxR)th fixed point multiplication scaled input elements MSIEfxp, respectively.

In operation S252, the matrix multiplier 100 may calculate the fixed point partial product PSPfxp by subtracting a value obtained by adding the corresponding fixed point multiplication scaled input elements MSIEfxp to the quantization sign bits QSB representing '1', from a value obtained by summing the corresponding fixed point multiplication scaled input elements MSIEfxp to the quantization sign bits QSB representing '0'. For example, the processing element PE may calculate the fixed point partial product PSPfxp in the manner described above with reference to Equation 13.

In operation S253, the matrix multiplier 100 may output partial product PSP generated by converting the data type of the fixed point partial product PSPfxp to floating point. For example, the second data type converter 160 may provide the partial product PSP to the common scaler 180.

FIG. 23 is a diagram illustrating the operation of the BCQ circuit of FIG. 1 according to some example embodiments. Referring to FIGS. 1 to 4 and 15, the uniform BCQ circuit UBC may perform the binary coding quantization operation for each row of the weight matrix WM.

First, the weight matrix WM may be expressed as Equation 14 below.

(Equation 14)

$$WM = \begin{bmatrix} w_{11} & w_{12} & \dots & w_{1m} \\ w_{21} & w_{22} & \dots & w_{2m} \\ \vdots & \vdots & \ddots & \vdots \\ w_{n1} & w_{n2} & \dots & w_{nm} \end{bmatrix} = \begin{bmatrix} \overrightarrow{w_{r1}} \\ \overrightarrow{w_{r2}} \\ \vdots \\ \overrightarrow{w_{rn}} \end{bmatrix}$$

Referring to Equation 14, $\overrightarrow{w_{ri}}$ may represent an i-th row vector of the weight matrix WM. For example, $\overrightarrow{w_{ri}}$ may include $w_{i1}$ to $w_{im}$.

The uniform BCQ circuit UBC may perform the binary coding quantization operation for each row of the weight matrix WM based on Equation 15 below.

(Equation 15)

$$\overrightarrow{w_{ri}} \approx \sum_{k=1}^{R} \left( \alpha_{k\_ri} \times \overrightarrow{B_{k\_ri}} \right)$$

Referring to Equation 15, R may represent the BCQ resolution. The $\alpha_{k\_ri}$ may represent a k-th quantization scale coefficient for an i-th row vector of the weight matrix WM. The $\overrightarrow{B_{k\_ri}}$ may represent the quantization sign vector corresponding to $\alpha_{k\_ri}$. For example, $\overrightarrow{B_{k\_ri}}$ may represent the quantization sign vector corresponding to the k-th quantization scale coefficient for the i-th row vector of the weight matrix WM. $\overrightarrow{B_{k\_ri}}$ may be calculated in a similar manner to $\overrightarrow{B_{k\_cj}}$ (see Equation 8); however, instead of being calculated for a column of WM, it is calculated for a row of WM.

Meanwhile, $\alpha_{k\_ri}$ may be expressed as the product of the common scale coefficient and the multiplication scale coefficient. For example, $\alpha_{k\_ri}$ may be expressed as $2^{k-1} \times s_{ri}$. Accordingly, the above-described Equation 15 may be expressed as the following Equation 16.

(Equation 16)

$$\overrightarrow{w_{ri}} \approx s_{ri} \times \sum_{k=1}^{R} \left( 2^{k-1} \times \overrightarrow{B_{k\_ri}} \right)$$

Referring to Equation 16, $2^{k-1}$ may represent the k-th multiplication scale coefficient MSCk, and $s_{ri}$ may represent the common scale coefficient CSC for the (i)-th row vector.

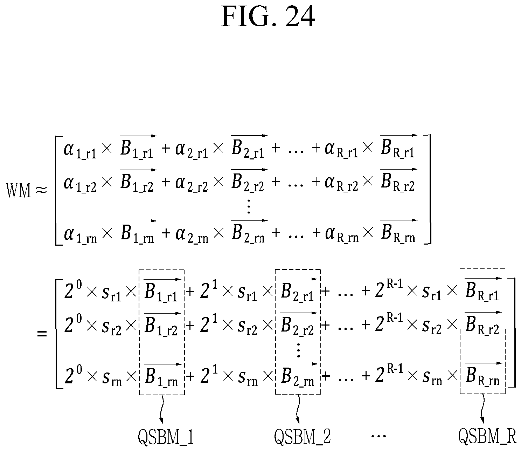

FIG. 24 is a diagram illustrating an approximated weight matrix according to various example embodiments of FIG. 23. Referring to FIGS. 1 to 4 and 23 and 24, the uniform BCQ circuit UBC may perform the uniform binary coding quantization for each row of the weight matrix WM.

The quantization sign vector $\overrightarrow{B_{k\_ri}}$ may be implemented as a row vector having the same dimension as the number of columns of the weight matrix WM. For example, the quantization sign vector $\overrightarrow{B_{k\_ri}}$ may be expressed as Equation 17 below.

(Equation 17)

$$\overrightarrow{B_{k\_ri}} = [(-1)^{b_{1\_k\_ri}} \quad (-1)^{b_{2\_k\_ri}} \quad ... \quad (-1)^{b_{m\_k\_ri}}]$$

Each of the $b_{1\_k\_ri}$ to $b_{m\_k\_ri}$ may represent different quantization sign bit QSB. More specifically, each of the $b_{1\_k\_ri}$ to $b_{m\_k\_ri}$ may be the quantization sign bit QSB for weight arranged in different column of the weight matrix WM each other. That is, each of the $b_{1\_k\_ri}$ to $b_{m\_k\_ri}$ may be '0' or'1'.

As with the embodiment of FIG. 5 and FIG. 6, the multiplication based on the quantization sign bits QSB may be implemented through adding or subtracting values based on the corresponding quantization sign bits QSB. Accordingly, this can receive as an input, a quantization sign bit vector $\overrightarrow{QSB_{k\_ri}}$. The $\overrightarrow{QSB_{k\_ri}}$ may include a plurality of quantization sign bits corresponding to the k-th quantization scale coefficient of the i-th row vector. More specifically, $\overrightarrow{QSB_{k\_ri}}$ may be expressed as Equation 17.1 below.

(Equation 17.1)

$$\overrightarrow{QSB_{k\_ri}} = [b_{1\_k\_ri} \quad b_{2\_k\_ri} \quad ... \quad b_{m\_k\_ri}]$$

That is, the uniform BCQ circuit UBC may approximate each row vector included in the weight matrix WM based on the combinations of the plurality of quantization sign bits QSB, one common scale coefficient CSC, and the plurality of multiplication scale coefficients MSC. In this case, the matrix multiplier 100 may calculate the output matrix YM corresponding to the product of the input matrix XM and the weight matrix WM with a smaller computational amount.

For a more detailed example, hereinafter, for a more concise description, the operation of the matrix multiplier 100 that calculates the output elements (e.g., $y_{11}$) of the first row and first column of the output matrix YM will be representatively described. However, example embodiments are not limited thereto.

The uniform BCQ circuit UBC may provide the plurality of quantization sign bits QSB (e.g., "$b$" values), the plurality of common scale coefficients CSC (e.g., "$s$" values), and the plurality of multiplication scale coefficients MSC (e.g., powers of 2) to the matrix multiplier 100.

The matrix multiplier 100 may calculate the output matrix YM based on the plurality of quantization sign bits QSB, the plurality of common scale coefficients CSC, and the plurality of multiplication scale coefficients MSC. For example, the matrix multiplier 100 may calculate the output matrix YM by multiplying the weight matrix WM approximated in the manner described above with reference to Equations 14 to 17.1 and FIG. 24 with the input matrix XM.

For a more detailed example, the matrix multiplier 100 may calculate $y_{11}$ according to Equation 18 below.

(Equation 18)

$$y_{11} \approx x_{11} \times s_{r1} \times \left(2^0 \times (-1)^{b_{1\_1\_r1}} + 2^1 \times (-1)^{b_{1\_2\_r1}} + \ldots + 2^{R-1} \times (-1)^{b_{1\_R\_r1}}\right)$$

$$+ \; x_{12} \times s_{r2} \times \left(2^0 \times (-1)^{b_{1\_1\_r2}} + 2^1 \times (-1)^{b_{1\_2\_r2}} + \ldots + 2^{R-1} \times (-1)^{b_{1\_R\_r2}}\right)$$

$$+ \ldots$$

$$+ \; x_{1n} \times s_{rn} \times \left(2^0 \times (-1)^{b_{1\_1\_rn}} + 2^1 \times (-1)^{b_{1\_2\_rn}} + \ldots + 2^{R-1} \times (-1)^{b_{1\_R\_rn}}\right)$$

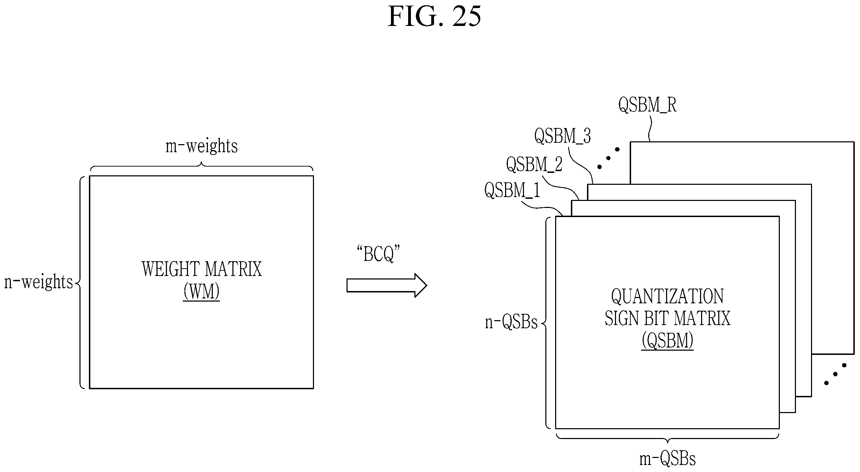

In example embodiments, the matrix multiplier 100 may calculate the output element by performing the quantization scaling on the input element based on the common scale coefficient CSC firstly, and then accumulating the quantization scaled input element (hereinafter, referred to as "quantization scaled input element QSIE") based on the plurality of quantization sign bits QSB. In this case, the matrix multiplier 100 may use the same 'quantization scaled input element (QSIE)' to calculate different output elements included in one output vector (e.g., $\overrightarrow{Y_1}$). For example, the matrix multiplier 100 may use "$2^0 \times s_{r1} \times x_{11}$" for each of the calculations of $y_{11}$ to $y_{1n}$. Accordingly, according to various example embodiments of the present disclosure, the computational amount of the matrix multiplier 100 and the number of accesses to memory devices external from the matrix multiplier 100 may be reduced or minimized. The detailed configuration and operation of the matrix multiplier 100 are described in more detail below with reference to FIGS. 25 to 46.

Meanwhile, continuing to refer to FIG. 24 and Equations 14 to 17.1, the quantization sign bit vectors (e.g., $\overrightarrow{QSB_{1\_r1}}$ to $\overrightarrow{QSB_{1\_rm}}$) used for the multiplication of the quantization sign vectors (e.g., $\overrightarrow{B_{1\_r1}}$ to $\overrightarrow{B_{1\_rm}}$) with the first quantization scale coefficients (e.g., $\alpha_{1\_r1}$ to $\alpha_{1\_rm}$) for the first to (n)-th rows of the weight matrix WM may be expressed as a first quantization sign bit matrix QSBM_1. For example, the first quantization sign bit matrix QSBM_1 may be expressed as Equation 19 below.

(Equation 19)

$$QSBM\_1 = \begin{bmatrix} \overrightarrow{QSB_{1\_r1}} \\ \overrightarrow{QSB_{1\_r2}} \\ \vdots \\ \overrightarrow{QSB_{1\_rn}} \end{bmatrix}$$

In a similar manner, the quantization sign bit vectors (e.g., $\overrightarrow{QSB_{R\_r1}}$ to $\overrightarrow{QSB_{R\_rm}}$) that are used for the multiplication of the quantization sign vectors (e.g., $\overrightarrow{B_{R\_r1}}$ to $\overrightarrow{B_{R\_rm}}$) with the (R)-th quantization scale coefficients (e.g., $\alpha_{R\_r1}$ to $\alpha_{R\_rm}$) for the first to the (n)-th weight row may be expressed as a (R)-th quantization sign bit matrix QSBM_R.

In example embodiments, the first to (R)-th quantization sign bit matrices QSBM_1 to QSBM_R may be implemented with the same number of rows and columns as the weight matrix WM. For example, the number of rows of the first quantization sign bit matrix QSBM_1 may be 'n' and the number of columns may be 'm'. The first to (R)-th quantization sign bit matrices QSBM_1 to QSBM_R are described in more detail below with reference to FIG. 25.

FIG. 25 is a diagram illustrating the quantization sign bit matrices of FIG. 24. Referring to FIGS. 1 to 4 and 23 to 25, the uniform BCQ circuit UBC may perform the uniform binary coding quantization for the weight matrix WM with the plurality of quantization sign bit matrices QSBM, the plurality of common scale coefficients CSC, and the plurality of multiplication scale coefficients MSC.

The number of quantization sign bit matrices QSBM may be determined according to the BCQ resolution (e.g.,

'R'). For example, the uniform BCQ circuit UBC may generate the first to (R)-th quantization sign bit matrices QSBM_1 to QSBM_R by performing the binary coding quantization for the weight matrix WM.

Each of the first to (R)-th quantization sign bit matrices QSBM_1 to QSBM_R may be implemented with the same number of rows and columns as the weight matrix WM. For example, the number of rows of each of the first to (R)-th quantization sign bit matrices QSBM_1 to QSBM_R may be 'n', and the number of columns may be 'm'. In this case, the quantization sign bit QSB arranged in the (i)-th row and (j)-th column of the (k)-th quantization sign bit matrix QSBM_k may be "$b_{j\_k\_ri}$".

Each weight of the weight matrix WM may be approximated by the quantization sign bits QSB arranged at corresponding positions of the first to (R)-th quantization sign bit matrices QSBM_1 to QSBM_R. For example, the weight arranged in the (i)-th row and (j)-th column of the weight matrix WM (e.g., $w_{ij}$) may be approximated based on the quantization sign bits arranged in the (i)-th row and (i)-th column of the first to (R)-th quantization sign bit matrices QSBM_1 to QSBM_R (e.g., $b_{j\_1\_ri}$ to $b_{j\_R\_ri}$).

Each of the first to (R)-th quantization sign bit matrices QSBM_1 to QSBM_R may correspond to a plurality of common scale coefficients QSC. That is, as described with reference to FIGS. 23 and 24, when the uniform BCQ circuit UBC performs the uniform binary coding quantization operation for each row of the weight matrix WM, different rows of the weight matrix WM will be approximated based on different common scale coefficients QSC and the weights included in the same row of the weight matrix WM will be approximated based on the same common scale coefficient QSC.

Accordingly, all of the quantization sign bits included in the (i)-th row of the (k)-th quantization sign bit matrix QSBM_k (e.g., $b_{1\_k\_ri}$ to $b_{m\_k\_ri}$) may correspond to the common scale coefficient "$s_{ri}$". In this way, the first to (n)-th rows of each of the first to (k)-th quantization sign bit matrices QSBM_1 to QSBM_k may correspond to the common scale coefficients "$s_{r1}$" to "$s_{rn}$" respectively. For a more detailed example, the first to (n)-th rows of the first quantization sign bit matrix QSBM_1 may correspond to "$s_{r1}$" to "$s_{rn}$" respectively.

Each of the first to (R)-th quantization sign bit matrices QSBM_1 to QSBM_R may correspond to different multiplication scale coefficients MSC. For example, each of the plurality of quantization sign bits QSB included in the first quantization sign bit matrix QSBM_1 may correspond to the first multiplication scale coefficient MSC1 (e.g., $2^0$), and each of the plurality of quantization sign bits QSB included in the second quantization sign bit matrix QSBM_2 may correspond to the second multiplication scale coefficient MSC2 (e.g., $2^1$).

In this way, the weight arranged in the (i)-th row and the (j)-th column of the weight matrix WM (e.g., $w_{ij}$) may be approximated based on the quantization sign bits arranged in the (i)-th row and the (j)-th column of the first to (R)-th quantization sign bit matrices QSBM_1 to QSBM_R; one common scale coefficient CSC corresponding to the (i)-th row of the first to (R)-th quantization sign bit matrices QSBM_1 to QSBM_R; and the plurality of multiplication scale coefficients MSC respectively corresponding to the first to (R)-th quantization sign bit matrices QSBM_1 to QSBM_R.

More specifically, each of the plurality of weights in the (i)-th row may be approximated based on R scale coefficients MSC, one common scale coefficient CSC (e.g. corresponding to the (i)-th row), and R quantization sign bits QSB, according to Equation 20 below

(Equation 20)

$$w_{ij} \approx 2^0 \times s_{ri} \times (-1)^{b_{j\_1\_ri}} + 2^1 \times s_{ri} \times (-1)^{b_{j\_2\_ri}} + \cdots + 2^{R-1} \times s_{ri} \times (-1)^{b_{j\_R\_ri}}$$

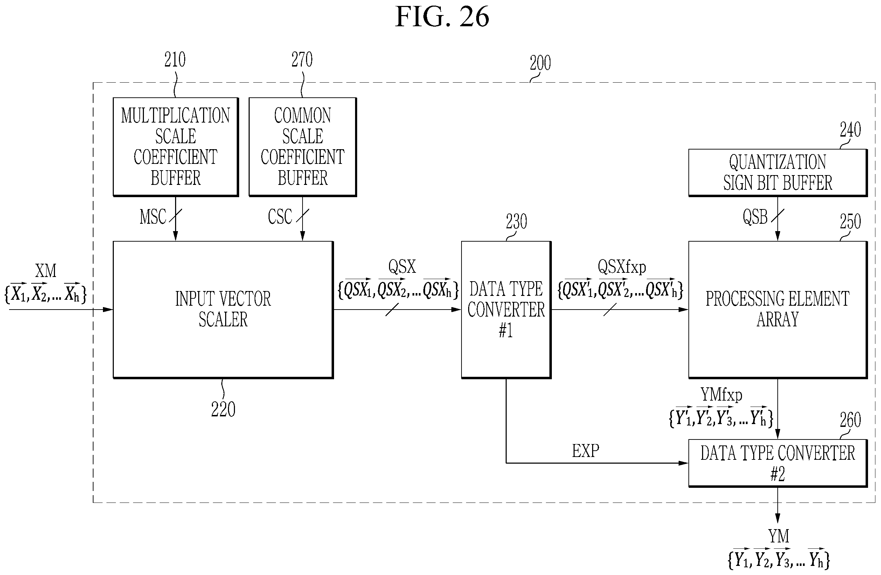

The operation of the matrix multiplier 100 based on weights approximated based on the multiplication scale coefficient MSC, the common scale coefficient CSC, and the quantization sign bit QSB will be described in more detail below with reference to FIGS. 26 to 46.

FIG. 26 is a block diagram illustrating a configuration of the matrix multiplier of FIG. 1 implemented according to some example embodiments. Referring to FIGS. 1 to 4 and 23 to 26, the matrix multiplier 100 of FIG. 1 may be implemented as a matrix multiplier 200 of FIG. 26.

The matrix multiplier 200 may include a multiplication scale coefficient buffer 210, a common scale coefficient buffer 270, an input vector scaler 220, a first data type converter 230, a quantization sign bit buffer 240, a processing element array 250, and a second data type converter 260.

The multiplication scale coefficient buffer 210 may store the plurality of multiplication scale coefficients MSC provided from the uniform BCQ circuit UBC. The multiplication scale coefficient buffer 210 may provide the plurality of multiplication scale coefficients MSC to the input vector scaler 220.

The common scale coefficient buffer 270 may store the plurality of common scale coefficients CSC provided from the uniform BCQ circuit UBC. The common scale coefficient buffer 270 may provide the plurality of common scale coefficients CSC to the input vector scaler 220.

The input vector scaler 220 may receive the input matrix XM. For example, the input vector scaler 120 may receive the plurality of input vector (e.g., $\overrightarrow{X_1}$ to $\overrightarrow{X_h}$) including the plurality of input elements.

The input vector scaler 220 may perform the quantization scaling for the input matrix XM based on the plurality of common scale coefficients CSC and the plurality of multiplication scale coefficients MSC. For example, the input vector scaler 220 may generate the plurality of quantization scaled input vectors QSX based on the plurality of input vectors. In this case, the plurality of quantization scaled input vectors QSX may correspond to the plurality of input vectors (e.g., $\vec{X_1}$ to $\vec{X_h}$), respectively. Hereinafter, the quantization scaled input vectors QSX corresponding to $\vec{X_1}$ to $\vec{X_h}$ may be referred to as to $\overrightarrow{QSX_1}$ to $\overrightarrow{QSX_h}$, respectively.

In example embodiments, the plurality of quantization scaled input vectors QSX may be included in the quantization scaled input matrix. In this case, a row size of the quantization scaled input matrix may be an integer multiple of a row size of the input matrix XM, and a column size of the quantization scaled input matrix may be the same as a column size of the input matrix XM. However, example embodiments are not limited thereto.

Each of the plurality of quantization scaled input vectors QSX may be implemented as a row vector having a 'R'-times dimension that of the corresponding input vector. For example, the first quantization scaled input vector (e.g., $\overrightarrow{QSX_1}$) corresponding to the first input vector (e.g., $\vec{X_1}$) may include "R × n" quantization scaled input elements QSIE as illustrated in Equation 21 below.

(Equation 21)

$$\overrightarrow{QSX_1} \ni (2^0 \times s_{r1} \times x_{11}),(2^1 \times s_{r1} \times x_{11}),\ldots, (2^{R-1} \times s_{r1} \times x_{11}),$$

$$(2^0 \times s_{r2} \times x_{12}), (2^1 \times s_{r2} \times x_{12}),\ldots,(2^{R-1} \times s_{r2} \times x_{12}),$$

$$\ldots,$$

$$(2^0 \times s_{rn} \times x_{1n}),(2^1 \times s_{rn} \times x_{1n}),\ldots,(2^{R-1} \times s_{rn} \times x_{1n})$$

Referring to Equation 21, the plurality of quantization scaled input elements QSIE included in the first quantization scaled input vector $\overrightarrow{QSX_1}$ may be generated by multiplying each of the plurality of input elements included in the first input vector with corresponding multiplication scale coefficient MSC and corresponding common scale coefficient CSC.

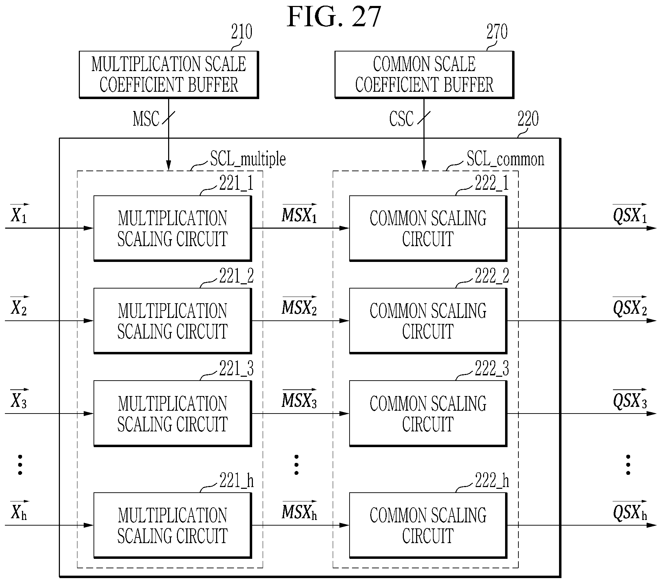

In this way, each of the second to (h)-th quantization scaled input vectors (e.g., $\overrightarrow{QSX_2}$ to $\overrightarrow{QSX_h}$) may include 'R × n' quantization scaled input elements QSIE. For concise description, detailed description of the quantization scaled input elements QSIE included in each of the second to (h)-th quantization scaled input vectors (e.g., $\overrightarrow{QSX_2}$ to $\overrightarrow{QSX_h}$) will be omitted. The configuration and operation of the input vector scaler 220 will be described in more detail below with reference to FIGS. 27 to 34.

In example embodiments, the data type of the plurality of input elements may be floating point. In this case, the data type of each of the plurality of quantization scaled input elements QSIE may be floating point. However, example embodiments are not limited thereto.

In example embodiments, the code lengths of each of the plurality of input elements may be 16-bit or 32-bit. However, example embodiments are not limited thereto.

In example embodiments, the code lengths of each of the plurality of common scale coefficients CSC may be 16-bit or 32-bit. However, example embodiments are not limited thereto.

The first data type converter 230 may receive the plurality of quantization scaled input vectors QSX. For example, the first data type converter 230 may receive first to (h)-th quantization scaled input vectors (e.g., $\overrightarrow{QSX_1}$ to $\overrightarrow{QSX_h}$). Each of the first to (h)-th quantization scaled input vectors may include the plurality of quantization scaled input elements QSIE.

The first data type converter 230 may extract an exponent EXP from each of the plurality of quantization scaled input vectors QSX. For example, the first data type converter 230 may extract the first exponent from the first quantization scaled input vector $\overrightarrow{QSX_1}$ and extract the second exponent from the second quantization scaled input vector $\overrightarrow{QSX_2}$. The first data type converter 230 may provide the extracted exponents EXP to the second data type converter 260.

The first data type converter 230 may convert the data type of the plurality of quantization scaled input vectors QSX to fixed point. For example, the first data type converter 230 may receive the plurality of quantization scaled input vectors QSX and output the plurality of fixed point quantization scaled input vectors QSXfxp. That is, the first data type converter 230 may generate the first to (h)-th fixed point quantization scaled input vectors (e.g., $\overrightarrow{QSX'_1}$ to $\overrightarrow{QSX'_h}$), respectively, based on the first to (h)-th quantization scaled input vectors.

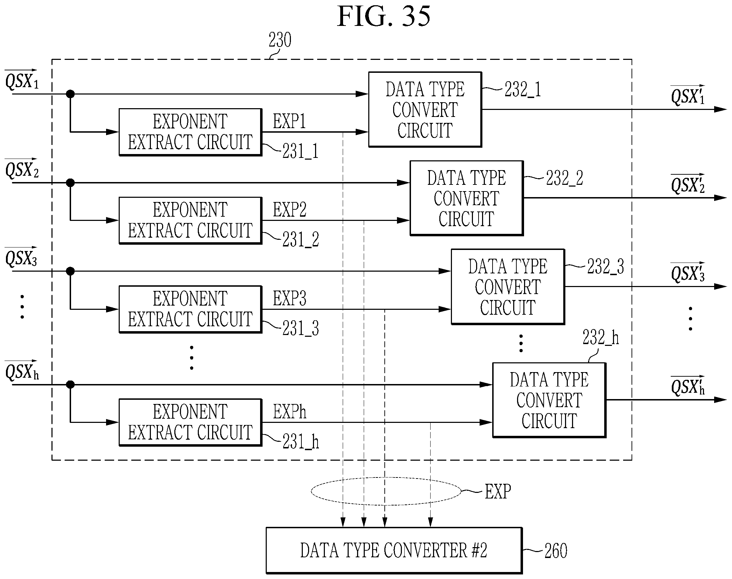

More specifically, the first data type converter 230 may convert the data type of each of the plurality of quantization scaled input elements QSIE included in the plurality of quantization scaled input vector QSX to fixed point based on the extracted exponent. In this case, the first fixed point quantization scaled input vector (e.g., $\overrightarrow{QSX'_1}$) may include elements of Equation 21 described above converted into fixed point form (hereinafter, they may be referred to as the fixed point quantization scaled input elements QSIEfxp). The configuration and operation of the first data type converter 230 will be described in more detail below with reference to FIG. 35.

The quantization sign bit buffer 240 may store the plurality of quantization sign bits QSB provided from the uniform BCQ circuit UBC. The quantization sign bit buffer 240 may provide the plurality of quantization sign bits QSB to the processing element array 250.

The processing element array 250 may receive the plurality of quantization sign bits QSB and the plurality of fixed point quantization scaled input vectors QSXfxp. The processing element array 250 may generate the fixed point output matrix YMfxp based on the plurality of fixed point quantization scaled input elements QSIEfxp and the plurality of quantization sign bits QSB. The fixed point output matrix YMfxp may be expressed as Equation 22 below.

$$\text{(Equation 22)}$$

$$YMfxp = \begin{bmatrix} \overrightarrow{Y'_1} \\ \overrightarrow{Y'_2} \\ \vdots \\ \overrightarrow{Y'_h} \end{bmatrix} = \begin{bmatrix} y'_{11} & y'_{12} & \cdots & y'_{1m} \\ y'_{21} & y'_{22} & \cdots & y'_{2m} \\ \vdots & \vdots & \ddots & \vdots \\ y'_{h1} & y'_{h2} & \cdots & y'_{hm} \end{bmatrix}$$

Referring to Equation 22, YM_fxp may represent the fixed-point output matrix YM_fxp, and $\overrightarrow{Y'_1}$ to $\overrightarrow{Y'_h}$ may represent different output vectors having fixed-point data types. Each of $y'_{11}$ to $y'_{hm}$ may represent different output elements having fixed-point data types.

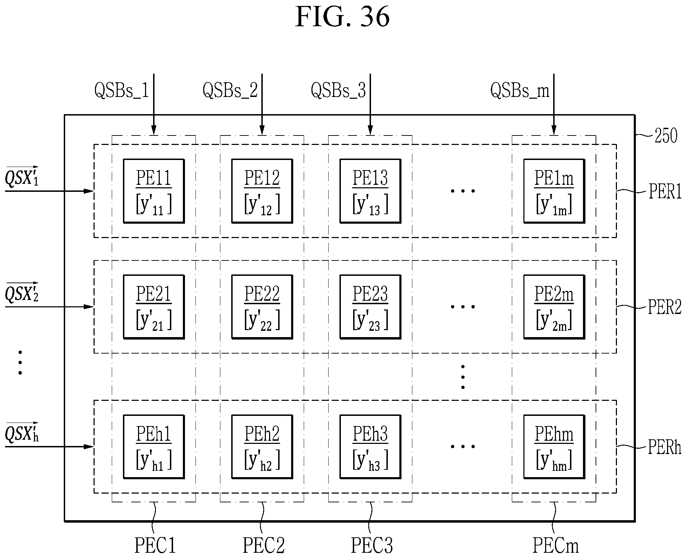

The processing element array 250 may include the plurality of processing elements arranged in the row direction and the column direction. Each of the plurality of processing elements may calculate and output different fixed point output elements of Equation 22 described above. More detailed configurations and operations of each of the processing element arrays will be described in more detail below with reference to FIGS. 36 to 38.

The second data type converter 260 may receive a plurality of exponents EXP from the first data type converter 230. The second data type converter 260 may receive the fixed point output matrix YMfxp from the processing element array 250. For example, the second data type converter 260 may receive the plurality of fixed point output elements from the processing element array 250.

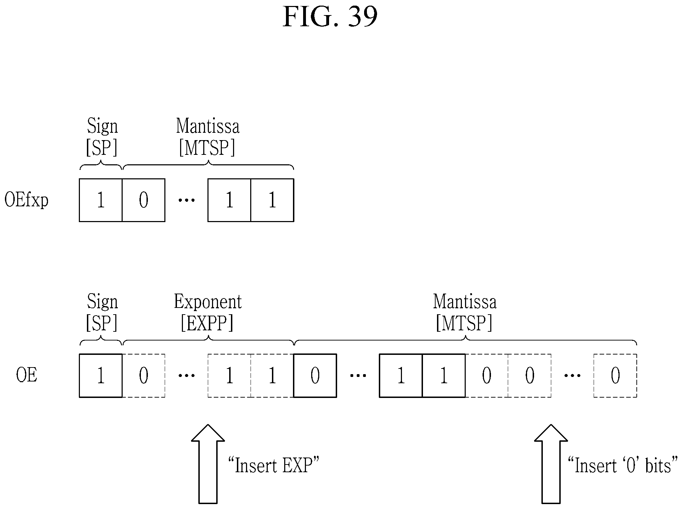

The second data type converter 260 may convert a data type of the fixed point output matrix YMfxp to floating point based on the plurality of exponents EXP. That is, the second data type converter 260 may output the output matrix YM having the floating point data type. For example, the second data type converter 260 may generate the plurality of output elements by converting the data type of each of the plurality of received fixed point output elements to floating point. The detailed configuration and operation of the second data type converter 160 will be described in more detail below with reference to FIG. 39.

FIG. 27 is a block diagram illustrating a configuration of the input vector scaler of FIG. 26 according to various example embodiments. Referring to FIGS. 1 to 4 and 23 to 27, the input vector scaler 220 may include a multiplication scaler SCL_multiple and a common scaler SCL_common. The multiplication scaler SCL_multiple may include first to (h)-th multiplication scaling circuits 221_1 to 221_h. The common scaler SCL_common may include first to (h)-th common scaling circuits 222_1 to 222_h.

Each of the first to (h)-th multiplication scaling circuits 221 to 221_h may receive different input vectors. For example, the first to (h)-th multiplication scaling circuits 221 to 221_h may receive the first to (h)-th input vectors (e.g., $\overrightarrow{X_1}$ to $\overrightarrow{X_h}$), respectively.

That is, each of the first to (h)-th multiplication scaling circuits 221_1 to 221_h may sequentially receive the plurality of input elements for the corresponding input vector. For example, the first multiplication scaling circuit 221_h may sequentially receive $x_{11}$ to $x_{1n}$, and the (h)-th multiplication scaling circuit 221_h may sequentially receive $x_{h1}$ to $x_{hn}$.

The multiplication scaler SCL_multiple may sequentially receive the plurality of multiplication scale coefficients MSC from the multiplication scale coefficient buffer 210. For example, each of the first to (h)-th multiplication scaling circuits 221_1 to 221_h may sequentially receive the plurality of multiplication scale coefficients MSC from the multiplication scale coefficient buffer 210. For a more detailed example, each of the first to (h)-th multiplication scaling circuits 221_1 to 221_h may receive the first-to-Rth multiplication scale coefficients MSC1 to MSCR (e.g., $2^0$ to $2^{R-1}$).

Each of the first to (h)-th multiplication scaling circuits 221_1 to 221_h may perform multiplication scaling for the received input element based on the plurality of multiplication scale coefficients MSC. That is, the first to (h)-th multiplication scaling circuits 221_1 to 221_h may generate the first to (h)-th multiplication scaled input vectors (e.g., $\overrightarrow{MSX_1}$ to $\overrightarrow{MSX_h}$), respectively. For example, the first multiplication scaling circuit 221_1 may generate the first multiplication scaled input vector (e.g., $\overrightarrow{MSX_1}$) based on the $x_{11}$ to $x_{1n}$ and the first-to-Rth multiplication scale coefficients MSC1 to MSCR. In this case, each of the first to (h)-th multiplication scaled input vectors (e.g., $\overrightarrow{MSX_1}$ to $\overrightarrow{MSX_h}$) may include the plurality of multiplication scaled input elements (hereinafter referred to as "MSIE"). The specific configuration and operation of each of the first to (h)-th multiplication scaling circuits 221_1 to 221_h are similar to the configuration and operation of the first multiplication scaling circuit 121 as described above with reference to FIGS. 9 to 10, and therefore, detailed description thereof will be omitted.

In example embodiments, the first to (h)-th multiplication scaling circuits 221_1 to 221_h may calculate the multiplication scaled input elements by increasing the exponent part EXPP of the input element, as above described with reference to FIG. 10. In this case, the computational amount of the first to (h)-th multiplication scaling circuits 221_1 to 221_h may be reduced or minimized.

Each of the first to (h)-th common scaling circuits 222_1 to 222_h may receive different multiplication scaled input vectors. For example, the first to (h)-th common scaling circuits 222_1 to 221_h may receive the first to (h)-th multiplication scaled input vectors (e.g., $\overrightarrow{MSX_1}$ to $\overrightarrow{MSX_h}$), respectively.

Each of the first to (h)-th common scaling circuits 222_1 to 222_h may sequentially receive the plurality of multiplication scaled input elements for the respective multiplication scaled input vector. For example, the first common scaling circuit 222_1 may sequentially receive multiplication scaled input elements MSIE11_1 to MSIE1n_R described above with reference to FIG. 9.

The common scaler SCL_common may sequentially receive the plurality of common scale coefficients CSC from the common scale coefficient buffer 270. For example, each of the first to (h)-th common scaling circuits 222_1 to 222_h may sequentially receive the plurality of common scale coefficients CSC from the common scale coefficient buffer 270.

For example, each of the first to (h)-th common scaling circuits 222_1 to 222_h may be the same as the common scale coefficient CSC received from the common scale coefficient buffer 270. For example, the common scale coefficients CSC sequentially received by the first common scaling circuit 222_1 may be the same as the common scale coefficients CSC sequentially received by the second common scaling circuit 222_2.

The order in which each of the first to (h)-th common scaling circuits 222_1 to 222_h receives the common scale coefficients CSC may be same. For example, the common scale coefficients CSC firstly received by the first common scaling circuit 222_1 may be same as the common scale coefficient CSC firstly received by the second common scaling circuit 222_2. Similarly, the common scale coefficients CSC secondly received by the first common scaling circuit 222_1 may be the same as the common scale coefficient CSC secondly received by the second common scaling circuit 222_2.

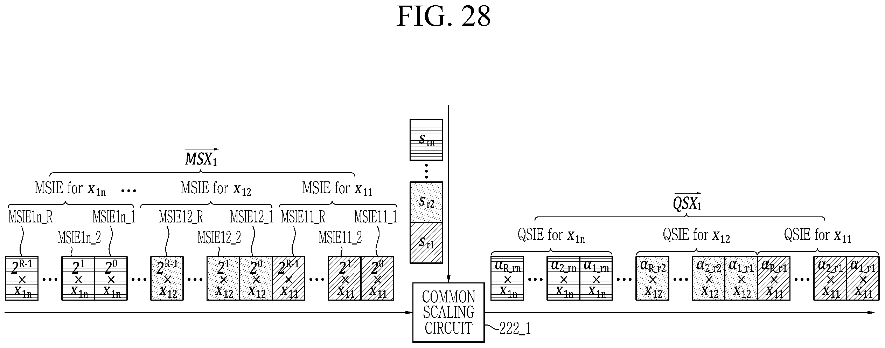

Each of the first to (h)-th common scaling circuits 222_1 to 222_h may perform common scaling on the received multiplication scaled input element MSIE based on the plurality of common scale coefficients CSC. That is, each of the first to (h)-th common scaling circuits 222_1 to 222_h may generate the first to (h)-th quantization scaled input vectors (e.g., $\overrightarrow{QSX_1}$ to $\overrightarrow{QSX_h}$), respectively, based on the plurality of received multiplication scaled input elements MSIE and the plurality of common scale coefficients CSC. For example, the first common scaling circuit 222_1 may generate the first quantization scaled input vector (e.g., $\overrightarrow{QSX_1}$) based on the multiplication scaled input elements MSIE11_1 to MSIE1n_R and the plurality of common scale coefficients CSC described above with reference to FIG. 9. The operation of the first to (h)-th common scaling circuits 222_1 to 222_h will be described in more detail below with reference to FIG. 28.

FIG. 28 is a diagram illustrating in more detail the operation of the common scaling circuit of FIG. 27. Hereinafter, for a more concise description, the operation of the first common scaling circuit 222_1 will be representatively described with reference to FIGS. 1 to 4 and 23 to 28. However, example embodiments are not limited thereto, and the second to (h)-th common scaling circuits 222_2 to 222_h may also operate in a similar manner.

The first common scaling circuit 222_1 may receive the first multiplication scaled input vector (e.g., $\overrightarrow{MSX_1}$). That is, the first common scaling circuit 222_1 may sequentially receive the multiplication scaled input elements MSIE11_1 to MSIE1n_R.

The first common scaling circuit 222_1 may sequentially receive the plurality of common scale coefficients CSC. For example, the first common scaling circuit 222_1 may sequentially receive $S_{r1}$ to $S_{rn}$. In this case, each of the $S_{r1}$ to $S_{rn}$ may correspond to different input elements. For example, $S_{r1}$ to $S_{rn}$ may correspond to $x_{11}$ to $x_{1n}$, respectively.

The first common scaling circuit 222_1 may perform the common scaling for the first multiplication scaled input vector (e.g., $\overrightarrow{MSX_1}$) based on the plurality of common scale coefficients CSC to generate the first quantization scaled input vector (e.g., $\overrightarrow{QSX_1}$). That is, the first common scaling circuit 222_1 may multiply each of the multiplication scaled input elements MSIE11_1 to MSIE1n_R with corresponding common scale coefficient CSC to generate the plurality of quantization scaled input elements QSIE. For example, the first common scaling circuit 222_1 may multiply each of the multiplication scaled input elements MSIE11_1 to MSIE11_R with the common scale coefficient "$Sr_1$" to generate a plurality of quantization scaled input elements QSIE for $x_{11}$. In more detail, the first common scaling circuit 222_1 may multiply each of the multiplication scaled input elements MSIE11_1 to MSIE11_R by the common scale coefficient "$Sr_1$" to generate the plurality of quantization scaled input elements QSIE (e.g., $\alpha_{1\_r1} \times x_{11}$ "to" $\alpha_{R\_r1} \times x_{11}$") (illustrated as diagonal stripe).

Similarly, the first common scaling circuit 222_1 may multiply each of the multiplication scaled input elements MSIE12_1 to MSIE12_R with the common scale coefficient "$s_{r2}$" to generate the plurality of quantization scaled input elements QSIE for $x_{12}$ (e.g., "$\alpha_{1\_r2} \times x_{12}$ "to" $\alpha_{R\_r2} \times x_{12}$") (illustrated as a dot pattern).

In this way, the first common scaling circuit 222_1 may be able to sequentially calculate the plurality of quantization scaled input elements QSIE corresponding to $x_{13}$ to $x_{1n}$.

The first common scaling circuit 222_1 may sequentially output the plurality of quantization scaled input elements QSIE. For example, the first common scaling circuit 222_1 may provide the plurality of quantization scaled input elements QSIE to the first data type converter 230.

That is, according to various example embodiments of FIGS. 27 and 28, the input vector scaler 220 may generate the quantization scaled input vector by performing the multiplication scaling for each of the plurality of input vectors, and then performing the common scaling.

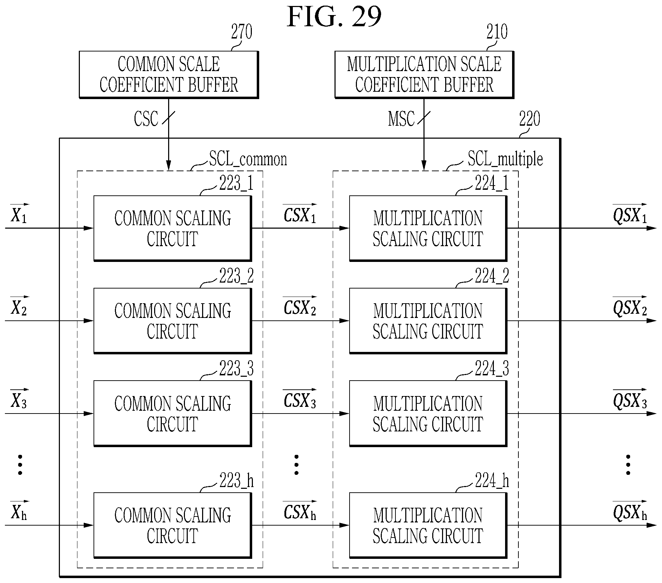

FIG. 29 is a block diagram illustrating a configuration of the input vector scaler of FIG. 26 according to various example embodiments. Referring to FIGS. 1 to 4, 23 to 26, and 29, the input vector scaler 220 may include a common scaler SCL_common and a multiplication scaler SCL_multiple. The common scaler SCL_common may include first to (h)-th common scaling circuits 223_1 to 223_h. The multiplication scaler SCL_multiple may include first to (h)-th multiplication scaling circuits 224_1 to 224_h.

Each of the first to (h)-th common scaling circuits 223_1 to 223_h may receive different input vectors. For example, the first to (h)-th common scaling circuits 223_1 to 223_h may receive the first to (h)-th input vectors (e.g., $\overrightarrow{X_1}$ to $\overrightarrow{X_h}$), respectively.

Each of the first to (h)-th common scaling circuits 223_1 to 223_h may sequentially receive the plurality of input elements for the corresponding input vector. For example, the first common scaling circuit 223_1 may sequentially receive $x_{11}$ to $x_{1n}$, and the h-th common scaling circuit 223_h may sequentially receive $x_{h1}$ to $x_{hn}$.

The common scaler SCL_multiple may sequentially receive the plurality of common scale coefficients CSC from the common scale coefficient buffer 270. For example, each of the first to (h)-th common scaling circuits 223_1 to 223_h may sequentially receive the plurality of common scale coefficients CSC from the common scale coefficient buffer 270.

Common scale coefficients CSC that each of the first to h-th common scaling circuits 223_1 to 223_h receive from the common scale coefficient buffer 270 may be same. An order in which each of the first to (h)-th common scaling circuits 223_1 to 223_h receives the common scale coefficients CSC may be same. The relationship between the common scale coefficients CSC received by each of the first to (h)-th common scaling circuits 223_1 to 223_h is similar to that described above with reference to FIG. 27, and therefore, detailed description thereof will be omitted.

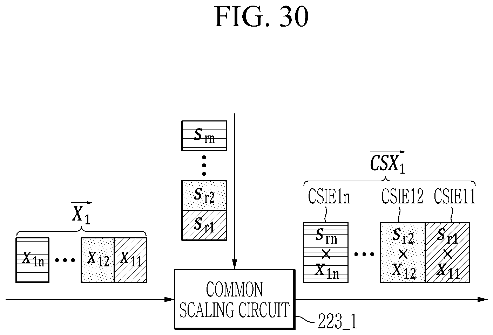

Each of the first to (h)-th common scaling circuits 223_1 to 223_h may perform common scaling on the received input vector based on the plurality of common scale coefficients CSC. That is, each of the first to (h)-th common scaling circuits 223_1 to 223_h may generate the first to (h)-th common scaled input vectors (e.g., $\overrightarrow{CSX_1}$ to $\overrightarrow{CSX_h}$), respectively, based on the plurality of received input elements and the plurality of common scale coefficients CSC. For example, the first common scaling circuit 223_1 may generate the plurality of common scaled input elements included in the first common scaled input vector (e.g., $\overrightarrow{CSX_1}$) (hereinafter, referred to as "CSIE") by multiplying $x_{11}$ to $x_{1n}$ with different common scale coefficients CSC respectively. The operation of the first to (h)-th common scaling circuits 223_1 to 223_h will be described in more detail below with reference to FIG. 30.

Each of the first to (h)-th multiplication scaling circuits 224_1 to 224_h may receive different common scaled input vectors. For example, the first to (h)-th multiplication scaling circuits 224_1 to 224_h may receive the first to (h)-th multiplication scaled input vectors (e.g., $\overrightarrow{CSX_1}$ to $\overrightarrow{CSX_h}$), respectively.

Each of the first to (h)-th multiplication scaling circuits 224_1 to 224_h may sequentially receive the plurality of common scaled input elements for the corresponding scaled input vector. For example, the first multiplication scaling circuit 224_1 may sequentially receive the plurality of common scaled input elements CSIE included in the first common multiplication scaled input vector (e.g., $\overrightarrow{CSX_1}$).

The multiplication scaler SCL_multiple may sequentially receive the plurality of multiplication scale coefficients MSC from the multiplication scale coefficient buffer 210. For example, each of the first to (h)-th multiplication scaling circuits 224_1 to 224_h may sequentially receive the plurality of multiplication scale coefficients MSC from the multiplication scale coefficient buffer 210. For a more detailed example, each of the first to (h)-th multiplication scaling circuits 224_1 to 224_h may receive the first-to-Rth multiplication scale coefficients MSC1 to MSCR (e.g., $2^0$ to $2^{R-1}$).

Each of the first to (h)-th multiplication scaling circuits 224_1 to 224_h may perform multiplication scaling on the received common scaled input vector based on the plurality of multiplication scale coefficients MSC. That is, the first to (h)-th multiplication scaling circuits 224_1 to 224_h may perform the multiplication scaling on the first to (h)-th common scaled input vectors to generate the first to (h)-th quantization scaled input vectors (e.g., $\overrightarrow{QSX_1}$ to $\overrightarrow{QSX_h}$), respectively.

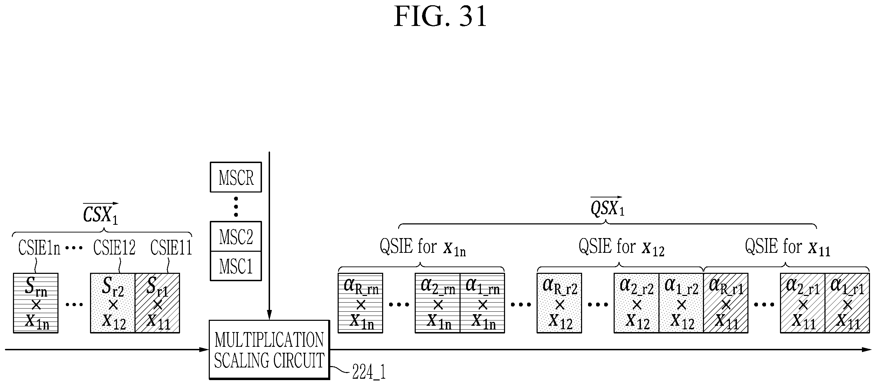

For example, the first multiplication scaling circuit 224_1 may generate a first quantization scaled input vector (e.g., $\overrightarrow{QSX_1}$) by multiplying each of the plurality of common multiplication scaled input elements CSIE included in the first common multiplication scaled input vector (e.g., $\overrightarrow{CSX_1}$) with the first-to-Rth multiplication scale coefficients MSC1 to MSCR. The operation of the first to (h)-th multiplication scaling circuits 224_1 to 224_h will be described in more detail below with reference to FIG. 31.

FIG. 30 is a diagram illustrating in more detail the operation of the common scaling circuit of FIG. 29. Hereinafter, for a more concise description, the operation of the first common scaling circuit 223_1 will be representatively described with reference to FIGS. 1 to 4, 23 to 26, and 29 and 30. However, example embodiments are not limited thereto, and the second to (h)-th common scaling circuits 223_2 to 223_h may also operate in a similar manner.

The first common scaling circuit 223_1 may receive the first input vector (e.g., $\overrightarrow{X_1}$). That is, the first common scaling circuit 223_1 may sequentially receive $x_{11}$ to $x_{1n}$.

The first common scaling circuit 223_1 may sequentially receive the plurality of common scale coefficients CSC. For example, the first common scaling circuit 223_1 may sequentially receive $S_{r1}$ to $S_{rn}$.

The first common scaling circuit 223_1 may generate the first common scaled input vector (e.g., $\overrightarrow{CSX_1}$) by performing the common scaling on the first input vector (e.g., $\overrightarrow{X_1}$) based on the plurality of common scale coefficients CSC. For example, the first common scaling circuit 223_1 may generate common scaled input elements CSIE11 to CSIE1n by multiplying $x_{11}$ to $x_{1n}$ with $S_{r1}$ to $S_{rn}$, respectively.

FIG. 31 is a diagram illustrating in more detail an operation of a multiplication scaling circuit of FIG. 29. Hereinafter, for a more concise description, the operation of the first multiplication scaling circuit 224_1 will be representatively described with reference to FIGS. 1 to 4, 23 to 26, and 29 and 31. However, example embodiments are not limited thereto, and the second to (h)-th multiplication scaling circuits 224_2 to 224_h may also operate in a similar manner.

The first multiplication scaling circuit 224_1 may receive the first common scaled input vector (e.g., $\overrightarrow{CSX_1}$). That is, the first multiplication scaling circuit 224_1 may sequentially receive the common scaled input elements CSIE11 to CSIE1n described above with reference to FIG. 30. The first multiplication scaling circuit 224_1 may sequentially receive the first-to-Rth multiplication scale coefficients MSC1 to MSCR.

The first multiplication scaling circuit 224_1 may generate the plurality of quantization scaled input elements QSIE by multiplying each of the received common scaled input elements CSIE11 to CSIE1n with the first-to-Rth multiplication scale coefficients MSC1 to MSCR.

For example, the first multiplication scaling circuit 224_1 may generate the plurality of quantization scaled input elements QSIE for $x_{11}$ by multiplying the common scaled input element CSIE11 with each of the first-to-Rth multiplication scale coefficients MSC1 to MSCR. In more detail, the first multiplication scaling circuit 224_1 may generate the plurality of quantization scaled input elements QSIE respectively corresponding to "$\alpha_{1\_r1} \times x_{11}$" to "$\alpha_{R\_r1} \times x_{11}$" by multiplying the common scaled input element CSIE11 with each of $2^0$ to $2^{R-1}$ (illustrated as diagonal stripe).

Similarly, the first multiplication scaling circuit 224_1 may generate the plurality of quantization scaled input elements QSIE for $x_{12}$ by multiplying the common scaled input element CSIE12 with each of the first-to-Rth multiplication scale coefficients MSC1 to MSCR (illustrated as a dot pattern).

In this way, the first multiplication scaling circuit 224_1 will be able to sequentially calculate the plurality of quantization scaled input elements QSIE corresponding to $x_{13}$ to $x_{1n}$.

In example embodiments, the first to (h)-th multiplication scaling circuits 224_1 to 224_h may calculate the quantization scaled input elements by increasing the exponent part EXPP of the multiplication scaled input element, as above described with reference to FIG. 10. In this case, the computational amount of the first to (h)-th multiplication scaling circuits 224_1 to 224_h may be reduced or minimized.

The first multiplication scaling circuit 224_1 may sequentially output the plurality of quantization scaled input elements QSIE. For example, the first multiplication scaling circuit 224_1 may provide the plurality of quantization scaled input elements QSIE to the first data type converter 230.

That is, according to various example embodiments of FIGS. 29 to 31, the input vector scaler 220 may perform the common scaling on each of the plurality of input vectors and then perform the multiplication scaling to generate the plurality of quantization scaled input vectors QSX.

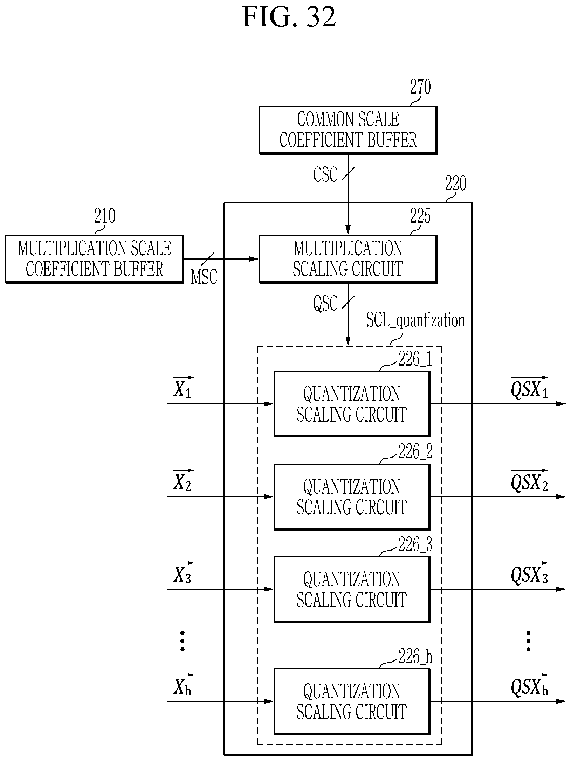

FIG. 32 is a block diagram illustrating a configuration of the input vector scaler of FIG. 26 according to various example embodiments. Referring to FIGS. 1 to 4, 23 to 26, and 32, the input vector scaler 220 may include a multiplication scaling circuit 225 and the quantization scaler SCL_quantization. The quantization scaler SCL_quantization may include first to (h)-th quantization scaling circuits 226_1 to 226_h.

The multiplication scaling circuit 225 may sequentially receive the plurality of multiplication scale coefficients MSC from the scale coefficient buffer 210. For example, the multiplication scaling circuit 225 may sequentially receive the first-to-Rth multiplication scale coefficients MSC1 to MSCR (e.g., $2°$ to $2^{R-1}$).

The multiplication scaling circuit 225 may sequentially receive the plurality of common scale coefficients CSC from the common scale coefficient buffer 270. For example, the multiplication scaling circuit 225 may sequentially receive $S_{r1}$ to $S_{rn}$.

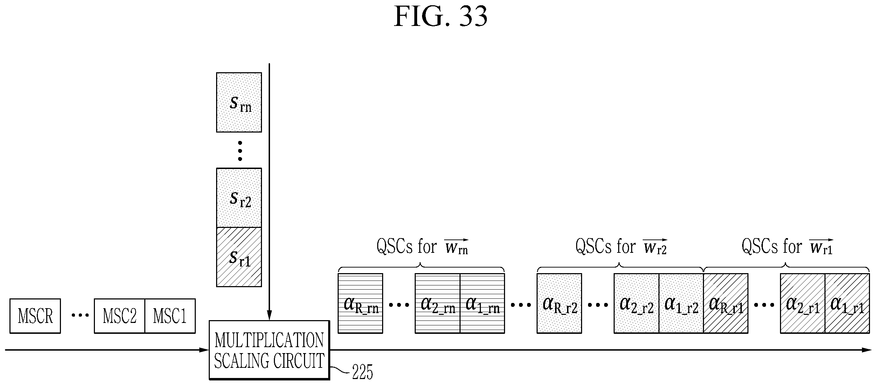

The multiplication scaling circuit 225 may generate the plurality of quantization scale coefficients QSC based on the plurality of multiplication scale coefficients MSC and the plurality of common scale coefficients CSC. For example, the multiplication scaling circuit 225 may generate the plurality of quantization scale coefficient QSC by multiplying each of the plurality of common scale coefficients CSC with the plurality of multiplication scale coefficients MSC. The operation of the multiplication scaling circuit 225 is described in more detail below with reference to FIG. 33.

The quantization scaler SCL_quantization may receive the plurality of quantization scale coefficients QSC. For example, each of the first to (h)-th quantization scaling circuits 226_1 to 226_h may receive the plurality of quantization scale coefficients QSC from the multiplication scale circuit 225. In this case, the quantization scale coefficients QSC received by each of the first to (h)-th quantization scaling circuits 226_1 to 226_h may be same.

Each of the first to (h)-th multiplication scaling circuits 226 to 226_h may receive different input vectors. For example, the first to (h)-th quantization scaling circuits 226_1 to 226_h may receive the first to (h)-th input vectors (e.g., $\overrightarrow{X_1}$ to $\overrightarrow{X_h}$), respectively. That is, each of the first to (h)-th quantization scaling circuits 226_1 to 226_h may sequentially receive the plurality of input elements for the corresponding input vector. For example, the first common scaling circuit 226_1 may sequentially receive $x_{11}$ to $x_{1n}$.

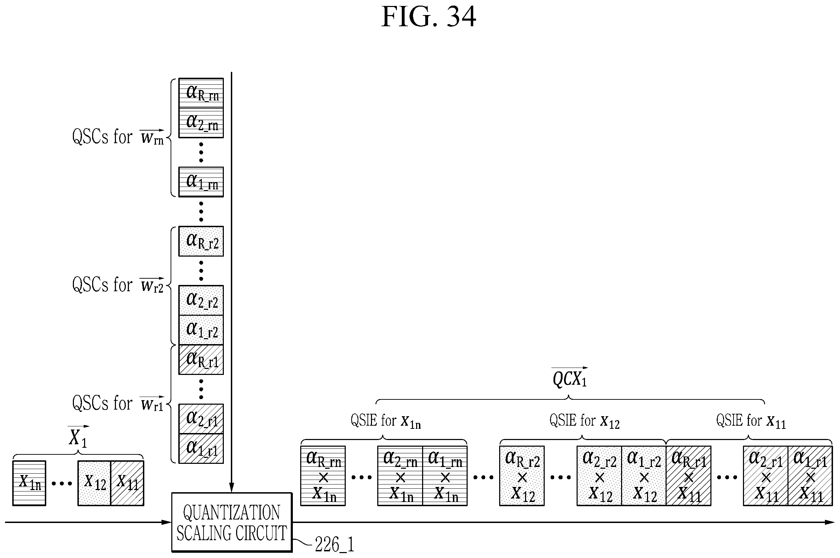

Each of the first to (h)-th quantization scaling circuits 226_1 to 226_h may perform quantization scaling on the received input vector based on the plurality of quantization scale coefficients QSC. For example, the first to (h)-th quantization scaling circuits 226_1 to 226_h may generate the first to (h)-th quantization scaled input vectors (e.g., $\overrightarrow{QSX_1}$ to $\overrightarrow{QSX_h}$), respectively. The operation of the first to (h)-th quantization scaling circuits 226_1 to 226_h will be described in more detail below with reference to FIG. 34.

FIG. 33 is a diagram illustrating in more detail an operation of a multiplication scaling circuit of FIG. 32. Referring to FIGS. 1 to 4, 23 to 26, and 32 and 33, the multiplication scaling circuit 225 may sequentially receive the first-to-Rth multiplication scale coefficients MSC1 to MSCR (e.g., $2^0$ to $2^{R-1}$). The multiplication scaling circuit 225 may sequentially receive $S_{r1}$ to $S_{rn}$.

The multiplication scaling circuit 225 may generate the plurality of quantization scale coefficients QSC (e.g., $\alpha_{1\_r1}$ to $\alpha_{R\_rn}$) by multiplying each of $S_{r1}$ to $S_{rn}$ with each of the multiplication scale coefficients MSC.

For example, the multiplication scaling circuit 225 may generate the quantization scale coefficients (e.g., $\alpha_{1\_r1}$ to $\alpha_{R\_r1}$) for the first row vector (e.g., $\overrightarrow{w_{r1}}$) of the weight matrix WM by multiplying $S_{r1}$ with the first-to-Rth multiplication scale coefficients MSC1 to MSCR (illustrated as diagonal stripe).

Similarly, the multiplication scaling circuit 225 may generate the quantization scale coefficients QSC (e.g., $\alpha_{1\_r2}$ to $a_{R\_r2}$) for the second row vector (e.g., $\overrightarrow{w_{r2}}$) of the weight matrix WM by multiplying $S_{r2}$ with the first-to-Rth multiplication scale coefficients MSC1 to MSCR (illustrated as a dot pattern).

In this way, the first common scaling circuit 222_1 will be able to sequentially calculate the plurality of quantization scale coefficients QSC corresponding to $S_{r3}$ to $S_{rn}$.

In example embodiments, the multiplication scaling circuit 225 may calculate the quantization scale coefficient QSC by increasing the exponent EXPP of the common scale coefficient CSC, similar to that described above with reference to FIG. 10.

FIG. 34 is a diagram illustrating in more detail the operation of the quantization scaling circuit of FIG. 32. Hereinafter, for a more concise description, the operation of the first quantization scaling circuit 226_1 will be representatively described with reference to FIGS. 1 to 4, 23 to 26, and 32 to 34. However, example embodiments are not limited thereto, and the second to (h)-th quantization scaling circuits 226_2 to 226_h may also operate in a similar manner.

The first quantization scaling circuit 226_1 may receive the first input vector (e.g., $\overrightarrow{X_1}$). That is, the first quantization scaling circuit 226_1 may sequentially receive $x_{11}$ to $x_{1n}$.

The first quantization scaling circuit 226_1 may receive the plurality of quantization scale coefficients QSC. For example, the first quantization scaling circuit 226_1 may sequentially receive $\alpha_{1\_r1}$ to $\alpha_{R\_rn}$ described above with reference to FIG. 33.

The first quantization scaling circuit 226_1 may perform the quantization scaling on the plurality of input elements based on the plurality of quantization scale coefficients QSC. For example, the first quantization scaling circuit 226_1 may generate the plurality of quantization scaled input elements QSIE by multiplying each of the plurality of quantization scale coefficients QSC with corresponding input elements.

For example, the first quantization scaling circuit 226_1 may generate the plurality of quantization scaled input elements QSIE for $x_{11}$ by multiplying $\alpha_{1\_r1}$ to $\alpha_{R\_r1}$ with $x_{11}$ (illustrated as diagonal stripe).

Similarly, the first quantization scaling circuit 226_1 may generate the plurality of quantization scaled input elements QSIE for $x_{12}$ by multiplying $\alpha_{1\_r2}$ to $\alpha_{R\_r2}$ with $x_{12}$ (illustrated as a dot pattern).

In this way, the first quantization scaling circuit 226_1 may generate the plurality of quantization scaled input elements QSIE based on $x_{13}$ to $x_{1n}$.

That is, according to various example embodiments of FIGS. 32 to 34, the input vector scaler 220 may generate the plurality of quantization scaled input vectors by generating the plurality of quantization scale coefficients, and then performing quantization scaling for each of the plurality of input vectors based on the plurality of generated quantization scale coefficients. In this case, unlike various example embodiments described above with reference to FIGS. 27 to 31, the input vector scaler 220 may include only one multiplication scaling circuit. However, example embodiments are not limited thereto.

Referring to FIGS. 27 to 34, the input vector scaler 220 may generate the plurality of quantization scaled input elements (e.g., quantization scaled input elements QSIE illustrated as diagonal stripe) based on one input element (e.g., $x_{11}$). In other words, the input vector scaler 220 may generate the plurality of quantization scaled input elements QSIE by using one input element repeatedly. This may be achieved through the use of a buffer or memory. Therefore, according to various example embodiments, the input reuse of the matrix multiplier 200 may be increased or maximized, and thus, the number of times the matrix multiplier 200 receives input elements from the outside may be reduced or minimized. In this case, the number of times the matrix multiplier 200 accesses an external memory device where the input elements stored may be reduced or minimized, so the operation efficiency and operating speed of the matrix multiply device MMD may be improved.

FIG. 35 is a block diagram illustrating a configuration of the first data type converter of FIG. 26. Referring to FIGS. 1, 4, and 23 to 35, the first data type converter 230 may include first to (h)-th exponent extraction circuits 231_1 to 231_h and first to (h)-th data type conversion circuits 232_1 to 232_h.

Each of the first to (h)-th exponent extraction circuits 231_1 to 231_h may receive different quantization scaled input vectors QSX. For example, the first to (h)-th exponent extraction circuits 231_1 to 231_h may receive the first to (h)-th quantization scaled input vectors (e.g., $\overrightarrow{QSX_1}$ to $\overrightarrow{QSX_h}$), respectively.

Each of the first to (h)-th exponent extraction circuits 231_1 to 231_h may extract the exponent from the plurality of quantization scaled input elements QSIE included in the received quantization scaled input vector QSX. For example, the first exponent extraction circuit 231_1 may sequentially receive the plurality of quantization scaled input elements QSIE included in the first quantization scaled input vector $\overrightarrow{QSX_1}$. The first exponent extraction circuit 231_1 may extract the first exponent EXP1 from the plurality of quantization scaled input elements QSIE included in the received first quantization scaled input vector $\overrightarrow{QSX_1}$. In this way, the first to (h)-th exponent extraction circuits 231_1 to 231_h may extract first to (h)-th exponents EXP1 to EXPh, respectively.

The first to (h)-th exponent extraction circuits 231_1 to 231_h may provide the extracted exponents to the first to (h)-th data type conversion circuits 232_2 to 232_h, respectively. In addition, each of the first to (h)-th exponent extraction circuits 231_1 to 231_h may provide each of the extracted exponents to the second data type converter 260.

A detailed method of extracting the exponent from the received element by each of the first to h-th exponent extract circuits 231_1 to 231_h is similar to the operation of the exponent extraction circuit described above with reference to FIGS. 11 and 12, so that a detailed description thereof is omitted.

The first to (h)-th data type conversion circuits 232_1 to 232_h may receive the first to (h)-th exponents EXP1 to EXPh, respectively. The first to (h)-th data type conversion circuits 232_1 to 232_h may receive the first to (h)-th quantization scaled input vectors (e.g., $\overrightarrow{QSX_1}$ to $\overrightarrow{QSX_h}$), respectively.

Each of the first to (h)-th data type conversion circuits 232_1 to 232_h may convert a data type of the received quantization scaled input vector into fixed point based on the received exponent. That is, the first to (h)-th data type conversion circuits 232_1 to 232_h may output the first to (h)-th fixed point quantization scaled input vectors (e.g., $\overrightarrow{QSX'_1}$ to $\overrightarrow{QSX'_h}$), respectively. For example, the first data type conversion circuit 232_1 may convert each of the quantization scaled input elements QSIE included in the first quantization scaled input vector (e.g., $\overrightarrow{QSX'_1}$) into the fixed point format based on the first exponent EXP1.

A specific method in which each of the first to (h)-th data type conversion circuits 232_1 to 232_h convert the data type of the quantization scaled input element QSIE to fixed point is similar to the operation of the data type described above with reference to FIGS. 11 and 13, so that a detailed description thereof is omitted.

FIG. 36 is a block diagram illustrating in more detail a configuration of a processing element array of FIG. 26. Referring to FIGS. 1 to 4 and 23 to 36, the processing element array 250 may include a plurality of processing elements PE arranged in a row direction and a column direction. Hereinafter, for a more concise description, it is assumed that the plurality of processing elements PE are arranged with (h) rows and (m) columns. In addition, the processing element arranged in the (i)-th row and (j)-th column of the processing element array 150 will be referred to as "PEij". For example, the processing element arranged in the first row and second column of processing element array 250 will be referred to as "PE12."

The processing element array 250 may include the first to (h)-th processing element rows PER1 to PERh. Each of the first to (h)-th processing element rows PER1 to PERh may include the plurality of processing elements PE. For example, the first processing element row PER1 may include processing elements PE11 to PE1m.

The processing element array 150 may include first to (h)-th processing element columns PEC1 to PECm. Each of the first to (m)-th processing element columns PEC1 to PECm may include the plurality of processing elements PE. For example, the first processing element column PEC1 may include processing elements PE11 to PEh1.

Different processing element rows may receive different fixed point quantization scaled input vectors QSXfxp. For example, the first to (h)-th processing element rows PER1 to PERh may receive the first to (h)-th fixed point quantization scaled input vectors (e.g., $\overrightarrow{QSX'_1}$ to $\overrightarrow{QSX'_h}$) respectively.

The processing elements included in same processing element row may receive the same fixed point multiplication scaled input vector QSXfxp. For example, each of the processing elements PE11 to PE1m may receive the first fixed point quantization scaled input vector (e.g., $\overrightarrow{QSX'_1}$).

Different processing element columns may receive a plurality of different quantization sign bits QSBs. For example, the first to (m)-th processing element columns PEC1 to PECm may receive the first to (m)-th plurality of quantization sign bits QSBs_1 to QSBs_m, respectively.

Processing elements arranged in the same processing element column may receive the plurality of same quantization sign bits QSBs. For example, each of the processing elements PE11 to PEh1 may receive the first plurality of quantization sign bits QSBs_1, and each of the processing elements PE12 to PEh2 may receive the second plurality of quantization sign bits QSBs_2.

Each of the plurality of processing elements PE may calculate different fixed point output elements based on the received plurality of fixed point quantization scaled input elements QSIEfxp and the plurality of quantization sign bits QSBs. That is, according to some example embodiments, one processing element PE may calculate one fixed point output element. For example, the processing element PEij may calculate $y'_{ij}$. Hereinafter, the fixed point output element calculated in each processing element PE will be described in more detail.

Each of the first to (h)-th processing element rows PER1 to PERh may calculate different fixed point output vectors. For example, the first to (h)-th processing element rows PER1 to PERh may output the first to (h)-th fixed point output vectors (e.g., $\overrightarrow{Y'_1}$ to $\overrightarrow{Y'_h}$) respectively.

The processing elements arranged in the same processing element row and different processing element columns may calculate different fixed point output elements. For example, the processing elements PE11 to PE1m may calculate $y'_{11}$ to $y'_{1m}$ respectively. In a similar manner, the processing elements PE21 to PE2m may calculate $y'_{21}$ to $y'_{2m}$ respectively, and the processing elements PEh1 to PEhm may calculate $y'_{h1}$ to $y'_{hm}$ respectively.

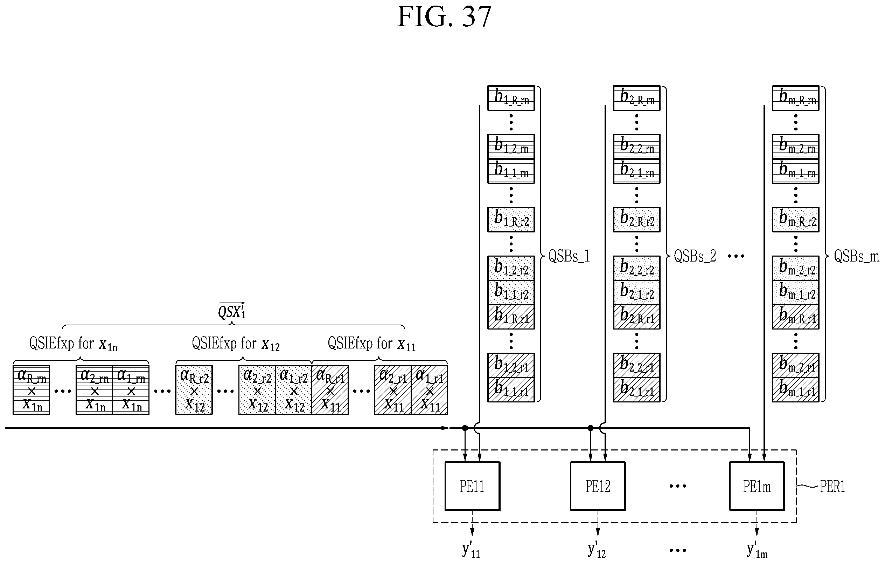

FIG. 37 is a block diagram illustrating in more detail an operation of the processing elements of FIG. 36. Hereinafter, the operation of the first processing element row PER1 will be representatively described with reference to FIGS. 1 to 4 and 23 to 37. However, example embodiments are not limited thereto, and the second to (h)-th processing element rows PER2 to PERh may also operate in a similar manner.

The first processing element row PER1 may receive the first fixed point quantization scaled input vector (e.g., $\overrightarrow{QSX'_1}$). For example, the first processing element row PER1 may sequentially receive the plurality of fixed point quantization scaled input elements QSIEfxp. That is, the first processing element row PER1 may sequentially receive a plurality of quantization scaled input elements QSIE described above with reference to FIGS. 28, 31, and 34 with fixed point format.

The processing elements PE11 to PE1m may receive the first plurality of quantization sign bits QSBs_1 to the (m)-th plurality of quantization sign bits QSBs_m, respectively. For example, the processing element PE11 may receive the first plurality of quantization sign bits QSBs_1, and the processing element PE12 may receive the second plurality of quantization sign bits QSBs_2.

The first plurality of quantization sign bits QSBs_1 may include quantization sign bits QSBs arranged in a first column of the first to (R)-th quantization sign bit matrices QSBM_1 to QSBM_R described above with reference to FIG. 25. For example, the first plurality of quantization sign bits QSBs_1 are quantization sign bits arranged in the first column of each of the first to (R)-th quantization sign bit matrices QSBM_1 to QSBM_R (e.g., $b_{1\_1\_r1}$ to $b_{1\_R\_rm}$).

More specifically, the processing element PE11 may sequentially receive the quantization sign bits arranged in the first row and first column of each of the first to (R)-th quantization sign bit matrices QSBM_1 to QSBM_R (e.g., $b_{1\_1\_r1}$ to $b_{1\_R\_r1}$); and then sequentially receive the quantization sign bits arranged in the second row and first column of each of the first to (R)-th quantization sign bit matrices QSBM_1 to QSBM_R (e.g., $b_{1\_1\_r2}$ to $b_{1\_R\_r2}$). In this way, the processing element PE11 may sequentially receive the quantization sign bits arranged in the (n)-th row and first column of each of the first to (R)-th quantization sign bit matrices QSBM_1 to QSBM_R (e.g., $b_{1\_1\_rn}$ to $b_{1\_R\_rn}$).

That is, the processing element PE11 may sequentially receive the pair of quantization sign bit QSB and fixed point quantization scaled input element QSIEfxp corresponding to each other.

The processing element PE11 may calculate the fixed point output element (e.g., $y'_{11}$) based on the order in which the quantization sign bits QSB and the plurality of fixed point multiplication scaled input elements QSIEfxp are received. For example, the processing element PE11 may calculate the fixed point output element $y'_{11}$ by subtracting a second value obtained by summing the fixed point multiplication scaled input elements corresponding to quantization sign bits QSB representing '1' among the fixed point quantization scaled input elements QSIEfxp, from a first value obtained by summing the fixed point quantization scaled input elements corresponding to quantization sign bit QSB representing '0' among the plurality of fixed point scaled input elements QSIEfxp.

In this way, the processing element PE1j may receive the j-th plurality of quantization sign bits QSBs_j (e.g., $b_{1\_1\_cj}$ to $b_{n\text{-}R\text{-}cj}$). The processing element PE1j may receive the plurality of fixed point quantization scaled input elements QSIEfxp included in the first fixed point quantization scaled input vector (e.g., $\overrightarrow{QSX'_1}$). The processing element PE1j may calculate the output element "$y'_{1j}$" based on the j-th plurality of quantization sign bits QSBsJ and the first fixed point quantization-multiplication scaled input vector (e.g., $\overrightarrow{QSX'_1}$).

For a more detailed example, the processing element PE may calculate the fixed point output element OEfxp according to Equation 23 below.

(Equation 23)

$$OEfxp = \sum QSIEfxp \times (-1)^{QSB}$$

Referring to Equation 23, OEfxp may represent the fixed point output element, and QSIEfxp and QSB may represent the pair of quantization sign bit QSB and fixed point quantization scaled input element QSIEfxp provided to the processing element PE. That is, the processing element PE may calculate the fixed point output element by sequentially performing calculations of adding or subtracting the value of the fixed point quantization scaled input element QSIEfxp based on the received quantization sign bit QSB. However, example embodiments are not limited thereto.

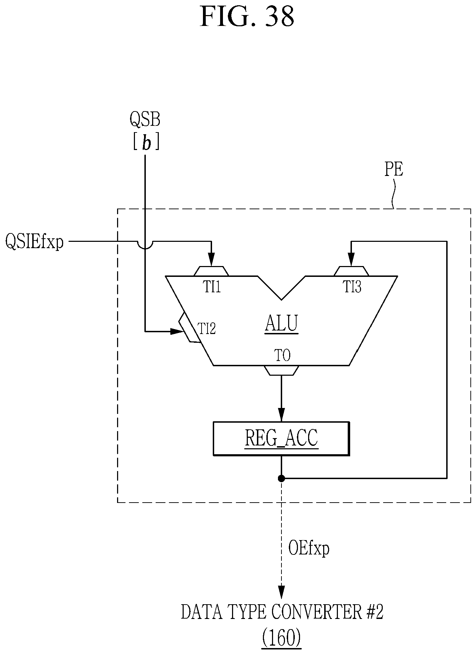

FIG. 38 is a diagram illustrating a configuration of one of the processing elements of FIG. 36 implemented according to various example embodiments. Referring to FIGS. 1 to 4 and 23 to 38, the processing element PE may include an arithmetic logic unit ALU and an accumulation register REG_ACC.

The arithmetic logic unit ALU may include first to third input terminals TI1 to TI3 and an output terminal TO. The first input terminal TI1 may sequentially receive a plurality of fixed point quantization scaled input elements QSIEfxp. The second input terminal TI2 may sequentially receive a plurality of quantization sign bits QSB. The third input terminal TI3 may be connected to the accumulation register REG_ACC.

In example embodiments, each fixed point quantization scaled input element QSIEfxp may have a code length of 8-bit, and the arithmetic logic unit ALU may be configured to receive data in 8-bit units through the first input terminal TI1.

When the value received by the second input terminal TI2 is '0', the arithmetic logic unit ALU may store the sum of the value received by the first input terminal TI1 and the third input terminal TI3 in the accumulation register REG_ACC through the output terminal TO. On the other hand, when the value received by the second input terminal TI2 is '1', the arithmetic logic unit ALU may store a value in the accumulation register REG_ACC, which is obtained by subtracting a value provided to the first input terminal TI1 from a value provided to the third input terminal TI3. That is, when receiving a quantization sign bit QSB at the second terminal TI2 equal to '0' the arithmetic logic unit ALU may calculate the sum of the values input into the first and third terminals TI1 and TI3 and output the sum through output terminal TO. Similarly, when receiving when receiving a quantization sign bit QSB at the second terminal TI2 equal to '1' the arithmetic logic unit ALU may subtract the value input into the first terminal TI1 from the value input into the third terminal TI3 and output the resulting value through output terminal TO. The accumulation register may store the most recently received value output from the arithmetic logic unit ALU and feed that value back to the third input terminal TI3.

In this way, the processing element PE may be able to store the fixed point output element OEfxp calculated according to Equation 23 described above in the accumulation register REG_ACC. In this case, the fixed point output element OEfxp stored in the accumulation register REG_ACC may be provided to the second data type converter 260. However, example embodiments are not limited to the specific method in which the processing element PE performs the calculation and the specific configuration method of the processing element PE.

In example embodiments, the fixed point output element OEfxp may have a code length of 8-bit or more. For example, the fixed point output element OEfxp may have a code length long enough to represent the accumulated size of the plurality of fixed point quantization scaled input elements QSIEfxp.

In example embodiments, the accumulation register REG_ACC may have a size of 8-bit or more. For example, the accumulation register REG_ACC may have a size large enough to store the fixed point output element OEfxp.

In example embodiments, the fixed point output element OEfxp may have a code length of 10-bit to 12-bit or more. However, example embodiments are not limited thereto.

In example embodiments, the accumulation register REG_ACC may have a size of 10-bit to 12-bit. However, example embodiments are not limited thereto.

In example embodiments, the plurality of fixed point quantization scaled input elements QSI Efxp received by the arithmetic logic unit ALU may correspond to same exponent value. In this case, the arithmetic logic unit ALU may be able to perform the operation of Equation 23 described above even without considering the place value of each of the plurality of fixed point quantization scaled input elements QSIEfxp. Accordingly, the arithmetic logic unit ALU may calculate the fixed point output element OEfxp with a reduced or minimum amount of calculation.

In example embodiments, the processing element PE may not include a '1-bit adder' to perform the multiplication operation on the multiplication scale coefficient MSC. That is, according to some example embodiments, since the quantization scaled input element QSIE being provided to the processing element array 250, each processing element PE may be implemented not to perform the calculation on the multiplication scale coefficient MSC. In this case, instead of each processing element PE including the circuit element for performing the multiplication calculation for the multiplication scale coefficient MSC, only one multiplication scaling circuit may be included in each processing element row PER (e.g., when the input vector scaler 220 is implemented according to various example embodiments described above with reference to FIGS. 27 to 31); or only one multiplication scaling circuit may exist for the whole processing element array 250 (e.g., when the input vector scaler 220 is implemented according to various example embodiments described above with reference to FIGS. 32 to 34). Therefore, the size and production cost of the matrix multiplier 200 may be reduced.

FIG. 39 is a diagram illustrating an operation of the second data type converter of FIG. 26. Hereinafter, for a more concise description, the operation of the second data type converter 260 for one fixed point output element OEfxp will be representatively described. However, example embodiments are not limited thereto. For example, the second data type converter 260 may operate in a similar manner for any fixed point output element OEfxp.

Referring to FIGS. 1 to 4 and 23 to 39, the second data type converter 260 may receive the fixed point output element OEfxp. For example, the second data type converter 260 may receive one of $y'_{11}$ to $y'_{hn}$.

The second data type converter 260 may receive the first to (h)-th exponents EXP1 to EXPh from the first data type converter 230. In this case, the first to (h)-th exponents EXP1 to EXPh may correspond to the first fixed point output vector (e.g., $\overrightarrow{Y'_1}$) to the (h)-th fixed point output vector (e.g., $\overrightarrow{Y'_h}$) respectively.

The fixed point output element OEfxp may include an sign part SP and a mantissa part MTSP. The second data type converter 260 may generate the output element OE by converting the data type of the fixed point output element OEfxp to floating point.

The method in which the second data type converter 260 converts the data type of the fixed point output element OEfxp is similar to the method in which the second data type converter 160 converts the data type of the fixed point partial product PSPfxp described above with reference to FIG. 18, and therefore, detailed description thereof will be omitted.

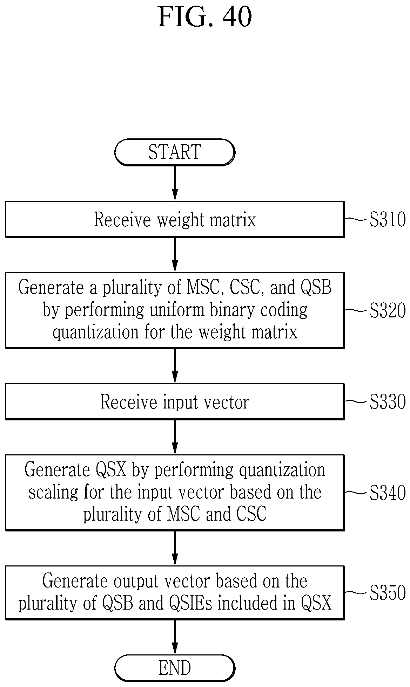

FIG. 40 is a flowchart illustrating the operation of the matrix multiply device of FIG. 1. Hereinafter, referring to FIGS. 1 to 4, and 23 to 40, the operation of the matrix multiply device MMD that receives one input vector (e.g., $\overrightarrow{X_1}$) and outputs one output vector (e.g., $\overrightarrow{Y_1}$) will be described.

In operation S310, the matrix multiply device MMD may receive the weight matrix WM. For example, the uniform BCQ circuit UBC may receive the plurality of weights (e.g., $w_{11}$ to $w_{nm}$) included in the weight matrix WM.

In operation S320, the matrix multiply device MMD may generate a plurality of multiplication scale coefficients MSC, a plurality of common scale coefficients CSC, and a plurality of quantization sign bits QSB by performing uniform binary coding quantization for the weight matrix WM. For example, the uniform BCQ circuit UBC may approximate each weight based on a plurality of multiplication scale coefficients MSC, one common scale coefficient CSC, and a plurality of quantization sign bits QSBs. The uniform BCQ circuit UBC may provide the plurality of generated multiplication scale coefficients MSC, the plurality of common scale coefficients CSC, and the plurality of quantization sign bits QSBs to the matrix multiplier 200. In this case, the plurality of multiplication scale coefficients MSC may be stored in the multiplication scale coefficient buffer 210, the plurality of common scale coefficients CSC may be stored in the common scale coefficient buffer 270, and the plurality of quantization sign bits QSB may be stored in the quantization sign bit buffer 240. However, example embodiments are not limited thereto.

In operation S330, the matrix multiply device MMD may receive the input vector (e.g., $\overline{X_1}$). For example, the matrix multiplier 200 may receive the plurality of input elements (e.g., $x_{11}$ to $x_{1n}$) included in the input vector.

In example embodiments, the matrix multiply device MMD may perform operation S330 regardless of the order of operations S310 to S320. For example, the matrix multiply device MMD may perform operation S330 followed by operations S310 to S320, or perform operation S330 between operations S310 and S320.

In operation S340, the matrix multiply device MMD may generate a quantization scaled input vector QSX by performing the quantization scaling for the input vector based on the plurality of multiplication scale coefficients MSC and the plurality of common scale coefficients CSC. For example, the input vector scaler 220 may generate the plurality of quantization scaled input elements QSIE by performing the quantization scaling for each of the plurality of input elements based on the plurality of multiplication scale coefficients MSC and the plurality of common scale coefficients CSC.

In operation S350, the matrix multiply device MMD may generate the output vector (e.g., $\overrightarrow{Y_1}$) based on the plurality of quantization scaled input elements QSIE included in the quantization scaled input vector QSX and the plurality of quantization sign bits QSBs. For example, the matrix multiplier 200 may generate one output element (e.g., $y_{11}$) by performing calculations of sequentially adding or subtracting the plurality of quantization scaled input elements QSIE included in the quantization scaled input vector QSX based on the first plurality of quantization sign bits QSBs_1. In this way, the matrix multiplier 200 may generate the plurality of output elements included in the output vector.

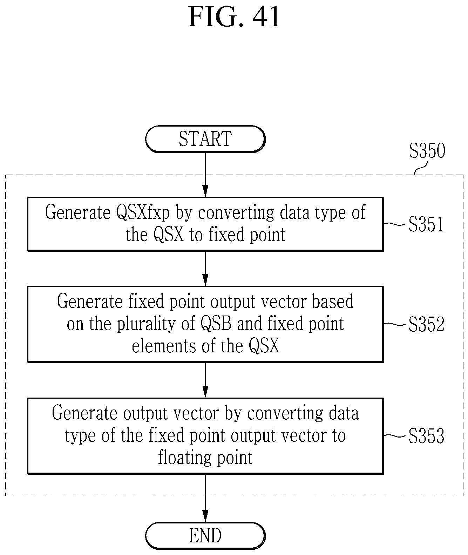

FIG. 41 is a flowchart illustrating in more detail operation S350 of FIG. 40. Referring to FIGS. 1 to 4 and 23 to 41, operation S350 may include operations S351 to S353.

In operation S351, the matrix multiplier 200 may generate the fixed point quantization scaled input vector QSXfxp by converting the data type of the quantization scaled input vector QSX to fixed point. That is, the matrix multiplier 200 may generate the fixed point quantization scaled input vector QSXfxp based on the quantization scaled input vector QSX. For example, the first data type converter 230 may generate the plurality of fixed point quantization scaled input elements QSIEfxp by converting each data type of the plurality of quantization scaled input elements QSIE to fixed point.

In operation S352, the matrix multiplier 100 may generate the fixed point output vector (e.g., $\overrightarrow{Y'_1}$) based on the plurality of quantization sign bits QSB and the plurality of fixed point quantization scaled input elements QSIEfxp. For example, the processing element array 150 may generate the fixed point output vector by performing the calculations of sequentially adding or subtracting the plurality of fixed point quantization scaled input elements QSIEfxp based on the plurality of quantization sign bits QSBs.

More specifically, the processing element array 250 may generate one fixed point output element (e.g., $y'_{11}$) by performing the calculations of sequentially adding or subtracting the plurality of quantization scaled input elements QSIE based on the first plurality of quantization sign bits QSBs_1. Similarly, the processing element array 250 may generate one fixed point output element (e.g., $y'_{12}$) by performing the calculations of sequentially adding or subtracting the plurality of quantization scaled input elements QSIE based on the second plurality of quantization sign bits QSBs_2. In this way, the processing element array 250 may calculate the plurality of fixed point output elements OEfxp included in the fixed point output vector (e.g., $\overrightarrow{Y'_1}$).

In operation S353, the matrix multiplier 200 may convert the data type of the fixed point output vector (e.g., $\overrightarrow{Y'_1}$) to floating point. For example, the second data type converter 260 may receive the plurality of fixed point output elements OEfxp included in the fixed point output vector. The second data type converter 260 may convert the plurality of fixed point output elements OEfxp into the plurality of output elements OE respectively.

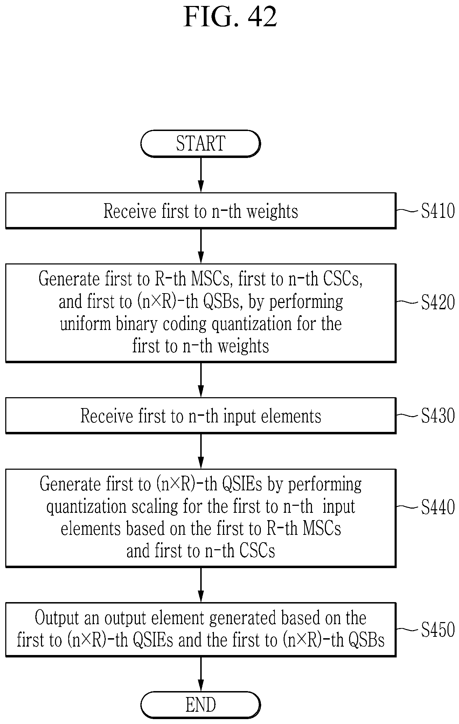

FIG. 42 is a flowchart illustrating the operation of the matrix multiply device of FIG. 1. Hereinafter, referring to FIGS. 1 to 4 and 23 to 42, the operation of the matrix multiply device MMD that receives one input vector (e.g., $\overrightarrow{X_1}$) and generates one input element (e.g., $y_{11}$) will be described.

In operation S410, the matrix multiply device MMD may receive the first to (n)-th weights. Operation S410 is similar to operation S210 described above with reference to FIG. 21, and therefore, detailed description thereof will be omitted.

In operation S420, the matrix multiply device MMD may generate the first to (R)-th multiplication scale coefficients MSC, the first to (n)-th common scale coefficients CSC, and the first-to-(NxR)th quantization sign bits QSB by performing the uniform binary coding quantization for the first to (n)-th weights. That is, the uniform BCQ circuit UBC may generate the first to (n)-th common scale coefficients CSC based on the first to (n)-th weights, unlike S220 described above with reference to FIG. 21 (which only generates a single common scale coefficient CSC for the first to n-th weights).

In operation S430, the matrix multiply device MMD may receive the first to (n)-th input elements. Operation S430 is similar to operation S230 described above with reference to FIG. 21, and therefore, detailed description thereof will be omitted.

In example embodiments, the matrix multiply device MMD may perform operation S430 regardless of the order of operations S410 to S420. For example, the matrix multiply device MMD may perform operation S430 followed by operations S410 and S420, or perform operation S430 between operations S410 and S420.

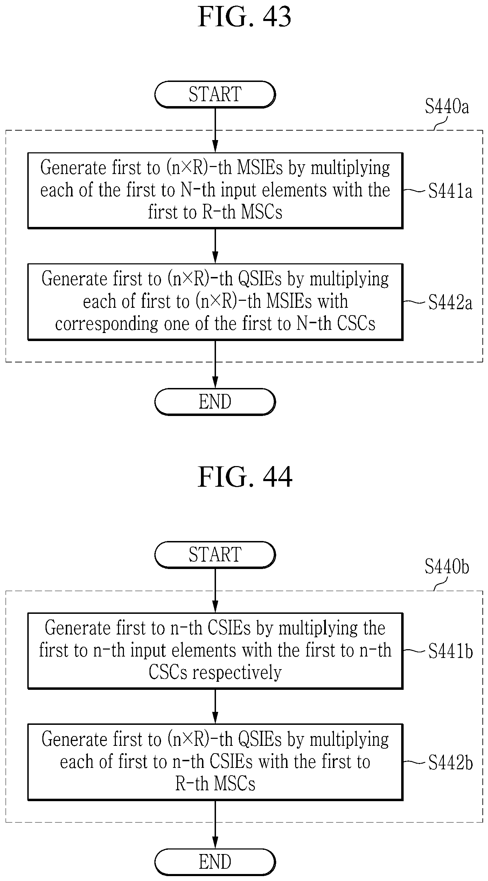

In operation S440, the matrix multiply device MMD may generate the first-to-(NxR)th quantization scaled input elements QSIE by performing the quantization scaling for the first-to-Nth input elements based on the first to (R)-th multiplication scale coefficients MSC and the first to (n)-th common scale coefficients CSC. For example, the input vector scaler 220 may generate the first-to-(NxR)th quantization scaled input elements QSIE by performing the quantization scaling for the first-to-Nth input elements in various ways as described above with reference to FIGS. 27 to 34. The more detailed operation of the input vector scaler 220 will be described in more detail below with reference to FIGS. 43 to 45.

In operation S450, the matrix multiply device MMD may generate one output element (e.g., $y_{11}$) based on the first-to-(NxR)th quantization scaled input elements QSIE and the first-to-(NxR)th quantization sign bits QSB. For example, the matrix multiplier 200 may generate one output element (e.g., $y_{11}$) by calculating a value obtained by subtracting a value obtained by summing the quantization scaled input elements QSIE corresponding to the quantization sign bits QSBs representing '1' among the first-to-(NxR)th quantization scaled input elements QSIE, from the sum of the quantization scaled input elements QSIE corresponding to the quantization sign bit QSB representing '0' among the first-to-(NxR)th quantization scaled input elements QSIE.

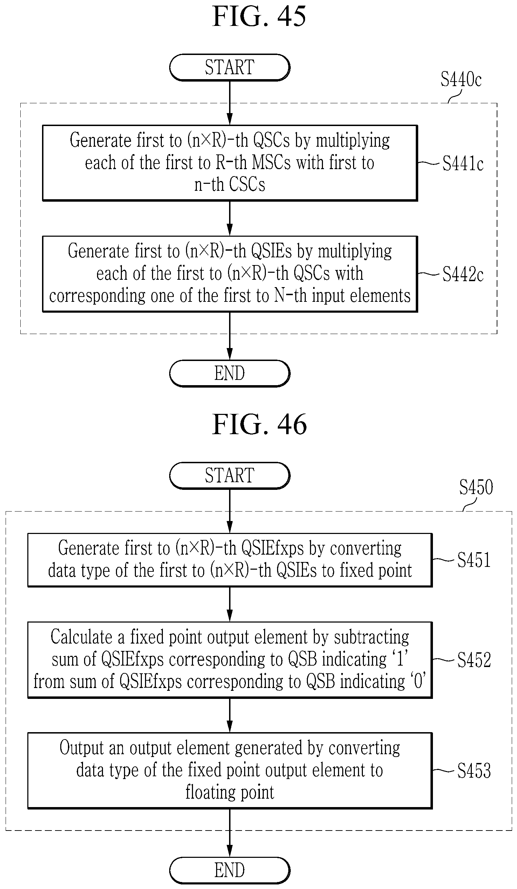

FIGS. 43 to 45 are flowcharts illustrating in more detail operation S440 of FIG. 42 implemented according to example embodiments. Hereinafter, operation S440 when the input vector scaler 220 is implemented according to various example embodiments described above with reference to FIGS. 27 to 28 will be described with reference to FIG. 43, operation S440 when the input vector scaler 220 is implemented according to various example embodiments described above with reference to FIGS. 29 to 31 will be described with reference to FIG. 44, and operation S440 when the input vector scaler 220 is implemented according to various example embodiments described above with reference to FIGS. 32 to 34 will be described with reference to FIG.45.

First, referring to FIGS. 1 to 4 and 23 to 43, operation S440 may be implemented as the following operation S440a. Operation S440a may include operations S441a and S442a.

In operation S441a, the input vector scaler 220 may generate the first-to-(NxR)th multiplication scaled input elements MSIE by multiplying each of the first-to-Nth input elements with the first to (R)-th multiplication scale coefficients MSC. For example, the first multiplication scaling circuit 221_1 may generate the first to (R)-th multiplication scaled input element MSIE by multiplying the first input element with the first to (R)-th multiplication scale coefficients MSC1 to MSCR; and generate (R+1)th-to-(2R)th multiplication scaled input elements MSIE by multiplying the second input element with the first to (R)-th scale coefficients MSC1 to MSCR.

In operation S442a, the input vector scaler 220 may multiply each of the first-to-(NxR)th multiplication scaled input elements MSIE by the corresponding one of the first to (n)-th common scale coefficients CSC to generate the first-to-(NxR)th quantization scaled input elements QSIE. For example, the first common scaling circuit 222_1 may generate the first to (R)-th quantization scaled input elements QSIE (e.g., quantization scaled input elements for $x_{11}$) by multiplying the first-to-Rth multiplication scaled input elements MSIE (e.g., multiplication scaled input elements MSIE11_1 to MSIE11_R) with the first common scale coefficient CSC (e.g., $S_{r1}$). Similarly, the first common scaling circuit 222_1 may generate the (R+1)th-to-(2R)th quantization scaled input elements QSIE (e.g., quantization scaled input elements for $x_{12}$) by multiplying the (R+1)th-to-(2R)th multiplication scaled input elements MSIE (e.g., multiplication scaled input elements MSIE12_1 to MSIE12_R) with the second common scale coefficient CSC (e.g., $S_{r2}$).

Next, referring to FIGS. 1 to 4, 23 to 42, and 44, operation S440 may be implemented as the following operation S440b. Operation S440b may include operations S441b and S442b.

In operation S441b, the input vector scaler 220 may generate the first to (n)-th common scaled input elements CSIE by multiplying the first-to-Nth input elements with the first to (n)-th common scale coefficients CSC, respectively. For example, the first common scaling circuit 223_1 may generate the first to (n)-th common scaled input elements CSIE by multiplying the first-to-Nth input elements with the first to (n)-th common scale coefficients CSC, respectively.

In operation S442b, the input vector scaler 220 may generate the first-to-(NxR)th quantization scaled input elements QSIE by multiplying each of the first-to-Nth common scaled input elements CSIE with the first to (R)-th multiplication scale coefficients MSC. For example, the first multiplication scaling circuit 224_1 may generate the first to (R)-th quantization scaled input elements QSIE by multiplying the first common scaled input element CSIE with the first to (R)-the multiplication scale coefficients MSC; and generate the (R+1)th-to-(2R)th quantization scaled input elements QSIE by multiplying the second common scaled input element CSIE with the first to (R)-th multiplication scale coefficients MSC.

Next, referring to FIGS. 1 to 4, 23 to 42, and 45, operation S440 may be implemented as the following operation S440c. Operation S440c may include operations S441c and S442c.

In operation S441c, the input vector scaler 220 may generate the first-to-(NxR)th quantization scale coefficients QSC by multiplying each of the first to (R)-th multiplication scale coefficients MSC with the first to (n)-th common scale coefficients CSC. For example, the multiplication scaling circuit 225 may generate the first-to-(NxR)th quantization scale coefficients QSC (e.g., $\alpha_{1\_r1}$ to $\alpha_{R\_rn}$) by calculating the products of different combinations (e.g. each combination) of the first to (R)-th multiplication scale coefficients MSC and the first to (n)-th common scale coefficients CSC.

In operation S442c, the input vector scaler 220 may generate the first-to-(NxR)th quantization scaled input elements QSIE by multiplying each of the first-to-(NxR)th quantization scale coefficients QSC with the corresponding one of the first to (n)-th input elements. For example, the first quantization scaling circuit 226_1 may generate the first to (R)-th quantization scaled input elements QSIE by multiplying the first input element (e.g., $x_{11}$) with the first to (R)-th quantization scale coefficients QSC (e.g., $\alpha_{1\_r1}$ to $\alpha_{R\_r1}$). Similarly, the first quantization scaling circuit 226_1 may generate the (R+1)th-to-(2R)th quantization scaled input elements QSIE by multiplying the second input element (e.g., $x_{12}$) with the (R+1)th-to-(2R)th quantization scale coefficients QSC (e.g., $\alpha_{1\_r2}$ to $\alpha_{R\_r2}$).

FIG. 46 is a flowchart illustrating in more detail operation S450 of FIG. 42. Referring to FIGS. 1 to 4 and 23 to 46, operation S450 may include operations S451 to S453.

In operation S451, the matrix multiplier 100 may generate the first-to-(NxR)th fixed point quantization scaled input elements QSIEfxp by converting the data type of the first-to-(NxR)th quantization scaled input elements QSIE to fixed point. For example, the first data type converter 230 may convert the first-to-(NxR)th quantization scaled input elements QSIE to the first-to-(NxR)th fixed point quantization scaled input elements QSIEfxp, respectively.

In operation S452, the matrix multiplier 200 may calculate one fixed point output element OEfxp by subtracting a value obtained by summing the fixed point quantization scaled input elements QSIE corresponding to the quantization sign bits QSBs representing '1' among the first-to-(NxR)th fixed point quantization scaled input elements QSIEfxp, from a sum of the fixed point quantization scaled input elements QSIEfxp corresponding to the quantization sign bit QSB representing '0' among the first-to-(NxR)th fixed point quantization scaled input elements QSIEfxp. For example, the processing element PE11 may calculate one fixed point output element OEfxp (e.g., $y'_{11}$) in the manner described above with reference to Equation 23.

In operation S453, the matrix multiplier 200 may generate one output element by converting the data type of the fixed point output element OEfxp to floating point. For example, the second data type converter 260 may receive the fixed point output element OEfxp (e.g., $y'_{11}$) and output the output element OE (e.g., $y_{11}$).

FIG. 47 is a diagram illustrating the operation of the BCQ circuit of FIG. 1 according to various example embodiments. Referring to FIGS. 1 to 4 and 47, the uniform BCQ circuit UBC may perform the binary coding quantization operation for each row of the weight matrix WM.

The uniform BCQ circuit UBC may approximate each row vector of the weight matrix WM with the sum of a zero point vector (e.g., $\overrightarrow{ZP}$) and the products of the plurality of quantization scale coefficients (e.g., $\alpha$) and the plurality of quantization sign vectors (e.g., $\vec{B}$). For example, the uniform BCQ circuit UBC may perform the uniform binary coding quantization operation for each row of the weight matrix WM based on Equation 24 below. Hereinafter, the difference from the operation of the matrix multiply device MMD described above with reference to FIGS. 23 to 46 will be mainly described.

(Equation 24)

$$\overrightarrow{w_{ri}} \approx \overrightarrow{ZP_{ri}} + \sum_{k=1}^{R}\left(\alpha_{k\_ri} \times \overrightarrow{B_{k\_ri}}\right)$$

Referring to Equation 24, $\overrightarrow{ZP_{ri}}$ may represent the zero point vector for the (i)-th row vector of the weight matrix WM. $\overrightarrow{ZP_{ri}}$ may be implemented as a row vector having the same dimension as the number of columns of the weight matrix WM. Each element of $\overrightarrow{ZP_{ri}}$ may have the same value. For example, $\overrightarrow{ZP_{ri}}$ may be expressed as Equation 25 below.

(Equation 25)

$$\overrightarrow{ZP_{ri}} = [ZPVi \quad ZPVi \quad ... \quad ZPVi]$$

Referring to Equation 25, ZPVi may represent a zero point value ZPVi included in $\overrightarrow{ZP_{ri}}$. That is, the zero point value ZPVi corresponding to the weights included in the i-th row of the weight matrix WM may be the same.

Accordingly, each of the plurality of weights included in the weight matrix WM may be approximated based on the plurality of quantization scale coefficients QSC and the plurality of quantization sign bits QSB according to Equation 26 below.

(Equation 26)

$$w_{ij} \approx ZPVi + 2^0 \times s_{ri} \times (-1)^{b_{j\_1\_ri}} + 2^1 \times s_{ri} \times (-1)^{b_{j\_2\_ri}} + \cdots + 2^{R-1} \times s_{ri} \times (-1)^{b_{j\_R\_ri}}$$

That is, according to various example embodiments of the present disclosure, one weight may be approximated based on one zero point value ZPV, R multiplication scale coefficients MSC, one common scale coefficient CSC, and R quantization sign bits QSB.

In this way, the uniform BCQ circuit UBC may approximate the weight matrix WM based on the plurality of zero point values ZPV, the plurality of multiplication scale coefficients MSC, the plurality of common scale coefficients CSC, and the plurality of quantization sign bits QSB. In this case, unlike previously described with reference to FIG. 1, the uniform BCQ circuit UBC may further provide the plurality of zero point values ZPV to the matrix multiplier 100.

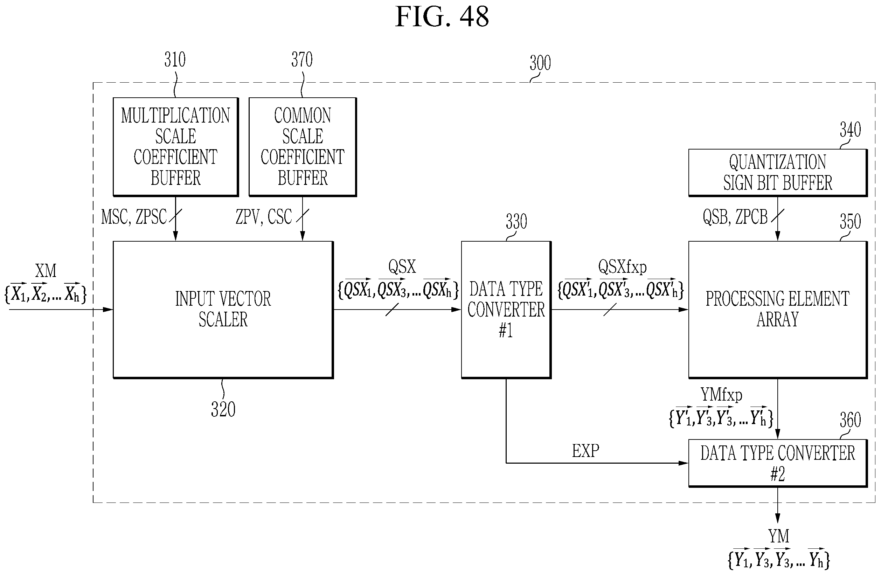

The operation of the matrix multiplier 100 based on the weights approximated based on the zero point value ZPV, the multiplication scale coefficient MSC, the common scale coefficient CSC, and the quantization sign bit QSB will be described in more detail below with reference to FIGS. 48 to 58.

FIG. 48 is a block diagram illustrating a configuration of the matrix multiplier of FIG. 1 implemented according to various example embodiments. Referring to FIGS. 1 to 4 and 47 and 48, the matrix multiplier 100 of FIG. 1 may be implemented as the matrix multiplier 300 of FIG. 48.

The matrix multiplier 300 may include a multiplication scale coefficient buffer 310, a common scale coefficient buffer 370, an input vector scaler 320, a first data type converter 330, a quantization sign bit buffer 340, a processing element array 350, and a second data type converter 360.

Each of the components of the matrix multiplier 300 may perform operations similar to the components of the matrix multiplier 200 described above with reference to FIGS. 23 to 46. Hereinafter, the difference between the matrix multiplier 300 and the matrix multiplier 200 described above with reference to FIGS. 23 to 46 will be mainly described.

The multiplication scale coefficient buffer 310 may store the plurality of multiplication scale coefficients MSC and a plurality of zero point scale coefficients ZPSC provided from the uniform BCQ circuit UBC. The multiplication scale coefficient buffer 210 may provide the plurality of multiplication scale coefficients MSC and the plurality of zero point scale coefficients ZPSC to the input vector scaler 220.

In example embodiments, each of the plurality of zero point scale coefficients ZPSC may be '1'. Hereinafter, for a more concise description, various example embodiments in which each of the plurality of zero point scale coefficients ZPSC is '1' will be representatively described. However, example embodiments are not limited thereto.

The common scale coefficient buffer 370 may store the plurality of common scale coefficients CSC and the plurality of zero point values ZPC provided from the uniform BCQ circuit UBC. The common scale coefficient buffer 370 may provide the plurality of common scale coefficients CSC and the plurality of zero point values ZPV to the input vector scaler 320.

The input vector scaler 320 may receive the input matrix XM. The input vector scaler 320 may generate the plurality of quantization scaled input vectors QSX based on the plurality of common scale coefficients CSC, the plurality of zero point values ZPV, the plurality of zero point scale coefficients ZPSC, and the plurality of multiplication scale coefficients MSC. That is, the input vector scaler 320 may generate the plurality of quantization scaled input vectors QSX further based on the plurality of zero point values ZPV and the plurality of zero point scale coefficients ZPSC.

Each of the plurality of quantization scaled input vectors QSX may be implemented as a row vector having dimension 'R+1'-times of the corresponding input vector. For example, the first quantization scaled input vector (e.g., $\overrightarrow{X_1}$) corresponding to the first input vector (e.g., $\overrightarrow{QSX_1}$) may include "$(R + 1) \times n$" quantization scaled input elements QSIE as illustrated in Equation 27 below.

(Equation 27)

$$\overrightarrow{QSX_1} \ni (1 \times ZPV_1 \times x_{11}), (2^0 \times s_{r1} \times x_{11}), (2^1 \times s_{r1} \times x_{11}), \dots, (2^{R-1} \times s_{r1} \times x_{11}),$$

$$(1 \times ZPV_2 \times x_{12}), (2^0 \times s_{r2} \times x_{12}), (2^1 \times s_{r2} \times x_{12}), \dots, (2^{R-1} \times s_{r2} \times x_{12}),$$

$$\dots,$$

$$(1 \times ZPV_n \times x_{1n}), (2^0 \times s_{rn} \times x_{1n}), (2^1 \times s_{rn} \times x_{1n}), \dots, (2^{R-1} \times s_{rn} \times x_{1n})$$

Referring to Equation 27, some of the plurality of quantization scaled input elements QSIE included in the first scaled input vector may correspond to values obtained by multiplying each of the plurality of input elements included in the first input vector with the corresponding zero point value ZPV.

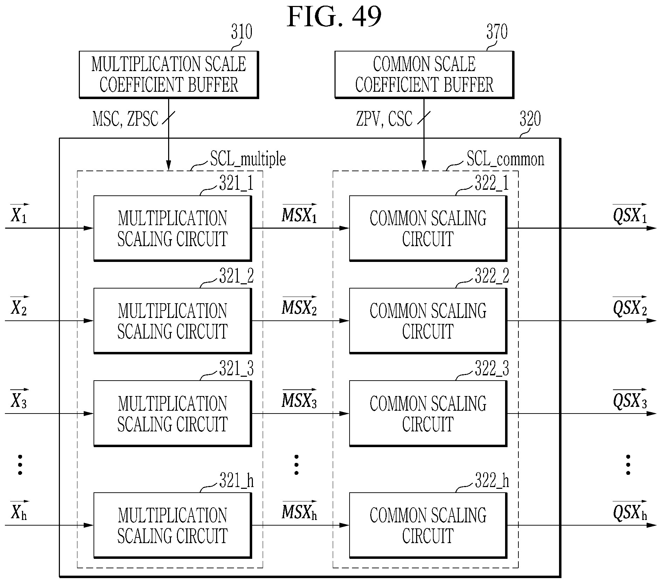

Similarly, the input vector scaler 320 may generate the second to (h)-th quantization scaled input vectors (e.g., $\overrightarrow{QSX_2}$ to $\overrightarrow{QSX_h}$). For concise description, detailed description of the quantization scaled input elements QSIE included in each of the second to (h)-th quantization scaled input vectors (e.g., $\overrightarrow{QSX_2}$ to $\overrightarrow{QSX_h}$) will be omitted. A specific method in which the input vector scaler 320 generates the plurality of quantization scaled input vectors QSX will be described in more detail below with reference to FIGS. 49 to 57.

The first data type converter 330 may receive the plurality of quantization scaled input vectors QSX. The first data type converter 330 may convert the data type of the plurality of quantization scaled input vectors QSX to fixed point. That is, the first data type converter 330 may generate the first to (h)-th fixed point quantization scaled input vectors (e.g., $\overrightarrow{QSX'_1}$ to $\overrightarrow{QSX'_h}$).

The quantization sign bit buffer 340 may store the plurality of quantization sign bits QSB and a plurality of zero point correction bits ZPCB provided from the uniform BCQ circuit UBC. The quantization sign bit buffer 140 may provide the plurality of quantization sign bits QSB and a plurality of zero point correction bits ZPCB to the processing element array 350.

In example embodiments, each of the plurality of zero point correction bits ZPCB may be '0'. Hereinafter, for a more concise description, various example embodiments in which each of the plurality of zero point correction bits ZPSB is '0' will be representatively described. However, example embodiments are not limited thereto.

The processing element array 350 may receive the plurality of quantization sign bits QSB and the plurality of zero point correction bits ZPCB, and the plurality of fixed point quantization scaled input vectors QSXfxp. The processing element array 350 may generate the fixed point output matrix YMfxp based on the plurality of quantization sign bits QSB, the plurality of zero point correction bits ZPCB, and the plurality of fixed point quantization scaled input elements.

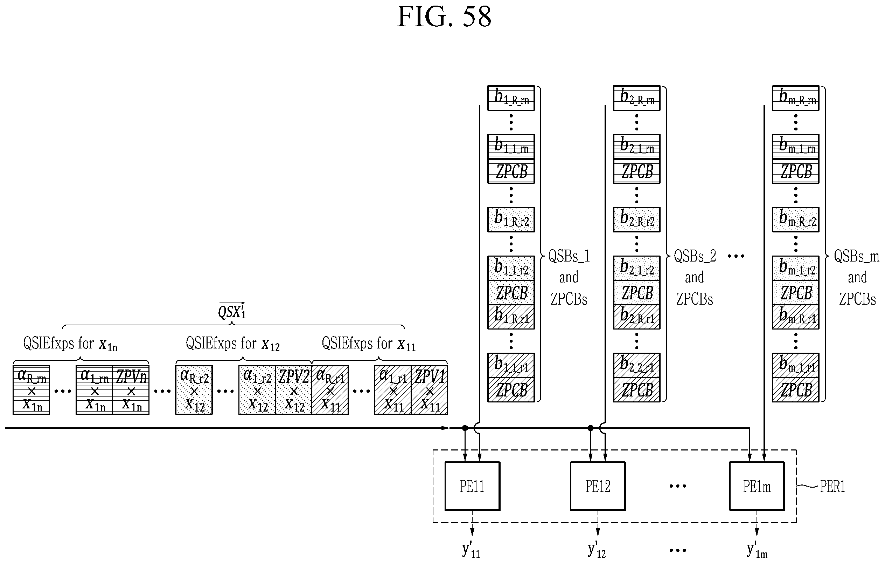

The processing element array 350 may include the plurality of processing elements arranged in the row direction and the column direction. Each of the plurality of processing elements may calculate different fixed point output elements. The detailed configuration and operation of the processing element array 350 will be described in more detail below with reference to FIG. 58.

The second data type converter 360 may receive the plurality of fixed point output elements from the processing element array 350. The second data type converter 360 may convert the data type of the fixed point output matrix YMfxp to floating point based on the plurality of exponents EXP. That is, the second data type converter 360 may output the output matrix YM having floating point data type.

FIG. 49 is a block diagram illustrating a configuration of the input vector scaler of FIG. 48 according to various example embodiments. Referring to FIGS. 1 to 4 and 47 to 49, the input vector scaler 220 may include a multiplication scaler SCL_multiple and a common scaler SCL_common. The multiplication scaler SCL_multiple may include first to (h)-th multiplication scaling circuits 321_1 to 321_h. The common scaler SCL_common may include first to (h)-th common scaling circuits 322_1 to 322_h.

The components of the input vector scaler 320 may perform operations similar to those of the input vector scaler 220 described above with reference to FIGS. 27 and 28. Hereinafter, the differences between the input vector scaler 320 and the input vector scaler 220 described above with reference to FIGS. 23 to 46 will be mainly described.

The multiplication scaler SCL_multiple may sequentially receive the plurality of multiplication scale coefficients MSC and the plurality of zero point scale coefficients ZPSC from the multiplication scale coefficient buffer 310. For example, each of the first to (h)-th multiplication scaling circuits 321_1-321_h may sequentially receive the plurality of multiplication scale coefficients MSC and the plurality of zero point scale coefficients ZPSC from the multiplication scale coefficient buffer 310.

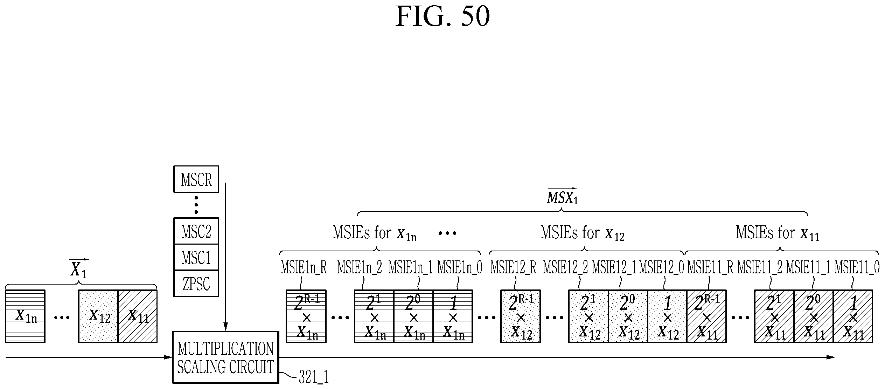

Each of the first to (h)-th multiplication scaling circuits 321_1 to 321_h may perform multiplication scaling on the received input vector based on the plurality of multiplication scale coefficients MSC and the plurality of zero point scale coefficients ZPSC. For example, the first to (h)-th multiplication scaling circuits 321_1 to 321_h may generate the first to (h)-th multiplication scaled input vectors (e.g., $\overrightarrow{MSX_1}$ to $\overrightarrow{MSX_h}$), respectively. The operation of the first to (h)-th common scaling circuits 322_1 to 322_h will be described in more detail below with reference to FIG. 50.

The common scaler SCL_common may sequentially receive the plurality of common scale coefficients CSC and the plurality of zero point values ZPV from the common scale coefficient buffer 370. For example, each of the first to (h)-th common scaling circuits 322_1 to 322_h may sequentially receive the plurality of common scale coefficients CSC and the plurality of zero point values ZPV from the common scale coefficient buffers 270.

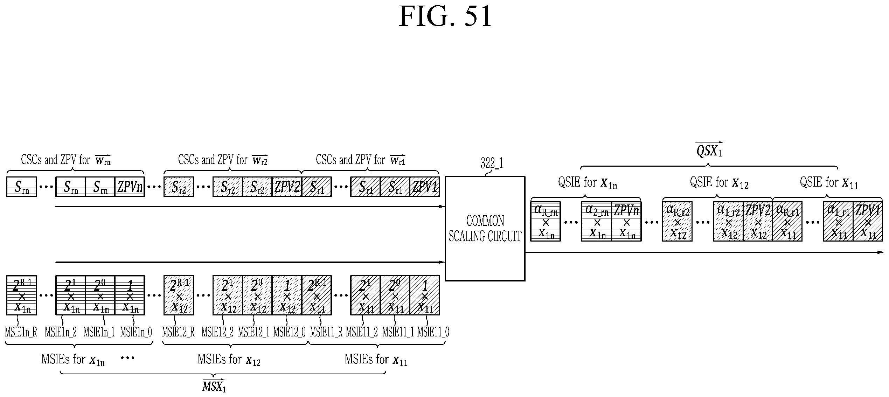

Each of the first to (h)-th scaling circuits 322_1 to 322_h may perform common scaling on the received multiplication scaled input vector MSX based on the plurality of common scale coefficients CSC and the plurality of zero point values ZPV. For example, the first to (h)-th common scaling circuits 322_1 to 322_h may generate the first to (h)-th quantization scaled input vectors (e.g., $\overrightarrow{QSX_1}$ to $\overrightarrow{QSX_h}$), respectively. The operation of the first to (h)-th common scaling circuits 322_1 to 322_h will be described in more detail below with reference to FIG. 51.

FIG. 50 is a diagram illustrating in more detail an operation of a multiplication scaling circuit of FIG. 49. Hereinafter, for a more concise description, the operation of the first multiplication scaling circuit 321_1 will be representatively described with reference to FIGS. 1 to 4 and 47 to 50. However, example embodiments are not limited thereto, and the second to (h)-th multiplication scaling circuits 321_2 to 321_h may also operate in a similar manner.

The first multiplication scaling circuit 321_1 may receive the first input vector (e.g., $\overrightarrow{X_1}$). That is, the first multiplication scaling circuit 321_1 may sequentially receive a plurality of input elements (e.g., $x_{11}$ to $x_{1n}$).

The first multiplication scaling circuit 321_1 may sequentially receive the zero point scale coefficient ZPSC and the first-to-Rth multiplication scale coefficients MSC1 to MSCR.

The first multiplication scaling circuit 321_1 may generate the multiplication scaled input elements MSIE11_0 to MSIE1n_R by multiplying each of the plurality of received input elements with the zero point scale coefficient ZPSC and the first-to-Rth multiplication scale coefficients MSC1 to MSCR.

For example, the first multiplication scaling circuit 321_1 may generate the multiplication scaled input element MSIE11_0 by multiplying the input element "$x_{11}$" with the zero point scale coefficient ZPSC, and generate the multiplication scaled input elements MSIE11_1~MSIE11_R by multiplying "$x_{11}$" with the first-to-Rth multiplication scale coefficients MSC1-MSCR (illustrated as diagonal stripe).

Similarly, the first multiplication scaling circuit 321_1 may generate the multiplication scaled input element MSIE12_0 by multiplying the input element "$x_{12}$" with the zero point scale coefficient ZPSC; and generate the multiplication scaled input elements MSIE12_1~MSIE12_R by multiplying "$x_{12}$" with the first-to-Rth multiplication scale coefficients MSC1-MSCR (illustrated as a dot pattern).

In this way, the first multiplication scaling circuit 321_1 may be able to sequentially calculate the plurality of multiplication scaled input elements MSIE corresponding to $x_{13}$ to $x_{1n}$. In this case, as the zero point scale coefficient ZPSC is equal to '1', the multiplication scaled input elements generated based on the zero point scale coefficient ZPSC (e.g., the multiplication scaled input elements MSIE11_0 to MSIE1n_0) may be same as the corresponding input elements. For example, the multiplication scaled input elements MSIE11_0 to MSIE1n_0 may be same as $x_{11}$ to $x_{1n}$, respectively.

FIG. 51 is a diagram illustrating in more detail the operation of the common scaling circuit of FIG. 49. Hereinafter, for a more concise description, the operation of the first common scaling circuit 322_1 will be representatively described with reference to FIGS. 1 to 4 and 47 to 51. However, example embodiments are not limited thereto, and the second to (h)-th common scaling circuits 322_2 to 322_h may also operate in a similar manner.

The first common scaling circuit 322_1 may receive the first multiplication scaled input vector (e.g., $\overrightarrow{MSX_1}$). That is, the first common scaling circuit 322_1 may sequentially receive the common scaled input elements MSIE11_0-MSIE1n_R described above with reference to FIG. 50.

The first common scaling circuit 322_1 may sequentially receive the plurality of zero point values ZPV and the plurality of common scale coefficients CSC. For example, the first common scaling circuit 322_1 may sequentially receive the first zero point value ZPV1 and R instances of $S_{r1}$ for the first row vector (e.g., $\overrightarrow{w_{r1}}$) of the weight matrix WM, and may sequentially receive the second zero point value ZPV2 and R instances of $S_{r2}$ for the second row vector (e.g., $\overrightarrow{w_{r2}}$) of the weight matrix WM.

The first common scaling circuit 322_1 may generate the first quantization scaled input vector (e.g., $\overrightarrow{QSX_1}$) based

on the order in which the multiplication scaled input elements MSIE11_0 to MSIE1n_R are received, and the order in which the plurality of zero point values ZPV and the plurality of common scale coefficients CSC are received.

For example, the first common scaling circuit 322_1 may generate one quantization scaled input element QSIE based on the product of the multiplication scaled input element MSIE11_0 and the first zero point value ZPV1; and may generate R quantization scaled input elements QSIE based on the product of $S_{r1}$ and each of the multiplication scaled input elements MSIE11_1 to MSIE11_R (illustrated as diagonal stripe).

Similarly, the first common scaling circuit 322_1 may generate one quantization scaled input element QSIE based on the product of the multiplication scaled input element MSIE12_0 and the second zero point value ZPV2; and may generate R quantization scaled input elements QSIE based on the product of $S_{r2}$ and each of the multiplication scaled input elements MSIE12_1 to MSIE12_R (illustrated as a dot pattern).

As a result, the first quantization scaled input vector (e.g., $\overrightarrow{QSX_1}$) may include the quantization scaled input elements QSIE corresponding to the product of the plurality of zero point values ZPV and the plurality of input elements.

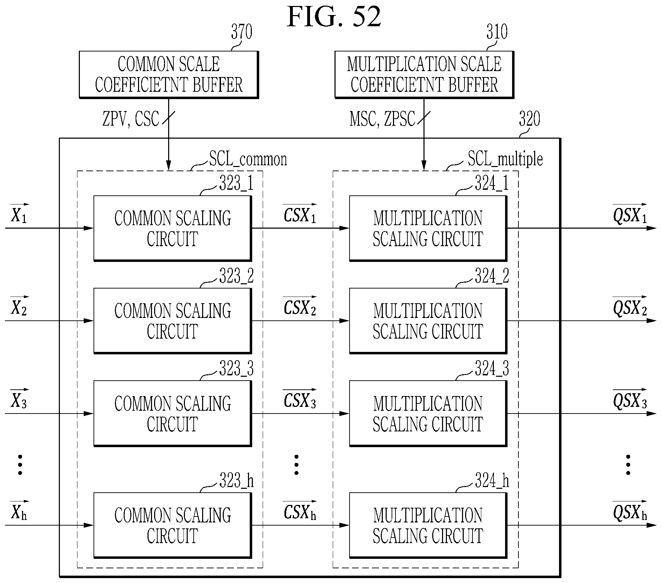

FIG. 52 is a block diagram illustrating a configuration of the input vector scaler of FIG. 48 according to various example embodiments. Referring to FIGS. 1 to 4, 47 and 48, and 52, the input vector scaler 320 may include the common scaler SCL_common and the multiplication scaler SCL_multiple. The common scaler SCL_common may include the first to (h)-th common scaling circuits 323_1 to 323_h. The multiplication scaler SCL_multiple may include the first to (h)-th multiplication scaling circuits 324_1 to 324_h.

The components of the input vector scaler 320 may perform operations similar to those of the input vector scaler 220 described above with reference to FIGS. 29 and 31. Hereinafter, the differences between the input vector scaler 320 and the input vector scaler 220 described above with reference to FIGS. 29 to 31 will be mainly described.

The first to (h)-th common scaling circuits 323_1 to 323_h may receive the first to (h)-th input vectors (e.g., $\overrightarrow{X_1}$ to $\overrightarrow{X_h}$), respectively. For example, the first common scaling circuit 323_1 may sequentially receive $x_{11}$ to $x_{1n}$ and the h-th common scaling circuit 323_h may sequentially receive $x_{h1}$ to $x_{hn}$.

The common scaler SCL_common may sequentially receive the plurality of common scale coefficients CSC and the plurality of zero point values ZPV from the common scale coefficient buffer 370. For example, each of the first to (h)-th common scaling circuits 323_1-323_h may sequentially receive the plurality of common scale coefficients CSC and the plurality of zero point values ZPV from the common scale coefficient buffers 370.

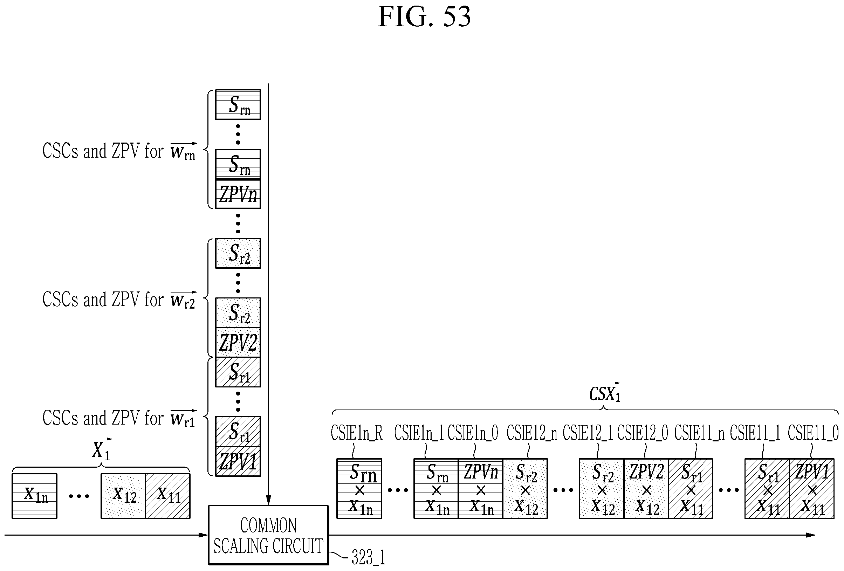

Each of the first to (h)-th common scaling circuits 323_1 to 322_h may perform common scaling for the received input vector based on the plurality of common scale coefficients CSC and the plurality of zero point values ZPV. For example, the first to (h)-th common scaling circuits 323_1 to 322_h may generate the first to (h)-th common scaled input vectors (e.g., $\overrightarrow{CSX_1}$ to $\overrightarrow{CSX_h}$), respectively. The operation of the first to (h)-th common scaling circuits 323_1 to 323_h will be described in more detail below with reference to FIG. 53.

The multiplication scaler SCL_multiple may sequentially receive the plurality of multiplication scale coefficients MSC and the plurality of zero point scale coefficients ZPSC from the multiplication scale coefficient buffer 310. For example, each of the first to (h)-th multiplication scaling circuits 324_1 to 324_h may sequentially receive the plurality of multiplication scale coefficients MSC and the plurality of zero point scale coefficients ZPSC from the multiplication scale coefficient buffer 310.

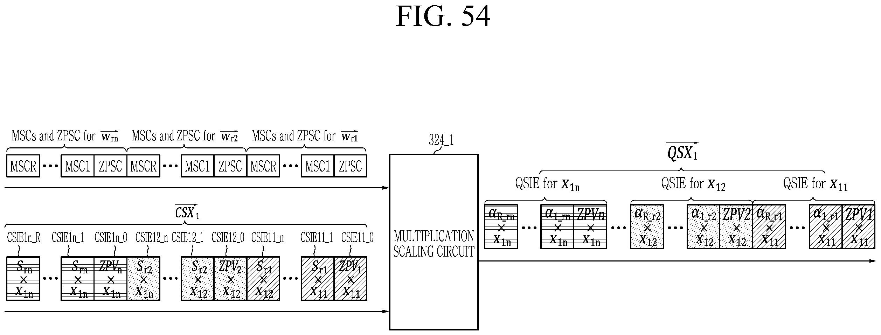

Each of the first to (h)-th multiplication scaling circuits 324_1 to 324_h may perform multiplication scaling on the received common scaled input vector CSX based on the multiplication scale coefficient MSC and the plurality of zero point scale coefficients ZPSC. For example, the first to (h)-th multiplication scaling circuits 324_1 to 324_h may generate the first to (h)-th quantization scaled input vectors (e.g., $\overrightarrow{QSX_1}$ to $\overrightarrow{QSX_h}$), respectively. The operation of the first to (h)-th multiplication scaling circuits 324_1 to 324_h will be described in more detail below with reference to FIG. 54.

FIG. 53 is a diagram illustrating in more detail the operation of the common scaling circuit of FIG. 52. Hereinafter, for a more concise description, the operation of the first common scaling circuit 323_1 will be representatively described with reference to FIGS. 1 to 4, 47 and 48, and 52 and 53. However, example embodiments are not limited thereto, and the second to (h)-th common scaling circuits 323_2 to 323_h may also operate in a similar manner.

The first common scaling circuit 323_1 may receive the first input vector (e.g., $\overrightarrow{X_1}$). That is, the first common scaling circuit 323_1 may sequentially receive $x_{11}$ to $x_{1n}$. The first common scaling circuit 323_1 may sequentially receive the plurality of zero point values ZPV and the plurality of common scale coefficients CSC. For example, the first common scaling circuit 323_1 may sequentially receive the first zero point value ZPV1 and R instances of $S_{r1}$ for the first row vector (e.g., $\overrightarrow{w_{r1}}$) of the weight matrix WM, and may sequentially receive the second zero point value ZPV2 and R instances of $S_{r2}$ for the second row vector (e.g., $\overrightarrow{w_{r2}}$) of the weight matrix WM .

The first common scaling circuit 323_1 may generate the first common scaled input vector (e.g., $\overrightarrow{CSX_1}$) based on the order in which the plurality of input elements, the plurality of zero point values ZPV, and the plurality of common scale coefficients CSC are received.

For example, the first common scaling circuit 322_1 may generate the common scaled input elements CSIE11_0 to CSIE1n_R. For example, the first common scaling circuit 323_1 may generate one common scaled input element CSIE11_0 based on the product of $x_{11}$ and the first zero point value ZPV1, and generate R common scaled input elements CSIE11_1 to CSIE11_R based on the product of $x_{11}$ and R instances of $S_{r1}$ (illustrated as diagonal stripe).

Similarly, the first common scaling circuit 323_1 may generate one common scaled input element CSIE12_0 based on the product of $x_{12}$ and the second zero point value ZPV2, and generate R common scaled input elements CSIE12_1-CSIE12_R based on the product of $x_{12}$ and R instances of $S_{r2}$ (illustrated as a dot pattern).

As a result, the first common scaled input vector (e.g., $\overrightarrow{CSX_1}$) may include the common scaled input elements CSIE11_0 to CSIE1n_0 corresponding to the products of the plurality of zero point values ZPV and the plurality of input elements.

FIG. 54 is a diagram illustrating in more detail an operation of the multiplication scaling circuit of FIG. 52 according to various example embodiments. Hereinafter, for a more concise description, the operation of the first multiplication scaling circuit 324_1 will be representatively described with reference to FIGS. 1 to 4, 47 and 48, and 52 to 54. However, example embodiments are not limited thereto, and the second to (h)-th multiplication scaling circuits 324_2 to 324_h may also operate in a similar manner.

The first multiplication scaling circuit 324_1 may receive the first common scaled input vector (e.g., $\overrightarrow{CSX_1}$). For example, the first multiplication scaling circuit 324_1 may receive the plurality of common scaled input elements CSIE11_0 to CSIE1n_R described above with reference to FIG. 53. The first multiplication scaling circuit 324_1 may receive the zero point scale coefficient ZPSC and the first-to-Rth multiplication scale coefficients MSC1 to MSCR repeatedly.

The first multiplication scaling circuit 324_1 may generate the first quantization scaled input vector (e.g., $\overrightarrow{QSX_1}$) based on the order in which the plurality of common scaled input elements CSIE11_0 to CSIE1 n_R are received, and the order in which the zero point scale coefficient ZPSC and the first to R multiplication scale coefficients MSC1 to MSCR are received.

For example, the first multiplication scaling circuit 324_1 may generate one quantization scaled input element QSIE (e.g., "ZPV1 $\times$ $x_{11}$") based on the product of the common scaled input element CSIE11_0 and the zero scale coefficient ZPSC; and generate R quantization scaled input elements QSIE by multiplying the multiplication scaled input elements CSIE11_1 to CSIE11_R and the first-to-Rth multiplication scale coefficients MSC1 to MSCR, respectively (illustrated as diagonal stripe).

Similarly, the first multiplication scaling circuit 324_1 may generate one quantization scaled input element QSIE (e.g., ZPV2 $\times$ $x_{12}$) based on the product of the common scaled input element CSIE12_0 and the zero scale coefficient ZPSC; and generate R quantization scaled input elements QSIE by multiplying the multiplication scaled input elements CSIE12_1 to CSIE12_R and the first-to-Rth multiplication scale coefficients MSC1 to MSCR, respectively (illustrated as a dot pattern).

As a result, the first quantization scaled input vector (e.g., $\overrightarrow{QSX_1}$) may include the quantization scaled input elements QSIE corresponding to the product of the plurality of zero point values ZPV and each of the plurality of input elements.

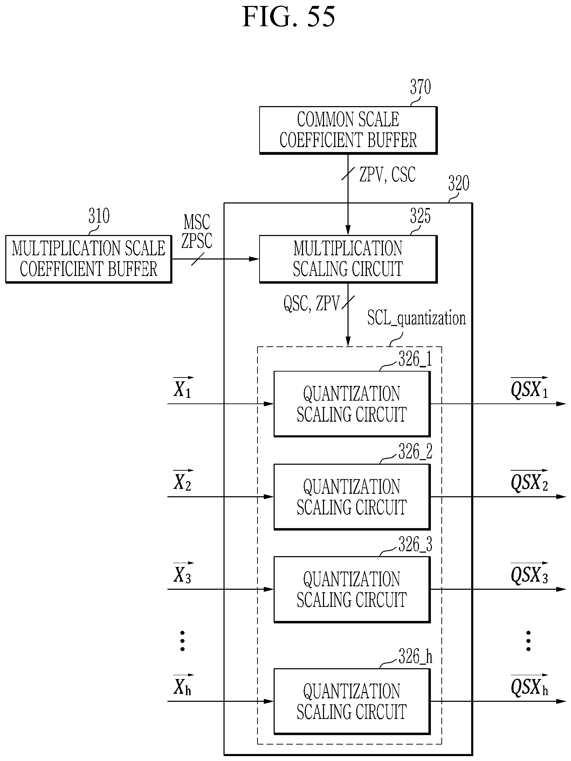

FIG. 55 is a block diagram illustrating a configuration of the input vector scaler of FIG. 48 according to various example embodiments. Referring to FIGS. 1 to 4, 47 and 48, and 55, the input vector scaler 320 may include the multiplication scaling circuit 325 and the quantization scaler SCL_quantization. The quantization scaler SCL_quantization may include first to (h)-th quantization scaling circuits 326_1 to 326_h.

The components of the input vector scaler 320 may perform operations similar to those of the input vector scaler 220 described above with reference to FIGS. 32 to 34. Hereinafter, the differences between the input vector scaler 320 and the input vector scaler 220 described above with reference to FIGS. 32 to 34 will be mainly described.

The multiplication scaling circuit 325 may sequentially receive the plurality of multiplication scale coefficients MSC and the plurality of zero point scale coefficients ZPSC from the multiplication scale coefficient buffer 310.

The multiplication scaling circuit 325 may sequentially receive the plurality of common scale coefficients CSC and the plurality of zero point values ZPV from the common scale coefficient buffer 370.

Each of the first to (h)-th multiplication scaling circuits 326_1 to 326_h may receive a different input vector. For example, the first to (h)-th quantization scaling circuits 326_1 to 326_h may receive the first to h-th input vectors (e.g., $\overrightarrow{X_1}$ to $\overrightarrow{X_h}$), respectively. For a more detailed example, the first quantization scaling circuit 326_1 may sequentially receive $x_{11}$ to $x_{1n}$.

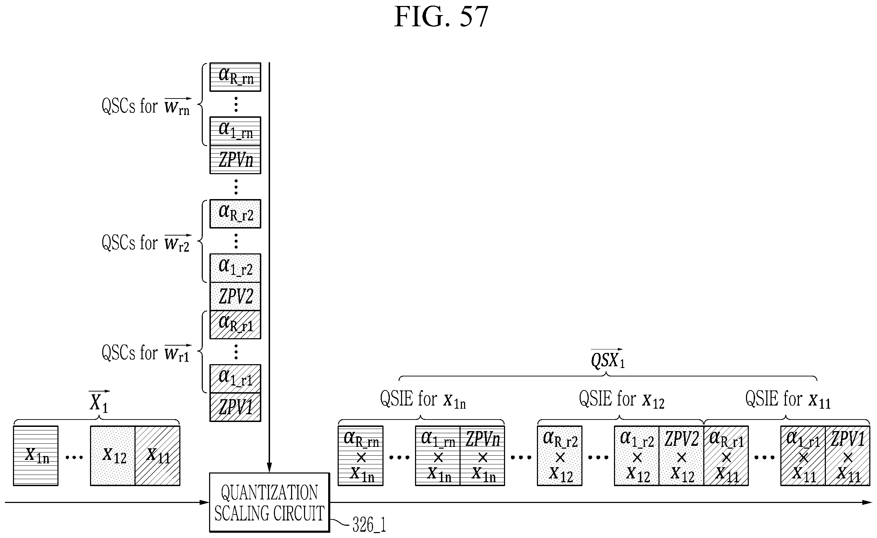

Each of the first to (h)-th quantization scaling circuits 326_1 to 326_h may perform quantization scaling on the received input vector based on the plurality of quantization scale coefficients QSC and the plurality of zero point values ZPV. For example, the first to (h)-th quantization scaling circuits 326_1 to 326_h may generate the first to (h)-th quantization scaled input vectors (e.g., $\overrightarrow{QSX_1}$ to $\overrightarrow{QSX_h}$), respectively. The operation of the first to (h)-th quantization scaling circuits 326_1 to 326_h will be described in more detail below with reference to FIG. 57.

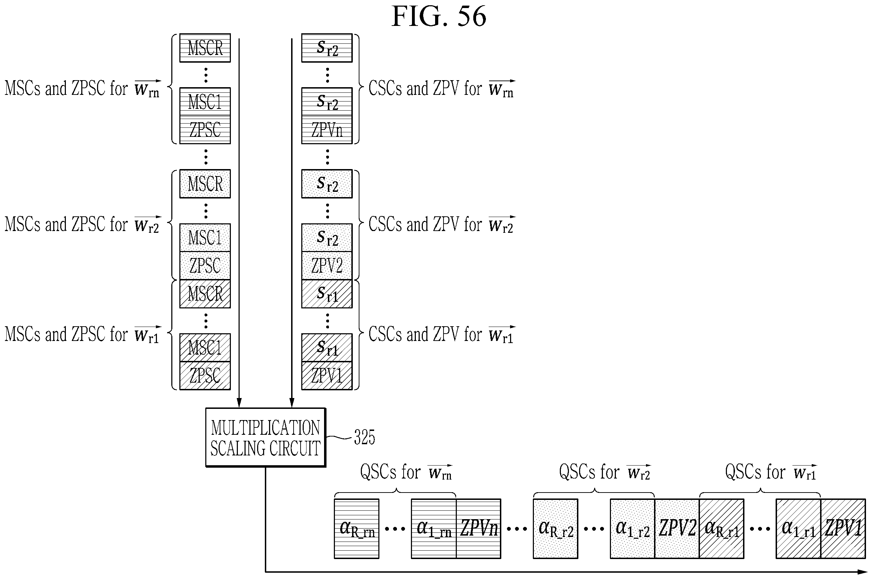

FIG. 56 is a diagram illustrating in more detail an operation of a multiplication scaling circuit of FIG. 55. Referring to FIGS. 1 to 4, 47 and 48, and 55 and 56, the multiplication scaling circuit 325 may repeatedly receive the zero point scale coefficient ZPSC and the first-to-Rth multiplication scale coefficients MSC1 to MSCR.

The multiplication scaling circuit 325 may sequentially receive the plurality of zero point values ZPV and the plurality of common scale coefficients CSC. For example, the multiplication scaling circuit 325 may sequentially receive the first zero point value ZPV1 and R instances of $S_{r1}$ for the first row vector (e.g., $\overrightarrow{w_{r1}}$) of the weight matrix WM, and may sequentially receive the second zero point value and R instances of $S_{r2}$ ZPV2 for the second row vector (e.g., $\overrightarrow{w_{r2}}$) of the weight matrix WM.

The multiplication scaling circuit 325 may sequentially output the plurality of quantization scale coefficients QSC and the plurality of zero point values ZPV based on an order in which the plurality of multiplication scale coefficients MSC and the plurality of zero point scale coefficients ZPSC are received, and an order in which the plurality of common scale coefficients CSC and the plurality of zero point values ZPV are received.

For example, the multiplication scaling circuit 325 may generate the first zero point value ZPV1 by multiplying the zero point scale coefficient ZPSC with the first zero point value ZPV1; and generate the plurality of quantization scale coefficients QSC (e.g., $\alpha_{1\_r1}$ to $\alpha_{R\_r1}$) for the first row vector (e.g., $\overrightarrow{w_{r1}}$) of the weight matrix WM by multiplying the first-to-Rth multiplication scale coefficients MSC1 to MSCR with R instances of $S_{r1}$, respectively (illustrated as diagonal stripe).

Similarly, the multiplication scaling circuit 325 may generate the second zero point value ZPV2 by multiplying the zero point scale coefficient ZPSC by the second zero point value ZPV2; and generate the plurality of quantization scale coefficients QSC (e.g., $\alpha_{1\_r2}$ to $\alpha_{R\_r2}$) for the second row vector (e.g., $\overrightarrow{w_{r2}}$) of the weight matrix WM by multiplying the first-to-Rth multiplication scale coefficients MSC1 to MSCR with R instances of $S_{r2}$, respectively (illustrated as a dot pattern).

In this way, the multiplication scaling circuit 325 may sequentially output the plurality of zero point values ZPV and the plurality of quantization scale coefficients QSC.

FIG. 57 is a diagram illustrating in more detail the operation of the quantization scaling circuit of FIG. 55. Hereinafter, for a more concise description, the operation of the first quantization scaling circuit 326_1 will be representatively described with reference to FIGS. 1 to 4, 47 and 48, and 55 to 57. However, example embodiments are not limited thereto, and the second to (h)-th multiplication scaling circuits 326_2 to 326_h may also operate in a similar manner.

The first quantization scaling circuit 326_1 may receive the first input vector (e.g., $\overrightarrow{X_1}$). That is, the first quantization scaling circuit 326_1 may sequentially receive $x_{11}$ to $x_{1n}$.

The first quantization scaling circuit 326_1 may sequentially receive the plurality of zero point values ZPV and the plurality of quantization scale coefficients QSC. For example, the first quantization scaling circuit 326_1 may sequentially receive the plurality of zero point values ZPV and the plurality of quantization scale coefficients QSC described above with reference to FIG. 56.

The first quantization scaling circuit 326_1 may scale the first input vector (e.g., $\overrightarrow{X_1}$) based on the order in which the plurality of zero point values ZPV and the plurality of quantization scale coefficients QSC are received to generate the first quantization scaled input vector (e.g., $\overrightarrow{QSX_1}$).

For example, the first quantization scaling circuit 326_1 may generate the plurality of quantization scaled input elements QSIE for $x_{11}$ by multiplying $x_{11}$ with the first zero point value ZPV1 and $\alpha_{1\_r1}$ to $\alpha_{R\_r1}$ (illustrated as diagonal stripe).

Similarly, the first quantization scaling circuit 326_1 may generate the plurality of quantization scaled input elements QSIE for $x_{12}$ by multiplying $x_{12}$ with the second zero point value ZPV2 and $\alpha_{1\_r2}$ to $\alpha_{R-r2}$ (illustrated as diagonal stripe).

As a result, the first quantization scaled input vector (e.g., $\overrightarrow{QSX_1}$) may include the quantization scaled input elements QSIE corresponding to the products of the plurality of zero point values ZPV and the plurality of input elements.

FIG 58 is a diagram illustrating in more detail an operation of the processing element array of FIG. 48. Referring to FIGS. 1 to 4 and FIGS. 48 to 58, the processing element array 350 may include the plurality of processing element rows PER. Each of the plurality of processing element rows PER may include the plurality of processing elements. However, hereinafter, for a more concise description, the operation of the first processing element row PER1 will be representatively described. However, example embodiments are not limited thereto.

The first processing element row PER1 may include the processing elements PE11 to PE1m. The first processing element row PER1 may receive the first fixed point multiplication scaled input vector (e.g., $\overrightarrow{QSX'_1}$). For example, each of the processing elements PE11 to PE1m may sequentially receive the plurality of fixed point quantization scaled input elements QSIEfxp. That is, the processing elements PE11 to PE1m may sequentially receive the plurality of quantization scaled input elements QSIE described above with reference to FIGS. 51, 54, and 57 in fixed point format. In this case, some of the plurality of fixed point quantization scaled input elements QSIEfxp received by each of the processing elements PE11 to PE1m may correspond to the products of the zero point value ZPV and the input element.

Each of the processing elements PE11 to PE1m may receive the plurality of quantization sign bits QSB and the plurality of zero point correction bits ZPCB. For example, the processing element PE11 may receive the first plurality of quantization sign bits QSBs_1 and the plurality of zero point correction bits ZPCB. The processing element PE12 may receive the second plurality of quantization sign bits QSBs_2 and the plurality of zero point correction bits ZPCB.

For a more detailed example, the processing element PE11 may receive one zero point correction bit ZPCB, and then receive the R quantization sign bits QSB (e.g., $b_{1\_1\_r1}$ to $b_{1\_R\_r1}$) corresponding to $x_{11}$. Thereafter, the processing element PE11 may receive one zero point correction bit $\overline{ZPCB}$, and then receive the R quantization sign bits QSB (e.g., $b_{1\_1\_r2}$ to $b_{1\_R\_r2}$) corresponding to $x_{12}$. In this way, the processing element PE11 may sequentially receive the first plurality of quantization sign bits QSBs_1 and the plurality of zero point correction bits ZPCB.

The processing element PE11 may calculate the fixed point output element (e.g., $y'_{11}$) based on an order in which the quantization sign bits QSB and the plurality of zero point correction bits ZPCB are received, and an order in which the plurality of fixed point quantization scaled input elements QSIEfxp are received. For example, similar to that described above with reference to FIGS. 37 and 38, the processing element PE11 may calculate the fixed point output element (e.g., $y'_{11}$) based on whether the quantization sign bit QSB and the zero point correction bit ZPCB corresponding to the received fixed point quantization scaled input element QSIEfxp represents '0' or '1'.

Therefore, according to some example embodiments, the product of the zero point value ZPV and the input element may be calculated in the matrix multiplier 300. In this case, the matrix multiply device MMD may be able to calculate the product of the input matrix XM and the weight matrix WM even if it does not include a separate multiplier for calculating the product of the zero point value ZPV and the input element.

In other words, according to some example embodiments, even if the uniform BCQ circuit UBC performs the uniform binary coding quantization for the weight matrix WM asymmetrically, the matrix multiplier 300 may be able to calculate the product of the input matrix XM and the weight matrix with a small computational amount. Therefore, according to some example embodiments, the versatility of the matrix multiply device MMD may increase.

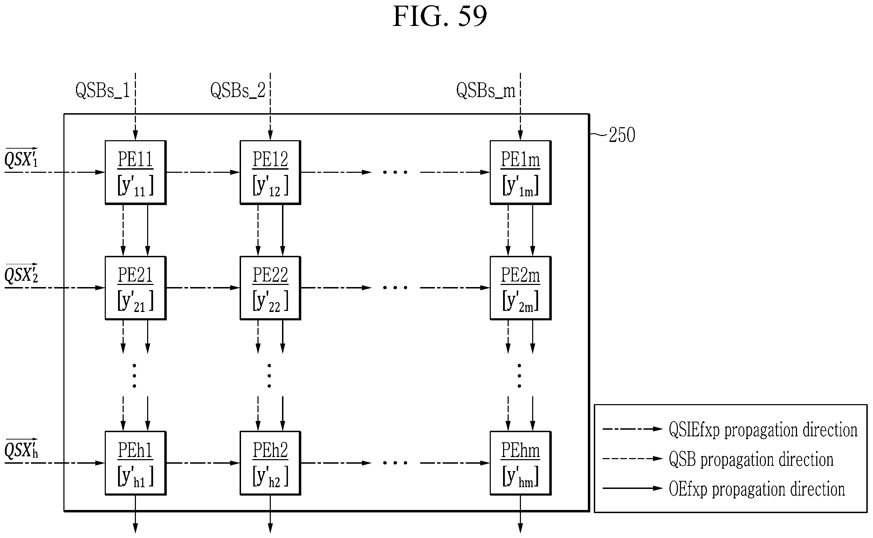

FIG. 59 is a block diagram illustrating the processing element array of FIG. 26 implemented in a systolic array manner. Referring to FIGS. 1 to 4, 23 to 48, and 59, the processing element array 250 may include the plurality of processing elements PE arranged in a row direction and a column direction. The plurality of processing element PE may operate in the systolic array scheme.

The processing element array 250 may be implemented to sequentially propagate the plurality of fixed point quantization scaled input elements QSIEfxp in the row direction. For example, the first processing element row PER1 may sequentially propagate the plurality of fixed point quantization scaled input elements QSIEfxp included in the first fixed point quantization scaled input vector (e.g., $\overrightarrow{QSX'_1}$) in the row direction.

For a more detailed example, the processing element PE11 may receive one fixed point quantization scaled input element QSIEfxp at a first time point. The processing element PE11 may transfer the fixed point quantization scaled input element QSIEfxp to the processing element PE12 disposed adjacent to the processing element PE11 in the row direction at a second time point after the first time point. In this way, the processing elements PE included in the first processing element row PER1 may sequentially transfer the plurality of fixed point quantization scaled input elements QSIEfxp provided from the first data type converter 230 to adjacent processing elements.

The processing element array 250 may be implemented to sequentially propagate the plurality of quantization sign bits QSB in the column direction. For example, the first processing element column PEC1 may sequentially propagate the first plurality of quantization sign bits QSBs_1 in the column direction.

For a more detailed example, the processing element PE11 may receive one quantization sign bit QSB at the first time point. The processing element PE11 may transfer the quantization sign bit QSB to the processing element PE21 disposed adjacent to the processing element PE11 in the column direction at the second time point after the first time point. In this way, the processing elements PE included in the first processing element column PEC1 may sequentially transfer the first plurality of quantization sign bits QSBs_1 provided from the quantization sign bit buffer 240 to adjacent processing elements.

The plurality of processing elements PE may generate different fixed point output elements OEfxp. The processing element array 250 may be implemented to sequentially propagate the fixed point output element OEfxp in the column direction. For example, the fixed point output element OEfxp (e.g., $y'_{11}$) calculated by the processing element PE11 may be sequentially transferred in the column direction. In this way, the fixed point output element OEfxp may be transferred to the second data type converter 260. The method of propagating the fixed point output element OEfxp is similar to the method of propagating the quantization sign bit QSB described above, and therefore, detailed description thereof will be omitted.

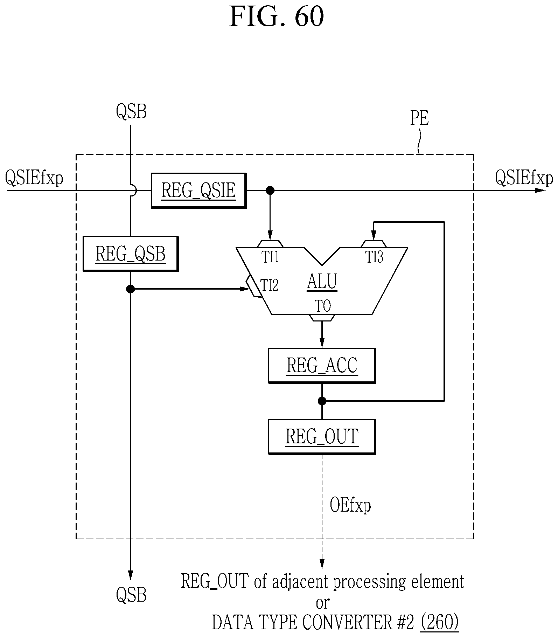

That is, each of the processing elements included in the processing element array 250 may be implemented to receive one or more of the fixed point output element OEfxp, the quantization sign bit QSB, and the fixed point quantization scaled input element QSIEfxp from adjacently disposed processing elements. On the other hand, each of the processing elements included in the processing element array 250 may be implemented to transfer one or more of the fixed point output element OEfxp, the quantization sign bit QSB, and the fixed point quantization scaled input element QSIEfxp to adjacently disposed processing elements. A more detailed configuration of the processing element PE operating in the systolic array scheme will be described in more detail below with reference to FIG. 60.

For a more concise description, FIG. 59 representatively illustrates various example embodiments in which the fixed point output element OEfxp, the quantization sign bit QSB, and the fixed point quantization scaled input element QSIEfxp are each propagated in the systolic array method, but example embodiments are not limited thereto. For example, the processing element array 250 may be implemented to propagate only one or two of the fixed point output elements OEfxp, the quantization sign bits QSB, and the fixed point quantization scaled input elements QSIEfxp in systolic array scheme.

In example embodiments, each of the processing elements included in the processing element array 250 may operate in response to the same control clock signal. In this case, each of the plurality of processing elements may propagate the fixed point output element OEfxp, the quantization sign bit QSB, and/or the fixed point quantization scaled input element QSIEfxp to another processing element at the same time point. However, example embodiments are not limited thereto.

For a more concise description, FIG. 59 representatively illustrates example embodiments in which the processing element array 250 described with reference to FIGS. 23 to 48 operates in the systolic array scheme, but example embodiments are not limited thereto. For example, according to some example embodiments, the processing element array 150 described with reference to FIGS. 5 to 22 or the processing element array 350 described with reference to FIGS. 49 to 58 may also operate in the systolic array type.

FIG. 60 is a diagram illustrating in more detail a configuration of the processing element of FIG. 59. FIGS. 1 to 4, 23 to 48, and 59 and 60, the processing elements PE may include the arithmetic logic unit ALU, the accumulation register REG_ACC, a quantization scaled input element register REG_QSIE, a quantization sign bit register REG_QSB, and an output register REG_OUT. For a more concise description, detailed descriptions of the configuration and operation of the arithmetic logic unit ALU and the accumulation register REG_ACC described above with reference to FIG. 38 will be omitted.

Hereinafter, various example embodiments in which the arithmetic logic unit ALU, the accumulation register REG_ACC, the quantization scaled input element register REG_QSIE, the quantization sign bit register REG_QSB, and the output register REG_OUT operate in response to the same control clock signal is representatively described. However, example embodiments are not limited thereto.

The quantization scaled input element register REG_QSIE may sequentially receive the plurality of quantization scaled input elements QSIEfxp. The quantization scaled input element register REG_QSIE may receive the plurality of quantization scaled input elements QSIEfxp, and transfer the received quantization scaled input elements QSIEfxp to the adjacent processing element PE and first input terminal TI1 after one cycle of the control clock signal has elapsed.

The quantization sign bit register REG_QSB may sequentially receive the plurality of quantization sign bits QSB. The quantization sign bit register REG_QSB may receive one quantization sign bit QSB and transfer the received one quantization sign bit QSB to the adjacent processing element PE and the second input terminal TI2 after one cycle of the control clock signal has elapsed.

The output register REG_OUT may receive the fixed point output element OEfxp from the accumulation register REG_ACC. For example, the output register REG_OUT may transfer the fixed point output element OEfxp to the adjacent processing element PE or the second data type converter 260.

That is, the output register REG_OUT may provide the fixed point output element OEfxp to the output register of another adjacent processing element or directly provide the fixed point output element OEfxp to the second data type converter 260. For example, the fixed point output element OEfxp (e.g., $y'_{h1}$) calculated by the processing element PE11 may be sequentially transferred to the second data type converter 260 through the processing elements PE21 to PEh1. However, example embodiments are not limited thereto.

For a more concise description, various example embodiments in which each of the registers included in the processing element PE receives and outputs data for each cycle of the control clock signal is described in FIG. 60, but example embodiments are not limited to the specific operation method of the register in response to the control clock signal.

FIG. 61 is a diagram illustrating the operation of the matrix multiply device of FIG. 1 according to various example embodiments. Referring to FIGS. 1 to 48 and 61, the matrix multiply device MMD may receive a full input matrix FXM. The full-input matrix FXM may include the input matrix XM described above with reference to FIGS. 1 to 48. For example, the full-input matrix FXM may include a plurality of input matrices XM.

The matrix multiply device MMD may receive a full weight matrix FWM. The full-weight matrix FWM may include the weight matrix WM described above with reference to FIGS. 1 to 48. For example, the full-weight matrix FWM may include a plurality of weight matrices WM.

The uniform BCQ circuit UBC may perform uniform binary coding quantization operation for each of the plurality of weight matrices WM included in the full-weight matrix FWM. For example, the uniform BCQ circuit UBC may generate the plurality of quantization sign bits QSB, the plurality of common scale coefficients CSC, and the plurality of scale coefficients MSC from each of the plurality of weight matrices WM.

The matrix multiplier 100 may receive the plurality of quantization sign bits QSB, the plurality of common scale coefficients CSC, and the multiplication scale coefficient MSC. The matrix multiplier 100 may perform the matrix multiplication on the full-input matrix FXM and the full-weight matrix FWM based on the plurality of quantization sign bits QSB, the plurality of common scale coefficients CSC, and the multiplication scale coefficients MSC.

The matrix multiplier 100 may perform the matrix multiplication on the full-input matrix FXM and the full-weight matrix FWM through one of various tiling techniques. For example, the matrix multiplier 100 may calculate the full-output matrix FYM by sequentially calculating the product of the plurality of input matrices XM and the plurality of weight matrices WM and then combining the calculated results to calculate the full-output matrix FYM.

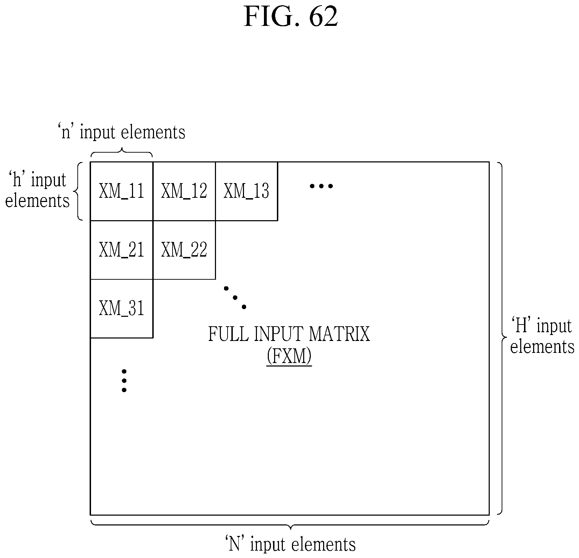

FIG. 62 is a diagram illustrating the full-input matrix of FIG. 61. Referring to FIGS. 1 to 48 and 61 and 62, the full-input matrix FXM may include the plurality of input matrices XM. In other words, the full-input matrix FXM may be tiled with the plurality of input matrices XM arranged in the row direction and column direction. Hereinafter, for more concise description, the input matrix arranged in the (i)-th row and (j)-th column of the full-input matrix FXM will be referred to as "XM_ij".

In example embodiments, the input matrix XM described above with reference to FIGS. 1 to 48 may be one of the plurality of input matrices XM included in the full-input matrix FXM.

In example embodiments, the plurality of input matrices XM included in the full input matrix FXM may have the same row size and column size. For example, each of the plurality of input matrices XM may include 'n' input elements for each row. Each of the plurality of input matrices XM may include 'h' input elements for each column.

The row size of the full-input matrix FXM may be an integer multiple of the row size of each of the plurality of input matrices XM. For example, one row of the full-input matrix FXM may include 'N' input elements. In this case, 'N' may be an integer multiple of 'n'.

The column size of the full-input matrix FXM may be an integer multiple of the column size of each of the plurality of input matrices XM. For example, one column of the full-input matrix FXM may include 'H' input elements. In this case, 'H' may be an integer multiple of 'h'.

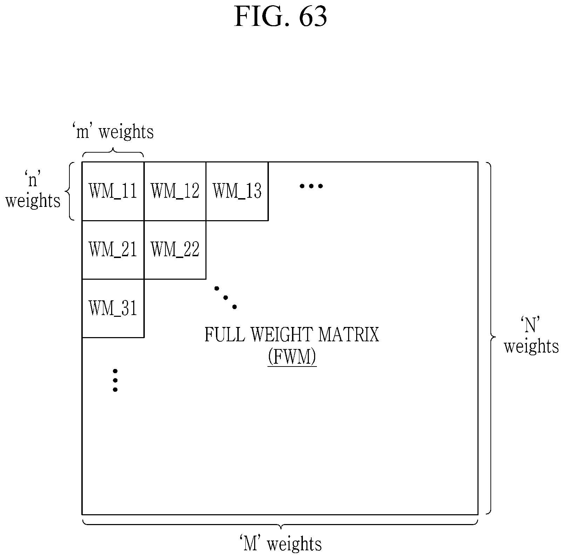

FIG. 63 is a diagram illustrating a full-weight matrix of FIG. 61. Referring to FIGS. 1 to 48 and 61 and 63, the full-weight matrix FXM may include the plurality of weight matrices WM. In some examples, the full-weight matrix FWM may be tiled with the plurality of weight matrices WM arranged in the row direction and column direction. Hereinafter, for more concise description, the weight matrix arranged in the (i)-th row and (j)-th column of the full-weight matrix FWM will be referred to as "WM_ij".

In example embodiments, the weight matrix WM described above with reference to FIGS. 1 to 48 may be one of the plurality of weight matrices WM included in the full-input matrix FXM.

In example embodiments, each of the plurality of weight matrices WM included in the full-weight matrix FWM may have the same row size and column size. For example, each of the plurality of input matrices WM may include 'm' weights for each row. Each of the plurality of weight matrices WM may include 'n' weights for each column.

The row size of the full-weight matrix FWM may be an integer multiple of the row size of each of the plurality of input matrices WM. For example, one row of the full-weight matrix FWM may include 'M' weights. In this case, 'M' may be an integer multiple of 'm'.

The column size of the full-weight matrix FWM may be an integer multiple of the row size of each of the plurality of weight matrices WM. For example, one column of the full-weight matrix FWM may include 'N' weights. In this case, 'N' may be an integer multiple of 'n'.

The uniform BCQ circuit UBC may perform the uniform binary coding quantization operation for each of the plurality of weight matrices WM included in the full-weight matrix FWM. In this case, the plurality of common scale coefficients CSC generated based on the weight matrix WM_11 may be different from the plurality of common scale coefficients CSC generated based on the weight matrix WM_12. Likewise, the plurality of quantization sign bits QSB generated based on the weight matrix WM_11 may be different from the plurality of quantization sign bits QSB generated based on the weight matrix WM_12. The specific method in which the uniform BCQ circuit UBC performs the uniform binary coding quantization operation for each weight matrix WM is similar to that described above with reference to FIGS. 1 to 48, and therefore, detailed description thereof will be omitted.

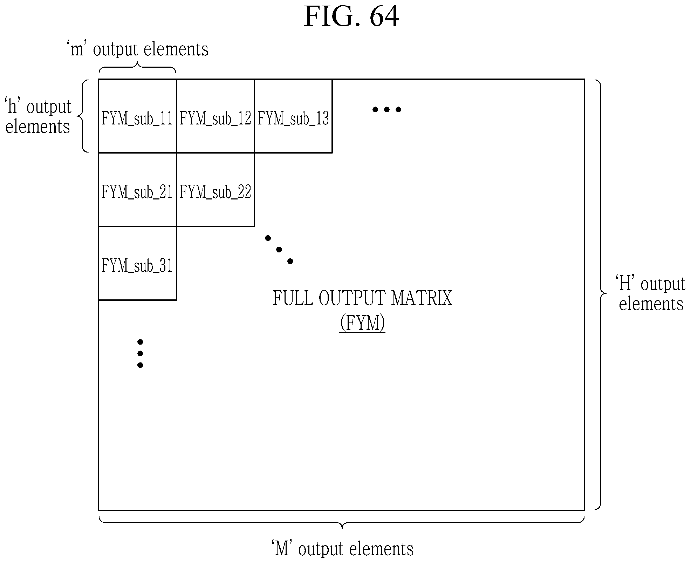

FIG. 64 is a diagram illustrating the full-output matrix of FIG. 61. Referring to FIGS. 1 to 48 and 61 and 64, the full-output matrix FYM may correspond to the product of the full-input matrix FXM and the full-weight matrix FWM.

The full-output matrix FYM may include a plurality of sub-matrices FYM_sub arranged in the row direction and the column direction. Hereinafter, for more concise description, the sub-matrix arranged in the (i)-th row and (j)-th column of the full-output matrix FYM will be referred to as "FYM_sub_ij".

Each of the plurality of sub-matrices FYM_sub may have the same row size and column size. The row size of each of the plurality of sub-matrices FYM_sub may be the same as the row size of the input matrix XM. The column size of each of the plurality of sub-matrices FYM_sub may be the same as the column size of the weight matrix WM. For example, each of the plurality of sub-matrix FYM_sub may include 'm' output elements for each row. Each of the plurality of sub-matrix FYM_sub may include 'h' output elements for each column.

The row size of the full-output matrix FYM may be the same as the row size of the full-weight matrix FWM. For example, the row size of the full-output matrix FYM may be 'M'.

The column size of the full-output matrix FYM may be the same as the column size of the full-input matrix FXM. For example, the column size of the full-output matrix FYM may be 'H'.

The matrix multiply device MMD may calculate the full-output matrix FYM in units of sub-matrix FYM_sub. For example, the matrix multiply device MMD may calculate one sub-matrix FYM_sub by adding the products of a plurality of tiled input matrices XM and the plurality of tiled weight matrices WM, respectively.

For a more detailed example, when 'N' is 3 times of 'n', the matrix multiplier 100 may calculate the sub-matrix FYM_sub_11 by sequentially calculating and adding the product of the input matrix XM_11 and the weight matrix WM_11, the product of the input matrix XM_12 and the weight matrix WM_21, and the product of the input matrix XM_13 and the weight matrix WM_31. In this case, each product of the tiled input matrix and the tiled weight matrix may correspond to the output matrix YM described above with reference to FIGS. 1 to 48. In some examples, the matrix multiplication device MMD may calculate a first output matrix based on a product of the input matrix XM_11 and the weight matrix WM_11, calculate the second output matrix based on a product of an input matrix XM_12 and a weight matrix WM_21, and a third output matrix based on a product of an input matrix XM_13 and a weight matrix WM_31. Thereafter, the matrix multiply device MMD may calculate the sub-matrix FYM sub_11 by adding the above-described first to third output matrices. However, example embodiments are not limited thereto.

That is, the matrix multiply device MMD may be implemented to calculate one sub-matrix (e.g., a portion of the full-output matrix FYM) by accumulating the plurality of output matrices. For example, the matrix multiply device MMD may be implemented to temporarily store the plurality of output matrices in a memory device (e.g. an external volatile memory device (e.g., an SRAM device)) and then accumulate the stored output matrices to calculate one sub-matrix. In this way, the matrix multiply device MMD may be able to sequentially calculate the plurality of sub-matrices FYM_sub to calculate the full-output matrix FYM.

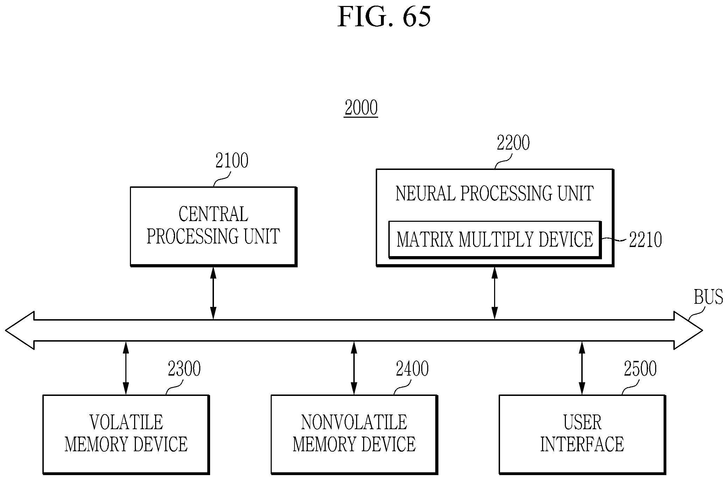

FIG. 65 is a block diagram illustrating a neural processing system implemented according to example embodiments. Referring to FIG. 65, the neural processing system 2000 may include a central processing unit 2100, a neural processing unit 2200, a volatile memory device 2300, a nonvolatile memory device 2400, and a user interface 2500. The central processing unit 2100, the neural processing unit 2200, the volatile memory device 2300, the volatile memory device 2400, and the user interface 2500 may be connected to each other through a bus BUS.

The central processing unit 2100 may control an overall operation of the neural processing system 2000. For example, the central processing unit 2100 may control each component of the neural processing system 2000 to operate the artificial intelligence model.

In example embodiments, the artificial intelligence model that the neural processing system 2000 executes may be or include or be included in one or more of any type of the artificial intelligence model such as a language model, an image identification model, an image generation model, a weather analysis model, or the like. For example, the artificial intelligence model that neural processing system 2000 executes may be or include or be included in one or more of any type of the artificial intelligence model such as GPT-3, GPT-4, Pangu, GShard, Megatron-LM, or the like. However, example embodiments are not limited thereto.

In example embodiments, the artificial intelligence model executed by the neural processing system 2000 may perform an inference operation and/or a training operation. However, example embodiments are not limited thereto.

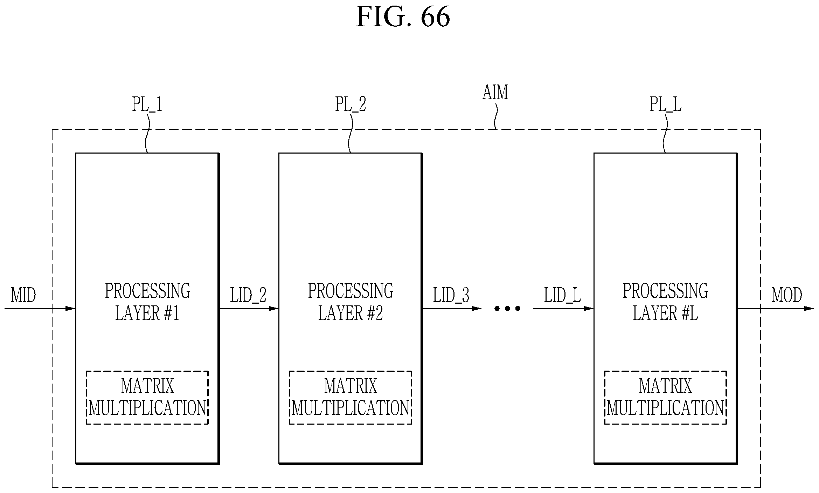

Each artificial intelligence model may include a plurality of processing layers. Each of the plurality of processing layers may be implemented to receive layer input data to generate layer output data. In this case, the generated layer output data may be used as layer input data for another processing layer. For example, layer output data generated from a first processing layer may be used as layer input data for a second processing layer. More detailed descriptions of the artificial intelligence model and the processing layer will be described with reference to FIG. 66.

Each of the plurality of processing layers may transform layer input data into layer output data based on matrix multiplication calculation. For example, each of the plurality of processing layers may generate the output matrix corresponding to the layer output data by multiplying the input matrix corresponding to the layer input data, by the weight matrix. However, the range of the present disclosure is not limited thereto, and each of the plurality of processing layers may generate the output data by converting the input matrix corresponding to the layer input data in any manner. For example, each of the plurality of processing layers may be implemented to generate the layer output data by sequentially multiplying the input matrix corresponding to the layer input data by the plurality of weight matrices, or to convert the input matrix to the layer output data based on any conversion parameter. In other words, example embodiments are not limited to the specific manner in which each of the plurality of processing layers transforms the layer input data.

The neural processing unit 2200 may include a matrix multiplication device 2210. The matrix multiplication device 2210 may execute at least some of calculations included in the plurality of processing layers. For example, the matrix multiplication device 2210 may perform a matrix multiplication calculation included in the plurality of processing layers.

In example embodiments, the matrix multiplication calculation may occupy most of a processing load required/used by the neural processing system 2000 to execute each of the plurality of processing layers.

In example embodiments, the matrix multiplication device 2210 may be implemented as the matrix multiplication device MMD described above with reference to FIGS. 1 to 58. In this case, the neural processing unit 2200 may execute the calculations included in the plurality of processing layers with a smaller computation amount. Therefore, the neural processing system 2000 including the matrix multiplication device MMD according to various example embodiments of the present disclosure may drive the artificial intelligence model at a faster speed and using less power.

The volatile memory device 2300 may be used as an operating memory of the neural processing unit 2200. For example, the volatile memory device 2300 may temporarily store data generated during an operation of the neural processing unit 2200.

In example embodiments, the neural processing unit 2200 may access the volatile memory device 2300 to execute the calculations included in the plurality of processing layers. For example, the neural processing unit 2200 may be implemented to read a parameter stored in the volatile memory device 2300 to perform a calculation for layer input data, or may be implemented to temporarily store intermediate data generated during the calculation in the volatile memory device 2300.

In example embodiments, a calculation speed of the neural processing unit 2200 may be higher than an access speed of the neural processing unit 2200 to the volatile memory device 2300. Accordingly, a bottleneck phenomenon may occur in an operating speed of the artificial intelligence model due to a communication speed between the neural processing unit 2200 and the volatile memory device 2300.

In example embodiments, when the matrix multiply device 2210 is implemented as the matrix multiply device MMD described above with reference to FIGS. 1 to 58, one output element may be calculated based on one processing element PE included in the matrix multiplier MMD. In this case, since one output element may be generated even without combining the output results of the plurality of processing elements PE, the number of times of accesses to the volatile memory device 2300 of the neural processing unit 2200 may be reduced or minimized, and the artificial intelligence model may be driven based on a smaller size of processing element array (e.g. fewer processing elements (PE)). Therefore, according to some example embodiments, the operation speed of the artificial intelligence model may be improved, and the production cost of the neural processing system 2000 may be reduced or minimized.

In example embodiments, when the matrix multiply device 2210 is implemented as the matrix multiply device MMD described above with reference to FIGS. 1 to 58, each processing element PE may not include a '1-bit adder' to perform the multiplication operation for the multiplication scale coefficient MSC. In some examples, according to some example embodiments, the result of the multiplication scaling circuit scaling the input element is provided to the processing element array, so the size and production cost of each processing element PE included in the matrix multiply device MMD are reduced.

In example embodiments, the volatile memory device 2300 may be implemented with any type of volatile memory such as one or more of a dynamic random access memory (DRAM), a static random access memory (SRAM), or the like.

In example embodiments, the volatile memory device 2300 may be used as a buffer memory, an operating memory, or a cache memory of the central processing unit 2100. However, example embodiments are not limited thereto.

The volatile memory device 2400 may store data for the operation of the neural processing system 2000. For example, the volatile memory device 2400 may store various types of data such as a parameter for an operating system (OS) of the neural processing system 2000, a parameter for driving the artificial intelligence model, and the like. However, example embodiments are not limited thereto.

The central processing unit 2100 may communicate, e.g., with one or more users through the user interface 2500. The central processing unit 2100 may provide model input data provided by the user, to the volatile memory device 2300 or the neural processing unit 2200, through the user interface 2500. The central processing unit 2100 may return model output data generated by the artificial intelligence model based on the model input data to the user through the user interface 2500.

FIG. 66 is a block diagram illustrating an artificial intelligence model driven by the neural processing system of FIG. 65. Referring to FIGS. 65 and 66, the neural processing system 2000 may drive an artificial intelligence model AIM.

The artificial intelligence model AIM may receive the model input data MID. The artificial intelligence model AIM may include first to L-th processing layers PL_1-PL_L.

The artificial intelligence model AIM may generate the model output data MOD by sequentially converting the model input data MID through the first to L-th processing layers PL_1-PL_L. For example, the first processing layer PL_1 may receive the model input data MID, and may generate second layer input data LID_2. The second processing layer PL_2 may receive the second layer input data LID_2, and may generate third layer input data LID_3. In this way, the L-th processing layer PL_L may receive L-th layer input data LID_L, and may generate the model output data MOD.

Each of the first to L-th processing layers PL_1-PL_L may transform (or convert) the received data into data to be output through various types of calculations. For example, a matrix multiplication calculation may be included in calculations performed by the first processing layer PL_1 to transform the model input data MID to the second layer input data LID_2. Similarly, each of the first to L-th processing layers PL_1-PL_L may have to perform the matrix multiplication calculation to transform the received layer input data. However, the range is not limited thereto, and some of the first to L-th processing layers PL_1-PL_L may not perform the matrix multiplication calculation.

In example embodiments, the matrix multiplication calculation performed by each of the first to L-th processing layers PL_1-PL_L may be performed through the matrix multiplication device 2210.

In example embodiments, if the matrix multiplication device 2210 is implemented as the matrix multiplication device MMD described above with reference to FIGS. 1 to 48, the matrix multiplication device 2210 may output a result of the matrix multiplication calculation at a faster speed. Therefore, according to various example embodiments, an operation speed of the artificial intelligence model AIM may be improved.

For a more concise description, various example embodiments including of the plurality of processing layers in which the artificial intelligence model AIM operates in series is representatively described In FIG. 66, but example embodiments are not limited thereto. For example, the artificial intelligence model AIM may further include a processing layer that operates in parallel for at least some of the first to L-th processing layers PL_1 -PL_L described above. For example, example embodiments are not limited to the specific implementation method of the artificial intelligence model AIM.

Any of the elements and/or functional blocks disclosed above may include or be implemented in processing circuitry such as hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc. The processing circuitry may include electrical components such as at least one of transistors, resistors, capacitors, etc. The processing circuitry may include electrical components such as logic gates including at least one of AND gates, OR gates, NAND gates, NOT gates, etc.

Embodiments are set out in the following clauses:

Clause 1. An operation metod of a matrix multiply device, comprising:

receiving first to N-th weights from an external device, wherein N is an integer greater than or equal to 2;
generating first to N-th common scale coefficients, first to R-th multiplication scale coefficients, and first to $(N \times R)$-th quantization sign bits by performing uniform binary coding quantization for the first to N-th weights, wherein R is an integer greater than or equal to 2;
receiving first to N-th input elements from the external device;
generating first to $(n \times R)$-th quantization scaled input elements by performing quantization scaling for the first to N-th input elements based on the first to N-th common scale coefficients and the first to R-th multiplication scale coefficients; and
outputting a first output element generated based on the first to $(n \times R)$-th quantization sign bits and the first to $(n \times R)$-th quantization scaled input elements.

Clause 2. The operation method of clause 1, wherein the generating the first to $(N \times R)$-th quantization scaled input elements includes:

generating first to $(N \times R)$-th quantization scale coefficients by multiplying each of the first to R-th multiplication scale coefficients with the first to N-th common scale coefficients; and
generating the first to $(N \times R)$-th quantization scaled input elements by multiplying each of the first to $(N \times R)$-th quantization scale coefficients with corresponding one of the first to N-th input elements.

Clause 3. The operation method of clause 2, wherein:

the first to N-th common scale coefficients have a floating point data type, and
the first to R-th multiplication scale coefficients are powers of 2 different each other.

Clause 4. The operation method of any preceding clause, wherein the outputting the first output element includes:

generating first-to-(NxR)th fixed point quantization scaled input elements by converting data types of the first-to-(NxR)th quantization scaled input elements to fixed point;
calculating a first fixed point output element based on the first-to-(NxR)th quantization sign bits and the first-to-(NxR)th fixed point quantization scaled input elements; and
outputting the first output element generated by converting the data type of the first fixed point output element to floating point.

Clause 5. The operation method of clause 4, wherein

the first fixed point output element corresponds to a value obtained by subtracting a second value from a first value,
the first value is obtained by adding the first plurality of quantization scaled input elements among the first-to-(NxR)th quantization scaled input elements, corresponding to a first plurality of quantization sign bits representing '0' among the first-to-(NxR)th quantization sign bits, and

the second value is obtained by adding a second plurality of quantization scaled input elements among the first-to-(NxR)th quantization scaled input elements, correponding to a second plurality of quantization sign bits representing '1' among the first-to-(NxR)th quantization sign bits.

The contents described above are specific example embodiments for implementing various inventive concepts. Inventive concepts may include not only the above-described example embodiments but also other example embodiments that may be simply changed in design or may be easily modified. Additionally, inventive concepts may also include technologies that may be easily modified and implemented using various example embodiments. Therefore, the scope of inventive concepts should not be limited to the above-described example embodiments, but should be defined by the claims described below as well as the claims and equivalents of the present disclosure. Furthermore, example embodiments are not necessarily mutually exclusive with one another. For example, some example embodiments may include one or more features described with reference to one or more figures, and may also include one or more other features described with reference to one or more other figures.

**Claims**

1. A matrix multiplier, comprising:

   an input vector scaler configured to generate a first quantization scaled input vector based on a first input vector, on a plurality of common scale coefficients, and on first-to-R-th multiplication scale coefficients, where R is an integer greater than or equal to 2;
   a first data type converter configured to generate a first fixed point quantization scaled input vector based on the first quantization scaled input vector;
   a processing element array comprising a first processing element configured to generate a first fixed point output element based on the first fixed point quantization scaled input vector and on a first plurality of quantization sign bits, and a second processing element configured to generate a second fixed point output element based on the first fixed point quantization scaled input vector and on a second plurality of quantization sign bits; and
   a second data type converter configured to generate first and second output elements by converting data types of the first and second fixed point output elements, respectively, and configured to output a first output vector including the first and second output elements.

2. The matrix multiplier of claim 1, wherein,

   the first input vector includes first and second input elements, and
   the first quantization scaled input vector includes:

   a first plurality of quantization scaled input elements generated based on the first input element, on a first common scale coefficient corresponding to one of the plurality of common scale coefficients, and on the first-to-Rth multiplication scale coefficients; and
   a second plurality of quantization scaled input elements generated based on the second input element, a second common scale coefficient corresponding to one of the plurality of common scale coefficients, and the first-to-Rth multiplication scale coefficients.

3. The matrix multiplier of claim 2, wherein the input vector scaler includes:

   a multiplication scaling circuit configured to generate first-to-Rth multiplication scaled input elements based on the first input element and the first-to-Rth multiplication scale coefficients, and configured to generate (R+1)th-to-(2R)th multiplication scaled input elements based on the second input element and the first-to-Rth multiplication scale coefficients; and
   a common scaling circuit configured to generate the first plurality of quantization scaled input elements based on products of the first common scale coefficient with each of the first-to-Rth multiplication scaled input elements, and configured to generate the second plurality of quantization scaled input elements based on products of the second common scale coefficient with each of the (R+1)th-to-(2R)th multiplication scaled input elements.

4. The matrix multiplier of claim 2, wherein the input vector scaler includes:

   a common scaling circuit configured to generate a first common scaled input element based on a product of the first input element and the first common scale coefficient, and configured to generate a second common scaled input element based on a product of the second input element and the second common scale coefficient; and a multiplication scaling circuit configured to generate the first plurality of quantization scaled input elements based on a product of the first common scaled input element with each of the first-to-Rth multiplication scale coefficients, and configured to generate the second plurality of quantization scaled input elements based on a product of the second common scaled input element with each of the first-to-Rth multiplication scale coefficients.

5. The matrix multiplier of claim 2, wherein the input vector scaler includes:

a multiplication scaling circuit configured to generate first-to-Rth quantization scale coefficients based on a product of the first common scale coefficient with each of the first-to-Rth multiplication scale coefficients, and configured to generate (R+1)th-to-(2R)th quantization scale coefficients based on a product of the second common scale coefficient with each of the first-to-Rth multiplication scale coefficients; and a first quantization scaling circuit configured to generate the first plurality of quantization scaled input elements based on the first input element and the first-to-Rth quantization scale coefficients, and configured to generate the second plurality of quantization scaled input elements based on the second input element and the (R+1)th-to-(2R)th quantization scale coefficients.

6. The matrix multiplier of claim 5, wherein:

the first common scale coefficient has a floating point data type, and the multiplication scaling circuit is configured to generate the first-to-Rth quantization scale coefficients by changing a value of an exponent part of the first common scale coefficient based on the first-to-Rth multiplication scale coefficients.

7. The matrix multiplier of any of claims 2-6, wherein:

the input vector scaler is further configured to generate a second quantization scaled input vector based on a second input vector, on the plurality of common scale coefficients, and on the first-to-Rth multiplication scale coefficients, the first data type converter is further configured to generate a second fixed point quantization scaled input vector based on the second quantization scaled input vector, the processing element array further comprises a third processing element configured to generate a third fixed point output element based on the second fixed point quantization scaled input vector and on the first plurality of quantization sign bits, and a fourth processing element configured to generate a fourth fixed point output element based on the second fixed point quantization scaled input vector and on the second plurality of quantization sign bits, and the second data type converter is further configured to generate third and fourth output elements by converting data types of the third and fourth fixed point output elements, respectively, and configured to output a second output vector including third and fourth output elements.

8. The matrix multiplier of claim 7, when dependent on claim 5 or claim 6, wherein:

the second input vector includes third and fourth input elements, and the input vector scaler further includes a second quantization scaling circuit configured to generate a third plurality of quantization scaled input elements included in the second quantization scaled input vector based on the third input element and on the first-to-Rth quantization scale coefficients, and configured to generate a fourth plurality of quantization scaled input elements included in the second quantization scaled input vector based on the fourth Input element and on the (R+1)th-to-(2R)th quantization scale coefficients.

9. The matrix multiplier of claim 7 or claim 8, wherein:

the first processing element is arranged in a first processing element row and in a first processing element column of the processing element array, the second processing element is arranged in the first processing element row and in a second processing element column of the processing element array, the third processing element is arranged in a second processing element row and in the first processing element column of the processing element array, and

the fourth processing element is arranged in the second processing element row and in the second processing element column of the processing element array.

**10.** The matrix multiplier of any preceding claim, wherein:

the first-to-Rth multiplication scale coefficients form a geometric sequence with a common ratio of 2.

**11.** The matrix multiplier of any preceding claim, wherein:

the input vector scaler is configured to generate the first quantization scaled input vector further based on a plurality of zero points,

the first processing element is configured to generate the first fixed point output element further based on a plurality of zero point correction bits, each corresponding to the plurality of zero points, and

the second processing element is configured to generate the second fixed point output element based on the plurality of zero point correction bits.

**12.** A matrix multiplier, comprising:

an input vector scaler configured to generate a first multiplication scaled input vector based on a first input vector and first-to-Rth multiplication scale coefficients, where R is an integer greater than or equal to 2;

a first data type converter configured to generate a first fixed point multiplication scaled input vector based on the first multiplication scaled input vector;

a processing element array including a first processing element configured to generate a first fixed point partial product based on the first fixed point multiplication scaled input vector and on a first plurality of quantization sign bits;

a second data type converter configured to generate a first partial product by converting a data type of the first fixed point partial product; and

a common scaler configured to generate a first output element based on a product of the first partial product with a first common scale coefficient, and configured to output a first output vector including the first output element.

**13.** The matrix multiplier of claim 12, wherein:

the first input vector includes first-to-Nth input elements, wherein, N is an integer greater than or equal to 2; and

the input vector scaler includes a multiplication scaling circuit configured to generate first to $(N \times R)$ multiplication scaled input elements included in the first multiplication scaled input vector by multiplyng each of the first-to-Nth input elements with the first-to-Rth multiplication scale coefficients.

**14.** The matrix multiplier of claim 12 or claim 13, wherein:

the processing element array further includes a second processing element configured to generate a second fixed point partial product based on the first fixed point multiplication scaled input vector and on a second plurality of quantization sign bits,

the second data type converter is further configured to generate a second partial product by converting a data type of the second fixed point partial product, and

the common scaler is further configured to generate a second output element included in the first output vector based on a product of the second partial product and on a second common scale coefficient.

**15.** The matrix multiplier of any of claims 12-14, wherein:

the first fixed point multiplication scaled input vector includes a first plurality of fixed point multiplication scaled input elements and a second plurality of fixed point multiplication scaled input elements, and

the first processing element is configured to generate the first fixed point partial product based on subtracting a second value from a first value,

wherein the first value corresponds to a sum of the first plurality of fixed point multiplication scaled input elements respectively corresponding to quantization sign bits representing '0' among the first plurality of quantization sign bits,

wherein the second value corresponds to a sum of the second plurality of fixed point multiplication scaled input elements respectively corresponding to quantization sign bits representing '1' among the first plurality of quantization sign bits.

# FIG. 1

MMD

MATRIX MULTIPLY DEVICE

100

XM
$\{\vec{X_1}, \vec{X_2}, \vec{X_3}, \ldots \vec{X_h}\}$

MATRIX MULTIPLIER

YM
$\{\vec{Y_1}, \vec{Y_2}, \vec{Y_3}, \ldots \vec{Y_h}\}$

CSC, MSC, QSB

UBC

WM

UNIFORM BCQ CIRCUIT

# FIG. 2

n-times of "Floating point multiplication"
(n-1) times of "Floating point summation"

$$
\begin{bmatrix} x_{11} & x_{12} & \cdots & x_{1n} \\ x_{21} & x_{22} & \cdots & x_{2n} \\ \vdots & \vdots & \ddots & \vdots \\ x_{h1} & x_{h2} & \cdots & x_{hn} \end{bmatrix} \times \begin{bmatrix} w_{11} & w_{12} & \cdots & w_{1m} \\ w_{21} & w_{22} & \cdots & w_{2m} \\ \vdots & \vdots & \ddots & \vdots \\ w_{n1} & w_{n2} & \cdots & w_{nm} \end{bmatrix} = \begin{bmatrix} y_{11} & y_{12} & \cdots & y_{1m} \\ y_{21} & y_{22} & \cdots & y_{2m} \\ \vdots & \vdots & \ddots & \vdots \\ y_{h1} & y_{h2} & \cdots & y_{hm} \end{bmatrix}
$$

INPUT MATRIX
(XM)

WEIGHT MATRIX
(WM)

OUTPUT MATRIX
(YM)

EP 4 546 113 A1

FIG. 3

## FIG. 4

|  | QSB1 | QSB2 | QSB3 | Quantization level |
|---|---|---|---|---|
| QL1 | 1 | 1 | 1 | ZPV−QSC1−QSC2−QSC3 |
| QL2 | 0 | 1 | 1 | ZPV+QSC1−QSC2−QSC3 |
| QL3 | 1 | 0 | 1 | ZPV−QSC1+QSC2−QSC3 |
| QL4 | 0 | 0 | 1 | ZPV+QSC1+QSC2−QSC3 |
| QL5 | 1 | 1 | 0 | ZPV−QSC1−QSC2+QSC3 |
| QL6 | 0 | 1 | 0 | ZPV+QSC1−QSC2+QSC3 |
| QL7 | 1 | 0 | 0 | ZPV−QSC1+QSC2+QSC3 |
| QL8 | 0 | 0 | 0 | ZPV+QSC1+QSC2+QSC3 |

# FIG. 5

$$WM = \begin{bmatrix} \begin{bmatrix} w_{11} \\ w_{21} \\ \vdots \\ w_{n1} \end{bmatrix} & \begin{bmatrix} w_{12} \\ w_{22} \\ \vdots \\ w_{n2} \end{bmatrix} & \cdots & \begin{bmatrix} w_{1m} \\ w_{2m} \\ \vdots \\ w_{nm} \end{bmatrix} \end{bmatrix}$$

$$\overrightarrow{w_{c1}} \qquad \overrightarrow{w_{c2}} \qquad \overrightarrow{w_{cm}}$$

$$\overrightarrow{w_{cj}} \approx \sum_{k=1}^{R} \left( \alpha_{k\_cj} \times \overrightarrow{B_{k\_cj}} \right) = s_{cj} \times \sum_{k=1}^{R} \left( 2^{k-1} \times \overrightarrow{B_{k\_cj}} \right)$$

# FIG. 6

$$y_{11} = \overrightarrow{X_1} \times \overrightarrow{W_{c1}}$$

$$\approx \overrightarrow{X_1} \times s_{c1} \times \left(2^0 \times \overrightarrow{B_{1\_c1}} + 2^1 \times \overrightarrow{B_{2\_c1}} + \ldots + 2^{R-1} \times \overrightarrow{B_{R\_c1}}\right)$$

$$\approx \left\{\left(2^0 \times \overrightarrow{X_1}\right) \times \overrightarrow{B_{1\_c1}} + \left(2^1 \times \overrightarrow{X_1}\right) \times \overrightarrow{B_{2\_c1}} + \ldots + \left(2^{R-1} \times \overrightarrow{X_1}\right) \times \overrightarrow{B_{R\_c1}}\right\} \times s_{c1}$$

$$\underbrace{\phantom{XXXXXXXXXXXXXXXXXXXXXXXXXXXXXXXXXXXXX}}_{\text{PSP11}}$$

$(R \times n)$-times of "Floating point multiplication for power of 2"
$(R \times n)$-times of "Floating point summation"
$(R-1)$-times of "Floating point summation"
1-time of "Floating point multiplication"

# FIG. 7

EP 4 546 113 A1

# FIG. 8

EP 4 546 113 A1

EP 4 546 113 A1

# FIG. 9

# FIG. 10

Sign [SP]　Exponent [EXPP]　Mantissa [MTSP]

IE  | 0 | 0 | ⋯ | 1 | 0 | 0 | 1 | ⋯ | 0 | 1 |

"Multiplication scaling by add value to exponent part"

MSIE  | 0 | 0 | ⋯ | 1 | 0 | 1 | 1 | ⋯ | 0 | 1 |

# FIG. 11

EP 4 546 113 A1

# FIG. 12

# FIG. 13

MTSP of MSIE11_1
[MTSPa]

| 1 | 0 | 1 | 0 | 0 | ... | 0 | 1 | 1 | 0 | 1 |

"Shift as difference of
EXP1 and exponent of MSIE11_1"

MTSP of MSIEfxp11_1
[MTSPb]

| 0 | 0 | 0 | 0 | 1 | 0 | 1 | 0 | ... | 0 | 1 | 1 | 0 | 1 |

Mantissa of MSIEfxp11_1          "Cutoff / Rounding"

EP 4 546 113 A1

# FIG. 14

$\overrightarrow{QSB_1}$  $\overrightarrow{QSB_2}$  $\overrightarrow{QSB_3}$  $\overrightarrow{QSB_m}$

150

$\overrightarrow{MSX_1}$

| PE11 | PE12 | PE13 | ... | PE1m |
| [PSPfxp11] | [PSPfxp12] | [PSPfxp13] | | [PSPfxp1m] |

PER1

$\overrightarrow{MSX_2}$

| PE21 | PE22 | PE23 | ... | PE2m |
| [PSPfxp21] | [PSPfxp22] | [PSPfxp23] | | [PSPfxp2m] |

PER2

$\overrightarrow{MSX_h}$

| PEh1 | PEh2 | PEh3 | ... | PEhm |
| [PSPfxph1] | [PSPfxph2] | [PSPfxph3] | | [PSPfxphm] |

PERh

PEC1  PEC2  PEC3  PECm

## FIG. 15

EP 4 546 113 A1

# FIG. 16

# FIG. 17

## FIG. 18

PSPfxp

Sign [SP] | Mantissa [MTSP]

| 1 | 0 | ··· | 1 | 1 |

PSP

Sign [SP] | Exponent [EXPP] | Mantissa [MTSP]

| 1 | 0 | ··· | 1 | 1 | 0 | ··· | 1 | 1 | 0 | 0 | ··· | 0 |

↑ "Insert EXP1"

↑ "Insert '0' bits"

EP 4 546 113 A1

# FIG. 19

```
         ┌─────────────┐
         (    START    )
         └─────────────┘
                │
                ▼
┌─────────────────────────────────┐
│      Receive weight matrix       │──S110
└─────────────────────────────────┘
                │
                ▼
┌─────────────────────────────────┐
│  Generate a plurality of MSC,    │
│  CSC, and QSB by performing      │──S120
│  uniform binary coding           │
│  quantization for the weight     │
│  matrix                          │
└─────────────────────────────────┘
                │
                ▼
┌─────────────────────────────────┐
│       Receive input vector       │──S130
└─────────────────────────────────┘
                │
                ▼
┌─────────────────────────────────┐
│  Generate MSX by performing      │
│  multiplication scaling for the  │──S140
│  input vector based on the       │
│  plurality of MSC                │
└─────────────────────────────────┘
                │
                ▼
┌─────────────────────────────────┐
│  Generate a plurality of PSP     │
│  based on the plurality of QSB   │──S150
│  and elements of the MSX         │
└─────────────────────────────────┘
                │
                ▼
┌─────────────────────────────────┐
│  Generate output vector by       │
│  multiplying PSP and the         │──S160
│  plurality of CSC respectively   │
└─────────────────────────────────┘
                │
                ▼
         ┌─────────────┐
         (     END     )
         └─────────────┘
```

# FIG. 20

START

S150

Generate MSXfxp by converting data type
of the MSX to fixed point — S151

Generate a plurality of PSPfxp based on the
plurality of QSB and MSXfxp — S152

Convert data type of the plurality of PSPfxp
to floating point — S153

END

# FIG. 21

```
                        ┌─────────────┐
                        │    START    │
                        └─────────────┘
                               │
                               ▼
        ┌──────────────────────────────────────────┐
        │       Receive first to n-th weights       │──S210
        └──────────────────────────────────────────┘
                               │
                               ▼
        ┌──────────────────────────────────────────┐
        │  Generate first to R-th MSCs, a CSC, and first to  │
        │  (n×R)-th QSBs, by performing uniform binary       │──S220
        │  coding quantization for the first to n-th weights │
        └──────────────────────────────────────────┘
                               │
                               ▼
        ┌──────────────────────────────────────────┐
        │      Receive first to n-th input elements  │──S230
        └──────────────────────────────────────────┘
                               │
                               ▼
        ┌──────────────────────────────────────────┐
        │  Generate first to (n×R)-th MSIEs by performing  │
        │  multiplication scaling for the first to n-th input │──S240
        │  elements based on the first to R-th MSCs         │
        └──────────────────────────────────────────┘
                               │
                               ▼
        ┌──────────────────────────────────────────┐
        │  Generate a PSP based on the first to (n×R)-th   │
        │  QSBs and the first to (n×R)-th MSIEs           │──S250
        └──────────────────────────────────────────┘
                               │
                               ▼
        ┌──────────────────────────────────────────┐
        │  Output an output element generated by multiplying │
        │  the PSP with the CSC                            │──S260
        └──────────────────────────────────────────┘
                               │
                               ▼
                        ┌─────────────┐
                        │     END     │
                        └─────────────┘
```

# FIG. 22

```
                    ( START )
                                                    S250
  ┌ ─ ─ ─ ─ ─ ─ ─ ─ ─ ─ ─ ─ ─ ─ ─ ─ ─ ─ ─ ─ ─ ─ ┐
  │  ┌──────────────────────────────────────┐     │
  │  │ Generate first to (n×R)-th MSIEfxp by  │     │
  │  │ converting data type of the first to   │─ S251 │
  │  │ (n×R)-th MSIE to fixed point           │     │
  │  └──────────────────────────────────────┘     │
  │                    │                           │
  │  ┌──────────────────────────────────────┐     │
  │  │ Calculate a PSPfxp by subtracting sum  │     │
  │  │ of MSIEfxps corresponding to QSB       │─ S252 │
  │  │ indicating '1' from sum of             │     │
  │  │ MSIEfxps corresponding to QSB indicating '0' │
  │  └──────────────────────────────────────┘     │
  │                    │                           │
  │  ┌──────────────────────────────────────┐     │
  │  │ Output an PSP generated by converting  │     │
  │  │ data type of the PSPfxp to floating    │─ S253 │
  │  │ point                                  │     │
  │  └──────────────────────────────────────┘     │
  └ ─ ─ ─ ─ ─ ─ ─ ─ ─ ─ ─ ─ ─ ─ ─ ─ ─ ─ ─ ─ ─ ─ ┘
                      │
                    ( END )
```

FIG. 23

$$WM = \begin{bmatrix} w_{11} & w_{12} & \cdots & w_{1m} \\ w_{21} & w_{22} & \cdots & w_{2m} \\ \vdots & \vdots & \ddots & \vdots \\ w_{n1} & w_{n2} & \cdots & w_{nm} \end{bmatrix} \begin{matrix} \longrightarrow \overrightarrow{w_{r1}} \\ \longrightarrow \overrightarrow{w_{r2}} \\ \\ \longrightarrow \overrightarrow{w_{rn}} \end{matrix} \Bigg\}$$

$$\overrightarrow{w_{ri}} \approx \sum_{k=1}^{R} \left( \alpha_{k\_ri} \times \overrightarrow{B_{k\_ri}} \right)$$

$$\approx s_{ri} \times \sum_{k=1}^{R} \left( 2^{k-1} \times \overrightarrow{B_{k\_ri}} \right)$$

# FIG. 24

$$WM \approx \begin{bmatrix} \alpha_{1\_r1} \times \overrightarrow{B_{1\_r1}} + \alpha_{2\_r1} \times \overrightarrow{B_{2\_r1}} + \ldots + \alpha_{R\_r1} \times \overrightarrow{B_{R\_r1}} \\ \alpha_{1\_r2} \times \overrightarrow{B_{1\_r2}} + \alpha_{2\_r2} \times \overrightarrow{B_{2\_r2}} + \ldots + \alpha_{R\_r2} \times \overrightarrow{B_{R\_r2}} \\ \vdots \\ \alpha_{1\_rn} \times \overrightarrow{B_{1\_rn}} + \alpha_{2\_rn} \times \overrightarrow{B_{2\_rn}} + \ldots + \alpha_{R\_rn} \times \overrightarrow{B_{R\_rn}} \end{bmatrix}$$

$$= \begin{bmatrix} 2^0 \times s_{r1} \times \overrightarrow{B_{1\_r1}} + 2^1 \times s_{r1} \times \overrightarrow{B_{2\_r1}} + \ldots + 2^{R-1} \times s_{r1} \times \overrightarrow{B_{R\_r1}} \\ 2^0 \times s_{r2} \times \overrightarrow{B_{1\_r2}} + 2^1 \times s_{r2} \times \overrightarrow{B_{2\_r2}} + \ldots + 2^{R-1} \times s_{r2} \times \overrightarrow{B_{R\_r2}} \\ \vdots \\ 2^0 \times s_{rn} \times \overrightarrow{B_{1\_rn}} + 2^1 \times s_{rn} \times \overrightarrow{B_{2\_rn}} + \ldots + 2^{R-1} \times s_{rn} \times \overrightarrow{B_{R\_rn}} \end{bmatrix}$$

QSBM_1        QSBM_2    ...    QSBM_R

# FIG. 25

EP 4 546 113 A1

FIG. 26

# FIG. 27

210

MULTIPLICATION SCALE
COEFFICIENT BUFFER

270

COMMON SCALE
COEFFICIENT BUFFER

MSC

CSC

220

SCL_multiple

SCL_common

221_1

$\overrightarrow{X_1}$

MULTIPLICATION
SCALING CIRCUIT

$\overrightarrow{MSX_1}$

222_1

COMMON SCALING
CIRCUIT

$\overrightarrow{QSX_1}$

221_2

$\overrightarrow{X_2}$

MULTIPLICATION
SCALING CIRCUIT

$\overrightarrow{MSX_2}$

222_2

COMMON SCALING
CIRCUIT

$\overrightarrow{QSX_2}$

221_3

$\overrightarrow{X_3}$

MULTIPLICATION
SCALING CIRCUIT

$\overrightarrow{MSX_3}$

222_3

COMMON SCALING
CIRCUIT

$\overrightarrow{QSX_3}$

221_h

$\overrightarrow{X_h}$

MULTIPLICATION
SCALING CIRCUIT

$\overrightarrow{MSX_h}$

222_h

COMMON SCALING
CIRCUIT

$\overrightarrow{QSX_h}$

# FIG. 28

$\overrightarrow{MSX_1}$

MSIE for $x_{1n}$ ··· MSIE for $x_{12}$ MSIE for $x_{11}$

MSIE1n_R  MSIE1n_1  MSIE12_R  MSIE12_1  MSIE11_R  MSIE11_1

MSIE1n_2  MSIE12_2  MSIE11_2

| $2^{R-1}$ $\times$ $x_{1n}$ | ··· | $2^1$ $\times$ $x_{1n}$ | $2^0$ $\times$ $x_{1n}$ | ··· | $2^{R-1}$ $\times$ $x_{12}$ | ··· | $2^1$ $\times$ $x_{12}$ | $2^0$ $\times$ $x_{12}$ | $2^{R-1}$ $\times$ $x_{11}$ | ··· | $2^1$ $\times$ $x_{11}$ | $2^0$ $\times$ $x_{11}$ |

$s_{rn}$

⋮

$s_{r2}$

$s_{r1}$

COMMON
SCALING
CIRCUIT ～222_1

$\overrightarrow{QSX_1}$

QSIE for $x_{1n}$  QSIE for $x_{12}$  QSIE for $x_{11}$

| $\alpha_{R\_rn}$ $\times$ $x_{1n}$ | ··· | $\alpha_{2\_rn}$ $\times$ $x_{1n}$ | $\alpha_{1\_rn}$ $\times$ $x_{1n}$ | ··· | $\alpha_{R\_r2}$ $\times$ $x_{12}$ | ··· | $\alpha_{2\_r2}$ $\times$ $x_{12}$ | $\alpha_{1\_r2}$ $\times$ $x_{12}$ | $\alpha_{R\_r1}$ $\times$ $x_{11}$ | ··· | $\alpha_{2\_r1}$ $\times$ $x_{11}$ | $\alpha_{1\_r1}$ $\times$ $x_{11}$ |

# FIG. 29

EP 4 546 113 A1

# FIG. 30

# FIG. 31

QSIE for $x_{1n}$    QSIE for $x_{12}$    QSIE for $x_{11}$

$\overrightarrow{CSX_1}$

CSIE1n $\cdots$ CSIE12   CSIE11

$\dfrac{S_{rn}}{\times} \\ X_{1n}$   $\cdots$   $\dfrac{S_{r2}}{\times} \\ X_{12}$   $\dfrac{S_{r1}}{\times} \\ X_{11}$

MSCR

MSC2

MSC1

MULTIPLICATION SCALING CIRCUIT — 224_1

$\overrightarrow{QSX_1}$

$\dfrac{\alpha_{R\_rn}}{\times} \\ X_{1n}$ $\cdots$ $\dfrac{\alpha_{2\_rn}}{\times}\Big| \dfrac{\alpha_{1\_rn}}{\times} \\ X_{1n} \Big| X_{1n}$ $\cdots$ $\dfrac{\alpha_{R\_r2}}{\times} \\ X_{12}$ $\cdots$ $\dfrac{\alpha_{2\_r2}}{\times}\Big|\dfrac{\alpha_{1\_r2}}{\times}\Big|\dfrac{\alpha_{R\_r1}}{\times} \\ X_{12}\Big| X_{12}\Big| X_{11}$ $\cdots$ $\dfrac{\alpha_{2\_r1}}{\times}\Big|\dfrac{\alpha_{1\_r1}}{\times} \\ X_{11}\Big| X_{11}$

EP 4 546 113 A1

# FIG. 32

270

COMMON SCALE
COEFFICIENT BUFFER

CSC

220

225

MULTIPLICATION
SCALING CIRCUIT

210

MULTIPLICATION SCALE
COEFFICIENT BUFFER

MSC

QSC

SCL_quantization

226_1

$\vec{X_1}$

QUANTIZATION
SCALING CIRCUIT

$\vec{QSX_1}$

226_2

$\vec{X_2}$

QUANTIZATION
SCALING CIRCUIT

$\vec{QSX_2}$

226_3

$\vec{X_3}$

QUANTIZATION
SCALING CIRCUIT

$\vec{QSX_3}$

226_h

$\vec{X_h}$

QUANTIZATION
SCALING CIRCUIT

$\vec{QSX_h}$

EP 4 546 113 A1

# FIG. 33

FIG. 34

# FIG. 35

EP 4 546 113 A1

FIG. 36

250

PER1
PER2
PERh

PE1m [y'_{1m}]   PE2m [y'_{2m}]   PEhm [y'_{hm}]   PECm

PE13 [y'_{13}]   PE23 [y'_{23}]   PEh3 [y'_{h3}]   PEC3

PE12 [y'_{12}]   PE22 [y'_{22}]   PEh2 [y'_{h2}]   PEC2

PE11 [y'_{11}]   PE21 [y'_{21}]   PEh1 [y'_{h1}]   PEC1

QSBs_m   QSBs_3   QSBs_2   QSBs_1

$\overline{QSX^i_1}$   $\overline{QSX^i_2}$   $\overline{QSX^i_h}$

# FIG. 37

# FIG. 38

# FIG. 39

OEfxp

Sign [SP] | Mantissa [MTSP]

| 1 | 0 | ··· | 1 | 1 |

OE

Sign [SP] | Exponent [EXPP] | Mantissa [MTSP]

| 1 | 0 | ··· | 1 | 1 | 0 | ··· | 1 | 1 | 0 | 0 | ··· | 0 |

"Insert EXP"

"Insert '0' bits"

# FIG. 40

```
                    ( START )
                        │
                        ▼
   ┌─────────────────────────────────────┐
   │         Receive weight matrix        │──S310
   └─────────────────────────────────────┘
                        │
                        ▼
   ┌─────────────────────────────────────┐
   │  Generate a plurality of MSC, CSC,   │
   │  and QSB by performing uniform       │──S320
   │  binary coding quantization for the  │
   │            weight matrix             │
   └─────────────────────────────────────┘
                        │
                        ▼
   ┌─────────────────────────────────────┐
   │          Receive input vector        │──S330
   └─────────────────────────────────────┘
                        │
                        ▼
   ┌─────────────────────────────────────┐
   │  Generate QSX by performing          │
   │  quantization scaling for the input  │──S340
   │  vector based on the plurality of    │
   │            MSC and CSC               │
   └─────────────────────────────────────┘
                        │
                        ▼
   ┌─────────────────────────────────────┐
   │  Generate output vector based on the │
   │  plurality of QSB and QSIEs          │──S350
   │  included in QSX                     │
   └─────────────────────────────────────┘
                        │
                        ▼
                    (  END  )
```

# FIG. 41

START

S350

Generate QSXfxp by converting data type of the QSX to fixed point — S351

Generate fixed point output vector based on the plurality of QSB and fixed point elements of the QSX — S352

Generate output vector by converting data type of the fixed point output vector to floating point — S353

END

# FIG. 42

START

Receive first to n-th weights — S410

Generate first to R-th MSCs, first to n-th CSCs,
and first to (n×R)-th QSBs, by performing
uniform binary coding quantization for the
first to n-th weights — S420

Receive first to n-th input elements — S430

Generate first to (n×R)-th QSIEs by performing
quantization scaling for the first to n-th input
elements based on the first to R-th MSCs
and first to n-th CSCs — S440

Output an output element generated based on the
first to (n×R)-th QSIEs and the first to (n×R)-th QSBs — S450

END

# FIG. 43

START

S440a

Generate first to (n×R)-th MSIEs by multiplying each of the first to N-th input elements with the first to R-th MSCs — S441a

Generate first to (n×R)-th QSIEs by multiplying each of first to (n×R)-th MSIEs with corresponding one of the first to N-th CSCs — S442a

END

# FIG. 44

START

S440b

Generate first to n-th CSIEs by multiplying the first to n-th input elements with the first to n-th CSCs respectively — S441b

Generate first to (n×R)-th QSIEs by multiplying each of first to n-th CSIEs with the first to R-th MSCs — S442b

END

## FIG. 45

START

S440c

Generate first to (n×R)-th QSCs by multiplying each of the first to R-th MSCs with first to n-th CSCs — S441c

Generate first to (n×R)-th QSIEs by multiplying each of the first to (n×R)-th QSCs with corresponding one of the first to N-th input elements — S442c

END

## FIG. 46

START

S450

Generate first to (n×R)-th QSIEfxps by converting data type of the first to (n×R)-th QSIEs to fixed point — S451

Calculate a fixed point output element by subtracting sum of QSIEfxps corresponding to QSB indicating '1' from sum of QSIEfxps corresponding to QSB indicating '0' — S452

Output an output element generated by converting data type of the fixed point output element to floating point — S453

END

EP 4 546 113 A1

# FIG. 47

$$WM = \begin{bmatrix} W_{11} & W_{12} & \cdots & W_{1m} \\ W_{21} & W_{22} & \cdots & W_{2m} \\ \vdots & \vdots & \ddots & \vdots \\ W_{n1} & W_{n2} & \cdots & W_{nm} \end{bmatrix} \begin{matrix} \overrightarrow{W_{r1}} \\ \overrightarrow{W_{r2}} \\ \\ \overrightarrow{W_{rn}} \end{matrix} \Bigg\}$$

$$\overrightarrow{w_{ri}} \approx \overrightarrow{ZP_{ri}} + \sum_{k=1}^{R} \left( \alpha_{k\_ri} \times \overrightarrow{B_{k\_ri}} \right)$$

$$\approx \overrightarrow{ZP_{ri}} + \sum_{k=1}^{R} \left( 2^{k-1} \times s_{ri} \times \overrightarrow{B_{k\_ri}} \right)$$

# FIG. 48

EP 4 546 113 A1

# FIG. 49

MULTIPLICATION SCALE COEFFICIENT BUFFER — 310

COMMON SCALE COEFFICIENT BUFFER — 370

MSC, ZPSC

ZPV, CSC

320

SCL_multiple

SCL_common

$\overrightarrow{X_1}$

321_1 MULTIPLICATION SCALING CIRCUIT

$\overrightarrow{MSX_1}$

322_1 COMMON SCALING CIRCUIT

$\overrightarrow{QSX_1}$

$\overrightarrow{X_2}$

321_2 MULTIPLICATION SCALING CIRCUIT

$\overrightarrow{MSX_2}$

322_2 COMMON SCALING CIRCUIT

$\overrightarrow{QSX_2}$

$\overrightarrow{X_3}$

321_3 MULTIPLICATION SCALING CIRCUIT

$\overrightarrow{MSX_3}$

322_3 COMMON SCALING CIRCUIT

$\overrightarrow{QSX_3}$

$\overrightarrow{X_h}$

321_h MULTIPLICATION SCALING CIRCUIT

$\overrightarrow{MSX_h}$

322_h COMMON SCALING CIRCUIT

$\overrightarrow{QSX_h}$

EP 4 546 113 A1

FIG. 50

# FIG. 51

# FIG. 52

# FIG. 53

# FIG. 54

# FIG. 55

370

COMMON SCALE
COEFFICIENT BUFFER

/ ZPV, CSC

320

310

MSC
ZPSC

MULTIPLICATION SCALE
COEFFICIENT BUFFER

325

MULTIPLICATION
SCALING CIRCUIT

QSC, ZPV /

SCL_quantization

326_1

$\overrightarrow{X_1}$

QUANTIZATION
SCALING CIRCUIT

$\overrightarrow{QSX_1}$

326_2

$\overrightarrow{X_2}$

QUANTIZATION
SCALING CIRCUIT

$\overrightarrow{QSX_2}$

326_3

$\overrightarrow{X_3}$

QUANTIZATION
SCALING CIRCUIT

$\overrightarrow{QSX_3}$

326_h

$\overrightarrow{X_h}$

QUANTIZATION
SCALING CIRCUIT

$\overrightarrow{QSX_h}$

# FIG. 56

MSCs and ZPSC for $\overrightarrow{w_{rn}}$ {  MSCR ⋮ MSC1 ZPSC

MSCs and ZPSC for $\overrightarrow{w_{r2}}$ {  MSCR ⋮ MSC1 ZPSC MSCR ⋮

MSCs and ZPSC for $\overrightarrow{w_{r1}}$ {  MSC1 ZPSC

CSCs and ZPV for $\overrightarrow{w_{rn}}$ }  $s_{r2}$ ⋮ $s_{r2}$ ZPVn

CSCs and ZPV for $\overrightarrow{w_{r2}}$ }  $s_{r2}$ ⋮ $s_{r2}$ ZPV2 $s_{r1}$ ⋮

CSCs and ZPV for $\overrightarrow{w_{r1}}$ }  $s_{r1}$ ZPV1

MULTIPLICATION SCALING CIRCUIT ── 325

QSCs for $\overrightarrow{w_{rn}}$     QSCs for $\overrightarrow{w_{r2}}$     QSCs for $\overrightarrow{w_{r1}}$

$\alpha_{R\_rn}$ ⋯ $\alpha_{1\_rn}$ ZPVn ⋯ $\alpha_{R\_r2}$ ⋯ $\alpha_{1\_r2}$ ZPV2 $\alpha_{R\_r1}$ ⋯ $\alpha_{1\_r1}$ ZPV1

EP 4 546 113 A1

# FIG. 57

QSCs for $\overrightarrow{w_{rn}}$ : $\alpha_{R\_rn}$ ... $\alpha_{1\_rn}$ ZPVn

QSCs for $\overrightarrow{w_{r2}}$ : $\alpha_{R\_r2}$ ... $\alpha_{1\_r2}$ ZPV2

QSCs for $\overrightarrow{w_{r1}}$ : $\alpha_{R\_r1}$ ... $\alpha_{1\_r1}$ ZPV1

$\overrightarrow{X_1}$ : $x_{1n}$ ... $x_{12}$ $x_{11}$

QUANTIZATION SCALING CIRCUIT — 326_1

$\overrightarrow{QSX_1}$

QSIE for $x_{1n}$ : $\dfrac{\alpha_{R\_rn}}{\times}$ ... $\dfrac{\alpha_{1\_rn}}{\times}$ $\dfrac{ZPVn}{\times}$
$x_{1n}$ ... $x_{1n}$ $x_{1n}$

QSIE for $x_{12}$ : $\dfrac{\alpha_{R\_r2}}{\times}$ ... $\dfrac{\alpha_{1\_r2}}{\times}$ $\dfrac{ZPV2}{\times}$
$x_{12}$ ... $x_{12}$ $x_{12}$

QSIE for $x_{11}$ : $\dfrac{\alpha_{R\_r1}}{\times}$ ... $\dfrac{\alpha_{1\_r1}}{\times}$ $\dfrac{ZPV1}{\times}$
$x_{11}$ ... $x_{11}$ $x_{11}$

FIG. 58

EP 4 546 113 A1

FIG. 59

# FIG. 60

QSB

PE

QSIEfxp

REG_QSIE

QSIEfxp

REG_QSB

TI1    TI3

TI2    ALU

T0

REG_ACC

REG_OUT

OEfxp

QSB

REG_OUT of adjacent processing element
or
DATA TYPE CONVERTER #2 (260)

# FIG. 61

MMD

MATRIX MULTIPLY DEVICE

100

FXM →

MATRIX MULTIPLIER

→ FYM

CSC, MSC, QSB

UBC

FWM →

UNIFORM BCQ CIRCUIT

# FIG. 62

'n' input elements

'h' input elements

'H' input elements

'N' input elements

| XM_11 | XM_12 | XM_13 | • • • |
| XM_21 | XM_22 | | |
| XM_31 | | | |

FULL INPUT MATRIX
(FXM)

# FIG. 63

'm' weights

'n' weights

| WM_11 | WM_12 | WM_13 | • • • |
| WM_21 | WM_22 | |
| WM_31 | | |

FULL WEIGHT MATRIX
(FWM)

'N' weights

'M' weights

# FIG. 64

'm' output elements

'h' output elements

| FYM_sub_11 | FYM_sub_12 | FYM_sub_13 | • • • |

| FYM_sub_21 | FYM_sub_22 |

| FYM_sub_31 |

FULL OUTPUT MATRIX
(FYM)

'H' output elements

'M' output elements

# FIG. 65

EP 4 546 113 A1

# FIG. 66

Europäisches
Patentamt

European
Patent Office

Office européen
des brevets

# EUROPEAN SEARCH REPORT

**Application Number**

EP 24 19 7016

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Kim Yulhwa ET AL: "WINNING BOTH THE ACCURACY OF FLOATING POINT ACTIVATION AND THE SIMPLICITY OF INTEGER ARITHMETIC", , 28 February 2023 (2023-02-28), XP093242728, Retrieved from the Internet: URL:https://openreview.net/pdf?id=z921By1e hjI * figures 1, 3, 5 * * Sections 3.1, 4.1 * * Equation (1) * | 1-15 | INV. G06F7/544 G06F7/483 |
| A | GUNHO PARK ET AL: "LUT-GEMM: Quantized Matrix Multiplication based on LUTs for Efficient Inference in Large-Scale Generative Language Models", ARXIV.ORG, CORNELL UNIVERSITY LIBRARY, 201 OLIN LIBRARY CORNELL UNIVERSITY ITHACA, NY 14853, 15 April 2023 (2023-04-15), XP091485175, * figure 5 * * Sections 2, 3 * | 1-15 | |
| | | | **TECHNICAL FIELDS SEARCHED (IPC)** |
| | | | G06F |

The present search report has been drawn up for all claims

| Place of search | Date of completion of the search | Examiner |
|---|---|---|
| Munich | 28 January 2025 | Winkelbauer, Andreas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)